Europäisches Patentamt

(19) European Patent Office

Office européen des brevets

(11) EP 0 703 714 A2

(12) **EUROPEAN PATENT APPLICATION**

(43) Date of publication:
27.03.1996 Bulletin 1996/13

(51) Int. Cl.$^6$: **H04N 9/28**, H04N 3/233,
H04N 17/04

(21) Application number: 95114687.7

(22) Date of filing: 19.09.1995

(84) Designated Contracting States:
**DE FR GB NL**

(30) Priority: 20.09.1994 JP 252854/94
14.04.1995 JP 113902/95
14.07.1995 JP 178479/95

(71) Applicant: **MATSUSHITA ELECTRIC INDUSTRIAL CO., LTD.**
Kadoma-shi, Osaka-fu, 571 (JP)

(72) Inventors:
• **Inoue, Ikunori**
Takatsuki-shi, Osaka-fu 569 (JP)
• **Tsujihara, Susumu**
Neyagawa-shi, Osaka-fu 572 (JP)

(74) Representative: **Eisenführ, Speiser & Partner**
Martinistrasse 24
D-28195 Bremen (DE)

(54) **Image display position detecting apparatus and image correction apparatus**

(57)    To adjust image distortion such as geometric distortion or misconvergence in an image displayed by a projection type color display apparatus, absolute screen coordinates are assigned to each of plural photodetector elements disposed in the display screen periphery, a test pattern for image distortion adjustment is detected, and the resulting output ratios of the photodetector elements are weighted by the screen coordinate values to achieve high precision test pattern position detection. High speed, high precision image distortion adjustment is thus achieved, and changes over time in image distortion resulting from temperature-related drift and other factors can be constantly or occasionally corrected while displaying a normal video image to the screen.

*Fig. 1*

EP 0 703 714 A2

Description

## BACKGROUND OF THE INVENTION

### 1. Field of the invention

The present invention relates to an apparatus for correcting image distortion in a color television receiver, to an image display position detecting apparatus for detecting any offset in the on-screen display positions of the three primary color images, and to an image compensation apparatus for automatically applying convergence and geometric distortion correction.

### 2. Description of the prior art

Misconvergence and geometric distortion, which is essentially the projection distortion of the image, commonly occur as a result of certain optical conditions, including the convergence angle of the three primary color projection tubes to the screen and the projection angle of the video projector to the screen, with video projectors that project an enlarged image to a display screen using a projection tube emitting the three primary colors. Adjusting for this geometric distortion and convergence error is extremely complicated in a video projector system. Because of the amount of time required for manual adjustment, various automatic adjustment methods have been proposed, including the image correction apparatus described in U.S. Patent 5,258,830. The image correction apparatus described in U.S. Patent 4,857,998 provides a method of automatically adjusting the convergence drift that occurs as a result of electrical, materials, and mechanical variations in the receiver, as well as geomagnetism, after convergence adjustment.

Convergence drift is the result of a combination of factors, including the neck charge and gun center drift of the projection tube, drift in the various drive output circuits, sensitivity changes relating to the materials of the convergence yoke and deflection yoke, and mechanical variations occurring during transportation or from geomagnetism.

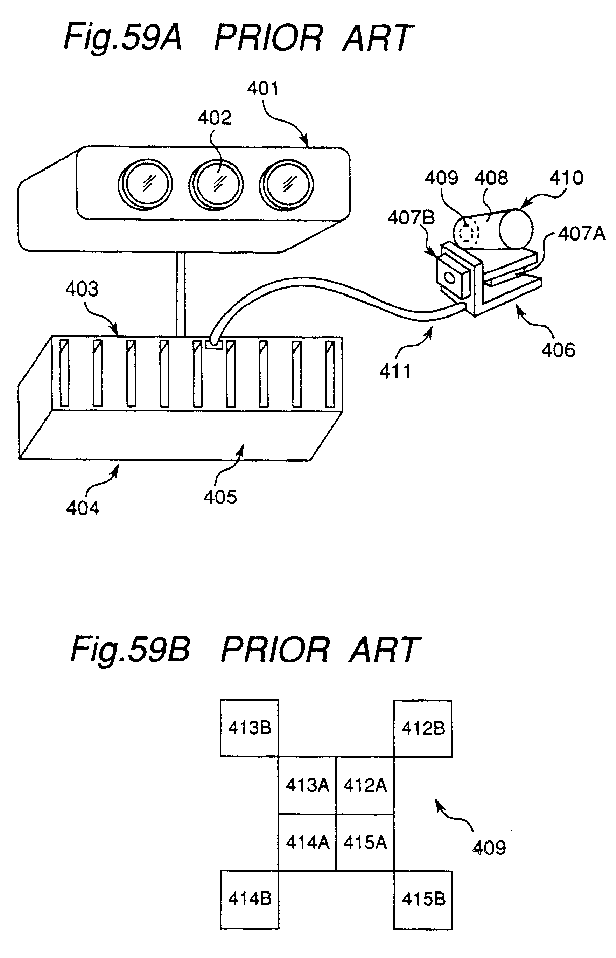

An image correction apparatus according to the prior art for automatic adjustment, and the basic configuration of the image display position detecting apparatus (the automatic video convergence system described in U.S. Patent 5,258,830) used in this apparatus are shown in Figs. 59A and 59B.

As shown in Fig. 59A, the convergence system works in conjunction with the imaging lens 410 and comprises a quadrant photodiode sensor 409 disposed to the X-Y motor assembly 406. The X-Y motor assembly 406 comprises a mechanical structure supporting two stepping motors 407A and 407B on an X-Y gimbal for focusing the imaging lens 410 and quadrant photodiode sensor 409 on the projected image (not shown in the figures). A cylindrical housing 408 comprising the imaging lens 410 on one end and the quadrant photodiode sensor 409 on the other end is mounted in a freely rotating manner.

The quadrant photodiode sensor 409 is mounted to a small surface-mount front-end amplification board. The X-Y motor assembly 406 is directly below the middle lens 402 of the projector 401, and is preferably connected to the projector frame. A connector cable 411 connects the quadrant photodiode sensor 409 to the mother board 403 inside the card cage 404. The card cage 404 also houses the drive circuits for the stepping motor, and a circuit for digitizing the signals received from the quadrant photodiode sensor 409. These circuits are provided on the main printed circuit board 405.

The quadrant photodiode sensor 409 detects the positions of the red (R), green (G), and blue (B) image components at a specific projection image point, and adjusts the image positions to the quadrant center. Overall image convergence is achieved by repeating this operation for plural convergence points in the raster image. The automatic convergence operation is started by selecting the appropriate item from the convergence menu by means of a built-in keypad (not shown in the figure). The projector is thereafter controlled by the program executing in the convergence system either until convergence is achieved or the operation is interrupted by the user.

A microprocessor built in to the video control board contained in the card cage 404 executes the control required to display the target and the pattern required by the convergence algorithm of this operation. As shown in the block diagram in Fig. 59B, the quadrant photodiode sensor 409 comprises a central cluster of photodiodes 412A - 415A, and photodiodes 412B - 415B at the four corners of this cluster.

Each of the photodiodes 412A - 415A in the center cluster obtains a current voltage (i.e., photovoltaic potential) proportional to the corresponding image position, and outputs to an analog-digital (A/D) converter. The A/D converter outputs the corresponding 8-bit digital value to the data bus of the microprocessor of the convergence system. The microprocessor compares the 8-bit digital values from the four quadrant photodiode sensors to detect image misregistration using a method of the prior art, generate the required convergence coil correction signal, and automatically adjust the image registration.

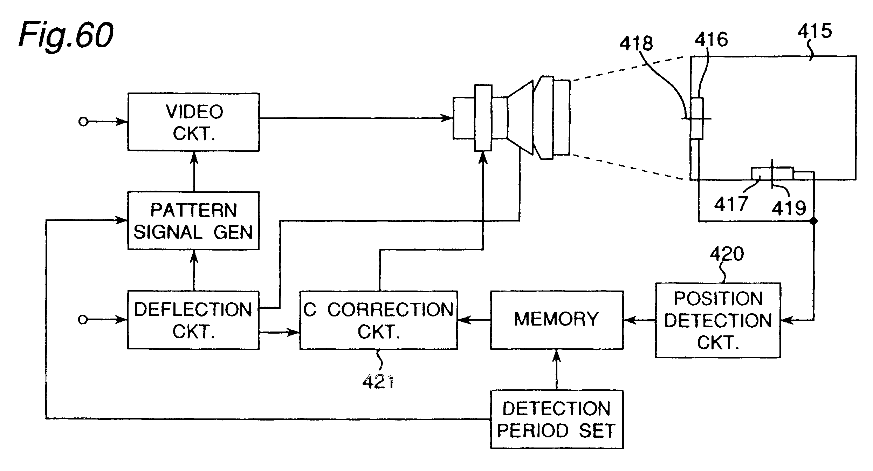

Fig. 60 shows the basic configuration of an automatic image correction apparatus accomplishing automatic drift adjustment as described in U.S. Patent 4,857,998, an "automatic primary color convergence alignment system for projection television." Photosensors 416 and 417 disposed around the periphery of the screen 415 detect the detection test signals 418 and 419. These detection signals are supplied to the position detection circuit 420, which obtains the convergence error. The convergence circuit (C correction circuit) 421 uses the detected convergence error to automatically adjust the convergence drift of the display. It is thereby possible to automatically adjust for image drift.

The problem is that the pattern for registration adjustment is converged at the intersections of the photodiodes by comparing the outputs of plural photodiodes arrayed in a quadrant pattern. The display position coordinates of the pattern are then detected from the amount of movement required to achieve acceptable pattern convergence. The adjustment precision of this method is therefore dependent upon the resolution with which pattern movement can be detected. Time is also required for the pattern movement required for adjustment, and this increases the required adjustment time.

In addition, when the detectors are provided at the periphery of the screen area, complex signal processing is required to achieve high precision detection, and this increases the required circuit scale. When variations in the convergence drift of the projection apparatus and the screen phase are considered, a large photodetection area is required in the detector, and such detectors are extremely expensive.

## SUMMARY OF THE INVENTION

Therefore, an object of the present invention is to accomplish adjustment of image distortion such as geometric distortion and misconvergence in projection type color display apparatuses with high precision and at high speed.

A further object is to achieve an image correction apparatus whereby constant or occasional adjustment of changes over time in image distortion arising from temperature drift or other factors can be accomplished while displaying a normal video image on screen.

To achieve the aforementioned objects, the present invention provides an image display position detection apparatus for detecting the display position of a test pattern displayed in the display screen. Said image display position detection apparatus detects the test pattern display position with high precision by means of plural photodetector modules comprising an array of plural photodetector elements disposed in mutual proximity at known positions of the display screen; a test pattern generator for generating an image distortion adjustment pattern for such image distortion as geometric distortion and misconvergence in the vicinity of the photodetector; and a position calculating means for obtaining the test pattern display position as absolute coordinates on the screen by assigning display screen coordinates to each of the photodetector elements in the photodetector module, and weighting the output ratio of the photodetector elements using the assigned coordinates.

## BRIEF DESCRIPTION OF THE DRAWINGS

The present invention will become more fully understood from the detailed description given below and the accompanying diagrams wherein:

Fig. 1 is a block diagram of a video projector containing the image display position detection apparatus according to the first embodiment of the present invention;

Fig. 2 is an internal block diagram of a video projector in each of the preferred embodiments of the invention;

Fig. 3 is a block diagram of the test pattern generating circuit in the preferred embodiments of the invention;

Figs. 4A, 4B, 4C, 4D, 4E, 4F, 4G, 4H, 4I, 4J, 4K and 4L are operating waveform diagrams of the test pattern generating circuit in the preferred embodiments of the invention;

Figs. 5A, 5B and 5C are diagrams showing display samples of the test pattern of the preferred embodiments of the invention;

Fig. 6 is a graph showing the principle of the construction of the photodetector module in the preferred embodiments of the invention;

Fig. 7 is a block diagram of the basic configuration of the photodetection signal processor in the preferred embodiments of the invention;

Figs. 8A and 8B are waveform diagrams used to describe the photodetection operation of the preferred embodiments of the invention;

Fig. 9 is a block diagram of the display position calculating means of the preferred embodiments of the invention;

Figs. 10A and 10B are display diagrams to describe the display position calculation operation of the preferred embodiments of the invention;

Fig. 11 is a display diagram to describe the error calculation operation of the preferred embodiments of the invention;

Fig. 12 is a block diagram of the correction signal generating circuit of the preferred embodiments of the invention;

Fig. 13 is a circuit diagram of multiplying D/A converter shown in Fig. 12;

Figs. 14A, 14B, 14C, 14D, 14E, 14F, 14G, 14H, 14I, 14J, 14K and 14L are operating waveform diagrams of the correction signal generating circuit of the preferred embodiments of the invention;

Figs. 15A, 15B and 15C are operating waveform diagram of the correction signal generating circuit of the preferred embodiments of the invention;

Figs. 16A, 16B, 16C, 16D and 16E are diagrams used to describe the photodetector module of the preferred embodiments of the invention;

Fig. 17A is a block diagram of the photodetection circuit of the preferred embodiments of the invention;

Fig. 17B is a waveform diagram of the photodetection circuit of Fig. 17A;

Fig. 18 is a block diagram of the basic configuration of the image display position detection apparatus according to the second embodiment of the present invention;

Fig. 19 is a block diagram of the extraneous light extraction means of the second embodiment of the present invention;

Fig. 20 is a block diagram of the minimum value calculating circuit of the second embodiment of the present invention;

Figs. 21A, 21B and 21C are diagrams to describe the display position calculation operation of the second embodiment of the invention;

Fig. 22 is a block diagram of the basic configuration of the image display position detection apparatus according to the third embodiment of the present invention;

Fig. 23 is a block diagram of the test pattern generating circuit in the third embodiment of the invention;

Fig. 24 is a block diagram of the display position controller in the third embodiment of the invention;

Figs. 25A, 25B, 25C, 25D, 25E, 25F, 25G, 25H, 25I, 25J, 25K, 25L, 25M and 25N are operating waveform diagrams of the display position controller in the third embodiment of the invention;

Figs. 26A, 26B and 26C are diagrams showing samples of the test pattern in the third embodiment of the invention;

Fig. 27 is a display diagram used to describe the display position calculation operation of the third embodiment of the invention;

Fig. 28 is a block diagram of the basic configuration of the image display position detection apparatus according to the fourth embodiment of the present invention;

Fig. 29 is a block diagram of the test pattern generating circuit in the fourth embodiment of the invention;

Figs. 30A, 30B, 30C, 30D, 30E, 30F and 30G are diagrams used to describe the operation of the test pattern generating circuit in the fourth embodiment of the invention;

Figs. 31A and 31B are display samples of the test pattern in the fourth embodiment of the invention;

Figs. 32A and 32B show first display diagram used to describe the position calculation operation in the fourth embodiment of the invention;

Figs. 33A, 33B and 33C show second display diagram used to describe the position calculation operation in the fourth embodiment of the invention;

Figs. 34A, 34B, 34C and 34D show display samples of the test pattern in the fourth embodiment of the invention;

Fig. 35 is a block diagram of the basic configuration of the image display position detection apparatus according to the fifth embodiment of the present invention;

Fig. 36 is a block diagram of the test pattern generating circuit in the fifth embodiment of the invention;

Fig. 37 is a block diagram of the test pattern display position controller in the fifth embodiment of the invention;

Fig. 38 is a waveform diagram used to describe the test pattern display position control operation in the fifth embodiment of the invention;

Figs. 39A and 39B show display samples of the test pattern in the fifth embodiment of the invention;

Figs. 40A and 40B show a first display diagram used to describe the position calculation operation in the fifth embodiment of the invention;

Figs. 41A, 41B and 41C show a second display diagram used to describe the position calculation operation in the fifth embodiment of the invention;

Fig. 42 is a block diagram of the basic configuration of the image display position detection apparatus according to the sixth embodiment of the present invention;

Fig. 43 is a display sample of the test pattern in the sixth embodiment of the invention;

Fig. 44 is a display diagram used to describe the test pattern search method of the sixth embodiment of the invention;

Figs. 45A, 45B, 45C, 45D and 45E are display diagrams used to describe the search procedure of the sixth embodiment of the invention;

Figs. 46A and 46B are flow charts used to describe the search procedure of the sixth embodiment of the invention;

Fig. 47 is a block diagram of the basic configuration of the image display position detection apparatus according to the seventh embodiment of the present invention;

Figs. 48A, 48B, 48C, 48D, 48E, 48F and 48G are illustrations of various types of image distortion corrected by the seventh embodiment of the present invention;

Fig. 49 is a display sample used to describe the operation of the seventh embodiment of the present invention;

Fig. 50 is a first table showing correction waveform diagrams of the seventh embodiment of the present invention;

Fig. 51 is a second table showing further correction waveform diagrams of the seventh embodiment of the present invention;

Fig. 52 is a block diagram of the basic configuration of the image display position detection apparatus according to the eighth embodiment of the present invention;

Fig. 53 is a block diagram of the correction signal generation control means of the eighth embodiment of the present invention;

Figs. 54A and 54B are first operating waveform diagrams of the eighth embodiment of the present invention;

Figs. 55A, 55B, 55C and 55D are second operating waveform diagrams of the eighth embodiment of the present invention;

Fig. 56 is a block diagram of the basic configuration of the image display position detection apparatus according to the ninth embodiment of the present invention;

Fig. 57 is a block diagram of the correction signal generation means of the ninth embodiment of the present invention;

Figs. 58A, 58B, 58C, 58D are operating waveform diagrams of the ninth embodiment of the present invention;

Fig. 59A is a basic overview of an image correction apparatus according to the prior art;

Fig. 59B is a block diagram of the photosensor of the image correction apparatus according to the prior art; and

Fig. 60 is a block diagram of an image correction apparatus according to the prior art.

## DESCRIPTION OF PREFERRED EMBODIMENTS

### Embodiment 1

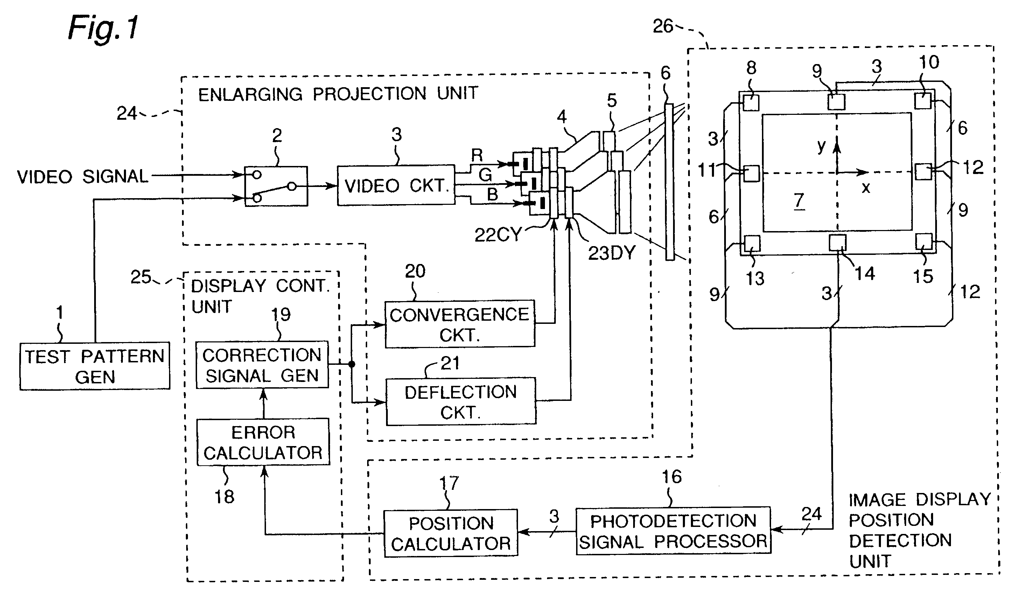

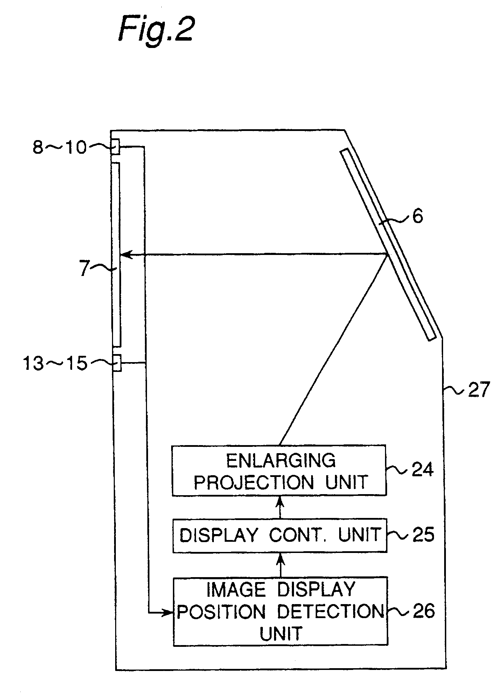

The first embodiment of an image display position detection apparatus according to the present invention is described below with reference to the accompanying figures, of which Fig. 1 is a block diagram of a video projector containing the image display position detection apparatus according to the first embodiment of the present invention, and Fig. 2 is a side view showing the structure of an integrated video projector.

As shown in Figs. 1 and 2, the video projector 27 comprises an enlarging projection unit 24 comprising three CRTs 4 (for red, green, and blue) and corresponding lenses 5; a mirror 6; screen 7; display control unit 25 (automatic adjustment means); and image display position detection unit 26.

The image display position detection unit 26 detects the offset in the display positions of the red, green, and blue (simply R, G, and B, respectively, below) images projected by the enlarging projection unit 24. It is to be noted that the image display position detection unit 26 of the present embodiment is described as detecting the position of the test pattern required for automatically adjusting geometric distortion or misconvergence of the displayed images, but is also effective when used to detect the position of other patterns.

Referring to Fig. 1, the test pattern generator 1 is a circuit for generating the test pattern used for adjusting image distortion, specifically geometric distortion and misconvergence in this embodiment. The output of the test pattern generator 1 is supplied to the selector circuit 2. The selector circuit 2 is used to select the video signal input from an external source, or the test pattern signal from the test pattern generator 1, and output the selected signal to the video circuit 3. The video circuit 3 applies gain control, bias control, and other signal processing operations to the signal input thereto, and drives the RGB CRTs 4. Each of the three lenses 5 enlarges and projects the images displayed by the corresponding CRTs 4 to the screen 7 through the mirror 6 as shown in Fig. 2.

The photodetector modules 8 - 15 are arrayed at predetermined positions in the overscan area at the periphery of the screen 7, and are used to detect the luminance of the displayed test pattern. The photodetection signal processor 16 selects the signals to be processed from among the output signals input from the photodetector modules 8 - 15, detects and holds the signal peaks, and then A/D converts the signals.

The position calculator 17 processes the output signal from the photodetection signal processor 16 to calculate the display position of the test pattern. The photodetector modules 8 - 15, photodetection signal processor 16, and position calculator 17 thus constitute the image display position detection unit 26 for detecting the display position of the test pattern imaged on the photodetector modules 8 - 15 around the screen 7.

The error calculator 18 then calculates the amount of geometric distortion or misconvergence based on the output from the position calculator 17. Then, based on the output of the error calculator 18, the correction signal generator 19 generates the correction signal for correcting the geometric distortion or convergence error, and outputs the correction signal to the convergence circuit 20 and deflection circuit 21. The error calculator 18 and correction signal generator 19 thus constitute the display control unit 25 correcting the geometric distortion or misconvergence in the displayed image.

The convergence circuit 20 outputs the convergence correction signal to the convergence yoke 22. The deflection circuit 21 similarly outputs the signals for deflection control and deflection correction to the deflection yoke 23. The selector circuit 2, video circuit 3, CRTs 4 connected to the convergence yoke 22 and deflection yoke 23, the lenses 5, convergence circuit 20, and deflection circuit 21 thus constitute the enlarging projection unit 24.

As shown in Fig. 2, the image light from the enlarging projection unit 24 is reflected by the mirror 6 and projection enlarged to the transparent screen 7. Note that the mirror 6 disposed between the enlarging projection unit 24 and screen 7 is an optical reflector used to shorten the required distance between the enlarging projection unit 24 and screen 7, and thus to reduce the depth of the integrated video projector 27. The automatic adjustment operation projects a test pattern to the photodetector modules 8 - 15 arrayed at the screen 7 and detects the test pattern display position based on the detection signals from the photodetector modules 8 - 15 to automatically adjust the geometric distortion or misconvergence in the enlarging projection unit 24. Note that the test pattern display position is expressed as the absolute coordinates on the x- and y-axes (horizontal and vertical scanning directions, respectively) of the screen 7 as shown in Fig. 1.

The specific test pattern display position calculation operation of this embodiment is described in detail below, starting with a description of the test patterns used.

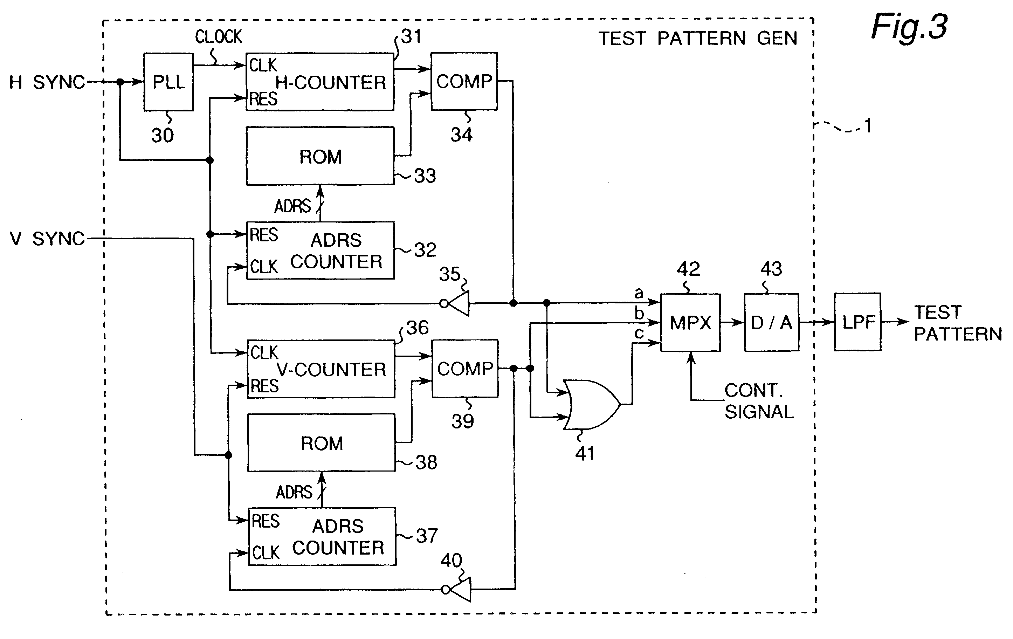

A line pattern of three vertical and three horizontal lines is generated in this embodiment. A detailed block diagram of the test pattern generator 1 is shown in Fig. 3.

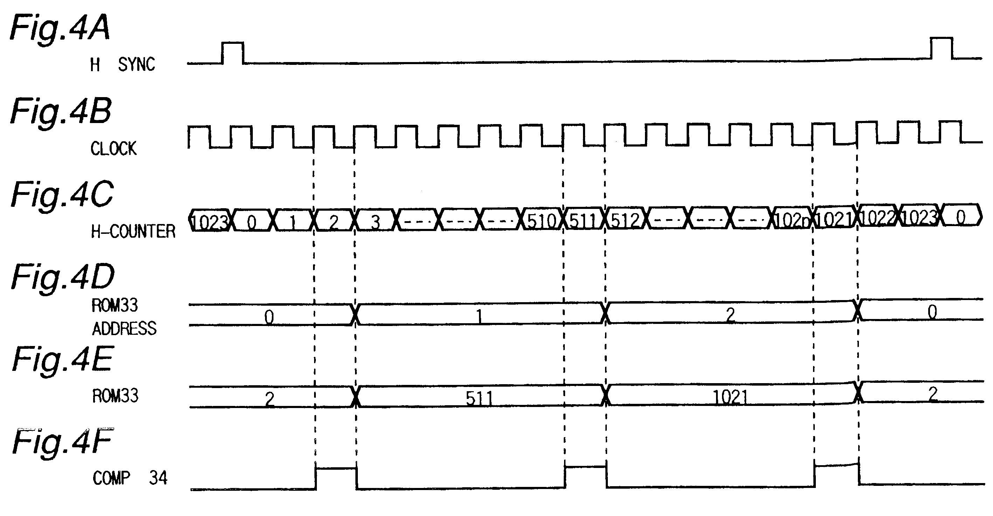

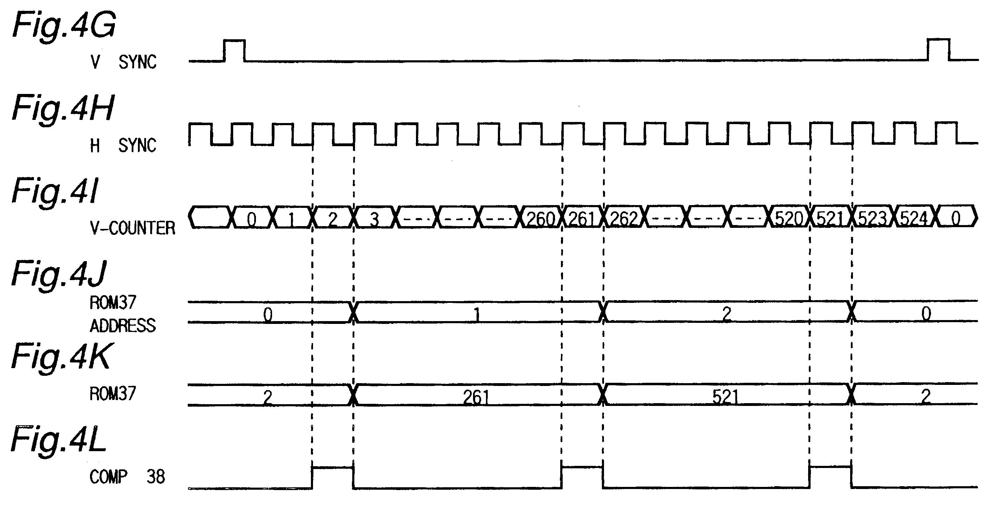

As shown in Fig. 3, the test pattern generator 1 comprises a phase locked loop (PLL) 30 for creating a clock locked to the horizontal synchronization signal (HD) of the video signal; a horizontal counter 31 using the clock signal as the counting clock (CLK) and the horizontal synchronization signal as the reset signal (Res); a first address counter 32 for generating the read address of the first ROM 33; a first comparator 34 for comparing the horizontal counter 31 and first ROM 33 output signals, and outputting a HIGH signal when the compared signals match; a first NOT circuit 35; a vertical counter 36 using the horizontal synchronization signal (HD) as the counting clock (CLK) and the vertical synchronization signal (VD) as the reset signal (Res); a second address counter 37 for generating the read address of the second ROM 38; a second comparator 39 for comparing the output signals of the vertical counter 36 and second ROM 38, and outputting a HIGH signal when the compared signals match; a second NOT circuit 40; an OR circuit 41 for obtaining the logical OR of the first 34 and second comparators 39; a multiplexer 42 for selecting the output of the first comparator 34, the second comparator 39, or the OR circuit 41; and a digital/analog (D/A) converter 43 for converting the digital signal to an analog signal. The operation of the test pattern generator 1 thus comprised is described below with reference to Figs. 4A - 4L.

Figs. 4A - 4F are waveform diagrams of the timing signals at each point of the horizontal output system 30 - 34 in the test pattern generator 1, and Figs. 4G - 4L are similar waveform diagrams for the vertical output system (35 - 38). The horizontal output system is described first.

As shown in Figs. 4A - 4C, the horizontal counter 31 counts up from 0 - 1023 based on the clock signal, and is reset by the horizontal synchronization signal (HD). Note that the count of the horizontal counter 31 in this embodiment is set at 1024, but is not thus limited and other appropriate values may be used. The first ROM 33 stores the data for determining the test pattern phase. For example, when a line pattern of three lines is generated in the horizontal direction, the data (2, 551, 1021) stored to ROM addresses (0, 1, 2) indicates the output timing for these horizontal stripes. As shown in Figs. 4D and 4E, the output is "2" when the first ROM 33 address is 0. The first comparator 34 then compares the outputs from the horizontal counter 31 and the first ROM 33, and outputs a HIGH level (Fig. 4F) when the output of the horizontal counter 31 is 2. When the ROM address counter 32 then counts up due to the inverted output from the first comparator 34 and outputs "1", the first ROM 33 outputs 551. Likewise thereafter, when the horizontal counter 31 output is 551 and 1021, the output of the first comparator 34 is HIGH, and three HIGH pulses are output from the first comparator 34 during the horizontal interval as shown in Fig. 4F. The vertical output system is constructed the same as the horizontal output system, and three HIGH pulses are output from the second ROM 38 during the vertical interval as shown in Figs. 4G - 4L.

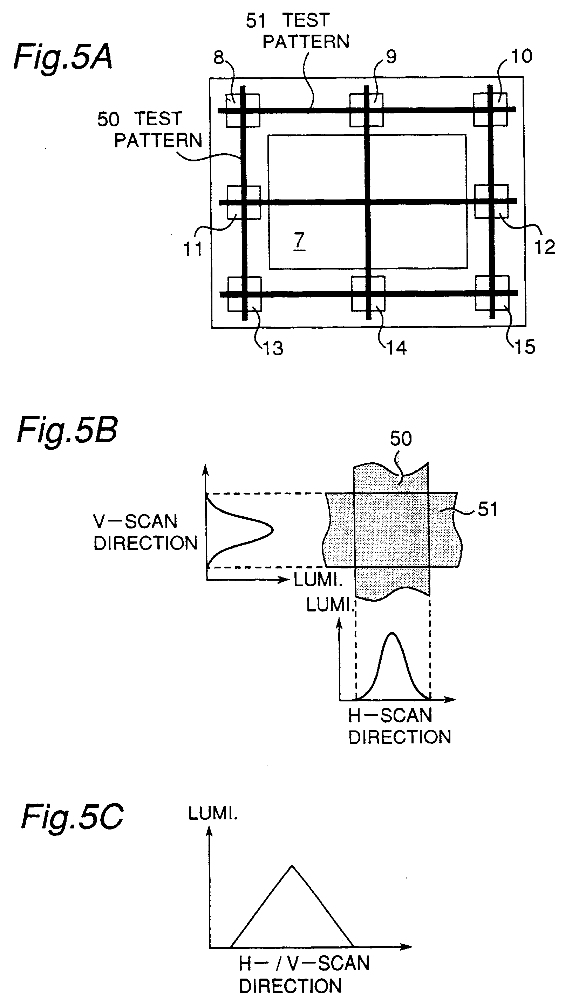

The multiplexer 42 then selects the output of the first comparator 34, second comparator 39, or OR circuit 41, and the D/A converter 43 converts the selected digital signal to an analog signal to output one of three test pattern signals: vertical, horizontal, or vertical and horizontal. The resulting test patterns 50 and 51, as shown in Fig. 5A, thus comprise three horizontal and three vertical lines, respectively. Note that these line patterns 50 and 51 can be independently displayed, and are controlled by the data written to the ROMs 33 and 38 to be displayed in the overscan area of the screen 7. Vertical lines 50 are provided for use in horizontal direction correction, and the horizontal lines 51 are provided for use in vertical direction correction. The luminance characteristics of this test pattern have a Gaussian characteristic as shown in Fig. 5B as a result of optical or electrical filtering through a low pass filter, but the same effects can be obtained by means of a linear characteristic waveform as shown in Fig. 5C. Note, further, that the test pattern generator 1 may be differently comprised insofar as it generates a line pattern.

The method of the present embodiment for calculating the test pattern display position is described next.

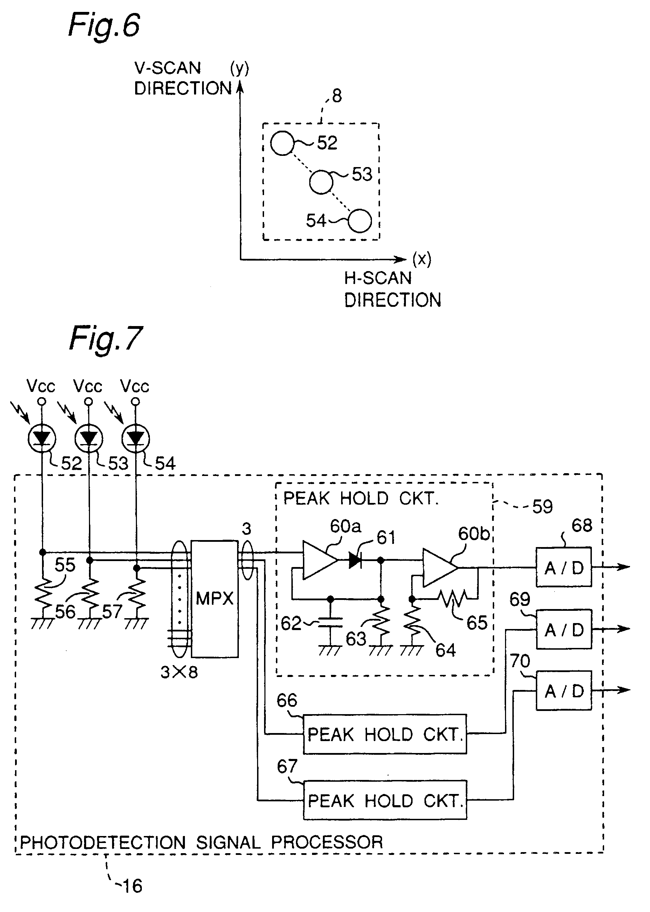

The construction of the photodetector modules 8 - 15 and the photodetection signal processor 16 is shown in detail in Figs. 6 and 7, respectively, and described below.

Fig. 6 shows the positioning of the photodetector elements 52 - 54 in the photodetector modules. As shown in Fig. 6, these photodetector elements 52 - 54 (e.g., photodiodes or photosensors) are arrayed diagonally to the horizontal (x) and vertical (y) scanning directions of the screen 7. Note that while only one photodetector module 8 is shown in Fig. 6, the other photodetector modules 9 - 15 are similarly comprised. Furthermore, while three photodetector elements are used in this embodiment, any suitable number of two or greater is also effective.

Fig. 7 shows the photodetector elements 52 - 54 of the photodetector modules, and the configuration of the photodetection signal processor 16. As shown in Fig. 7, the photodetection signal processor 16 comprises load resistances 55 - 57 corresponding to the photodetector elements 52 - 54, defining one photodetector module (there are eight sets of such photodetector modules, but only one is shown); a multiplexer 58 for selecting the output of the photodetector modules 8 - 15; three peak hold circuits 59, 66, and 67 each comprising two operating amplifiers 60a and 60b, a diode

EP 0 703 714 A2

61, capacitor 62, and resistances 63 - 65; and three A/D converters 68 - 70 for converting the outputs from the three peak hold circuits 59, 66, and 67 to digital signals. Note that the three peak hold circuits correspond to the three photodetector elements of the photodetector modules.

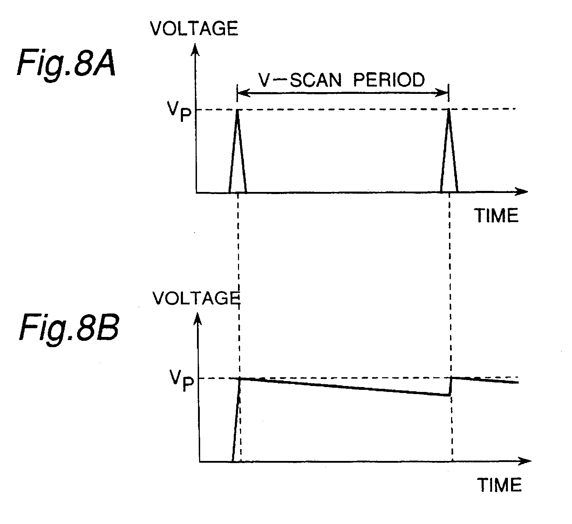

The photodetection signal processor 16 thus comprised detects and holds the peak of the pulse wave photodetection signals at the vertical scanning interval as shown in Fig. 8A, and outputs a DC signal as shown in Fig. 8B.

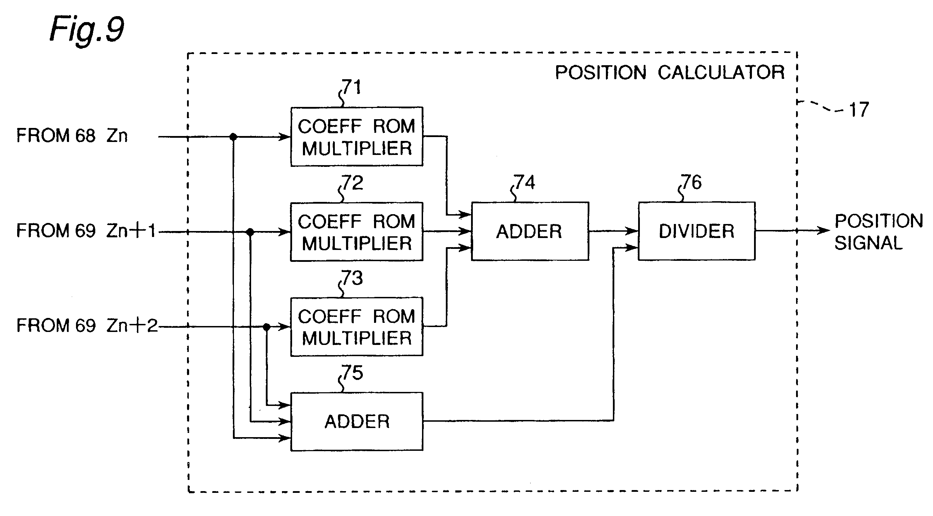

The position calculator 17 of this embodiment is shown in detail in Fig. 9. As shown in Fig. 9, the position calculator 17 comprises coefficient ROMs 71 - 73 each stored with a predetermined coefficient and having a function to multiply the digital photodetection signal output by the photodetection signal processor 16 by the stored coefficient; a first adder 74 for adding the outputs of the coefficient ROMs 71 - 73; a second adder 75 for adding the digital photodetection signals input from the photodetection signal processor 16; and a divider 76 for dividing the output of the first adder 74 by the output of the second adder 75.

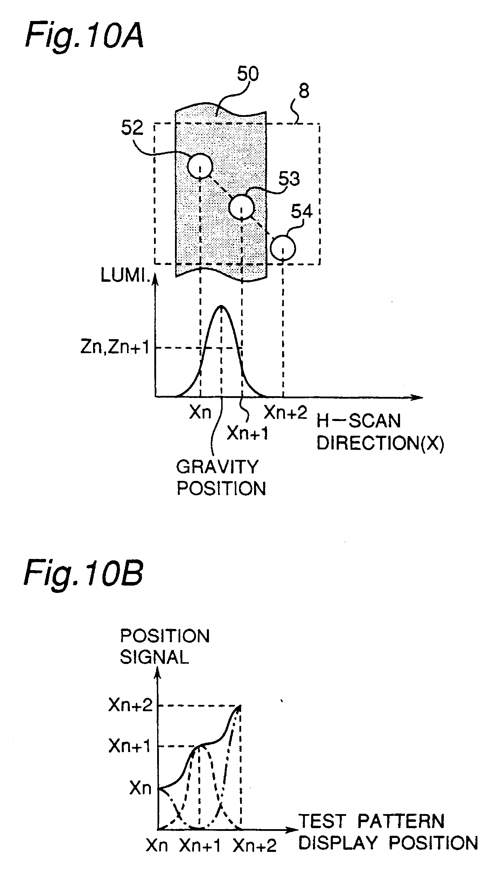

The test pattern position calculation process is accomplished by calculating the center of gravity position of the test pattern as shown in Fig. 10A as the display position. The test pattern display position calculation procedure is executed for the test patterns 50 and 51 in the horizontal (x) and vertical (y) directions (Fig. 5A) for the photodetector module output selected by the multiplexer 58. As the same procedure is executed in both scanning directions for all of the photodetector modules 8 - 15, the description below is limited to the display position calculation procedure applied to the horizontal test pattern detected by one photodetector module 8.

First, the horizontal coordinates of the screen 7 at which the photodetector elements are located are assigned as coefficients $X_n$, $X_{n+1}$, and $X_{n+2}$ to the photodetector elements 52, 53, and 54, respectively, and these coordinate values are previously stored to the coefficient ROMs 71 - 73 as coefficients, or weights, for the corresponding photodetector elements 52 - 54. Each of the coefficient ROMs 71 - 73 has a multiplying function to multiply the input signal with the stored coefficient. If the peak-held, A/D converted outputs of the photodetector elements 52 - 54 are $Z_n$, $Z_{n+1}$, and $Z_{n+2}$, respectively, the signals output from the coefficient ROMs 71 - 73 are $Z_n$, $Z_{n+1}$, and $Z_{n+2}$ multiplied by the corresponding coefficients $X_n$, $X_{n+1}$, and $X_{n+2}$, resulting in $X_n \cdot Z_n$, $X_{n+1} \cdot Z_{n+1}$, and $X_{n+2} \cdot Z_{n+2}$. These are then added by the first adder 74, obtaining

$$X_n \cdot Z_n + X_{n+1} \cdot Z_{n+1} + X_{n+2} \cdot Z_{n+2}.$$

The output $(X_n \cdot Z_n + X_{n+1} \cdot Z_{n+1} + X_{n+2} \cdot Z_{n+2})$ of the first adder 74 is then divided by the output $(Z_n + Z_{n+1} + Z_{n+2})$ of the second adder 75 by the divider 76, obtaining the center of gravity position X of the test pattern as shown in equation (1) below.

$$X = (X_n \cdot Z_n + X_{n+1} \cdot Z_{n+1} + X_{n+2} \cdot Z_{n+2})/(Z_n + Z_{n+1} + Z_{n+2})$$

$$= (X_n \cdot Z_n)/(Z_n + Z_{n+1} + Z_{n+2}) + (X_{n+1} \cdot Z_{n+1})/(Z_n + Z_{n+1} + Z_{n+2}) + (X_{n+2} \cdot Z_{n+2})/(Z_n + Z_{n+1} + Z_{n+2}) \quad (1)$$

where $Z_n/(Z_n + Z_{n+1} + Z_{n+2})$, $Z_{n+1}/(Z_n + Z_{n+1} + Z_{n+2})$, and $Z_{n+2}/(Z_n + Z_{n+1} + Z_{n+2})$ are the output ratios of the photodetector elements 52 - 54. The display position of the test pattern 50 is calculated by obtaining the weighted sums of these output ratios and the horizontal coordinates $X_n$, $X_{n+1}$, and $X_{n+2}$ of the screen 7 assigned to the photodetector elements 52 - 54. For example, if the output ratio of the photodetector elements 52 - 54 to the test pattern as shown in Fig. 10A is 1/2:1/2:0, the on-screen test pattern display position is $(X_n + X_{n+1})/2$, and the test pattern is known to be positioned at the center of photodetector elements 52 and 53.

Fig. 10B shows the specific results of this weighted addition process. The curves in Fig. 10B show the characteristics of the output ratios of the photodetector elements 52 - 54 to the display position of the test pattern 50 on the screen 7 weighted by the corresponding coordinates $X_n$, $X_{n+1}$, and $X_{n+2}$. More specifically, in Fig. 10B, dot-dash line, dotted line and two dots dash line show the outputs from photodetector elements 52, 53 and 54, respectively. The position detection output can then be obtained uniformly to the display position of the test pattern 50 as shown by the solid line by adding these weighted characteristics. Thus, by reading the positional signal on the solid line, it is possible to detect the location of the test pattern on the screen.

While the detection characteristics are nonlinear, the same characteristics are obtained for each of the RGB images, and there is therefore no problem for convergence adjustment superimposing the RGB images. Error can also be reduced to a sufficiently low level for geometric distortion adjustment by reducing the gap between the photodetector elements 52 - 54. As stated above, each of the test patterns 50 and 51 has a linear belt pattern having a peak luminance at a mid of width thereof, and its width is greater than twice the interval between the photodetector elements measured in a distance perpendicular to the linear belt pattern. In the experimental systems tested, a photodetector element pitch of 2.5 mm measured horizontally or vertically, with a test pattern width of twice the photodetector element pitch (= 5 mm) was determined optimal with error attributable to the nonlinear characteristic suppressed to 0.1 mm or less, a level sufficiently low for practical applications.

The display position of the vertical test pattern 51 is similarly calculated by applying the same principles, resulting in the absolute on-screen display coordinates of the horizontal and vertical test pattern display positions. It is therefore also possible to calculate the display positions of the intersections of the vertical and horizontal test patterns in the area detected by the photodetector module 8 shown in Fig. 5A. By repeating this same process for each of the other photodetector modules 9 - 15, the intersections of the vertical 51 and horizontal test patterns 50 are obtained in the areas detected by those photodetector modules 9 - 15.

The image distortion error is then calculated by the error calculator 18 from the calculated display positions of the test patterns 50 and 51. Note that the process applied by the error calculator 18 can be achieved in software alone.

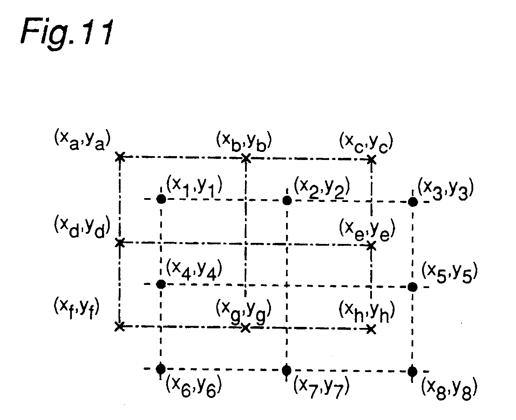

To determine the geometric distortion, for example, the error calculator 18 compares the absolute screen coordinates ((x1,y1) - (x8,y8)) of the test pattern intersections detected by the G (for example) photodetector modules 8 - 15 with the coordinates ((xa,ya) - (xh,yh)) of the center photodetector element in each of the photodetector modules 8 - 15 as shown in Fig. 11. To determine the convergence error, the display positions of the RGB test patterns are compared by the error calculator 18. The error value(s) obtained by the error calculator 18 is then supplied to the correction signal generator 19.

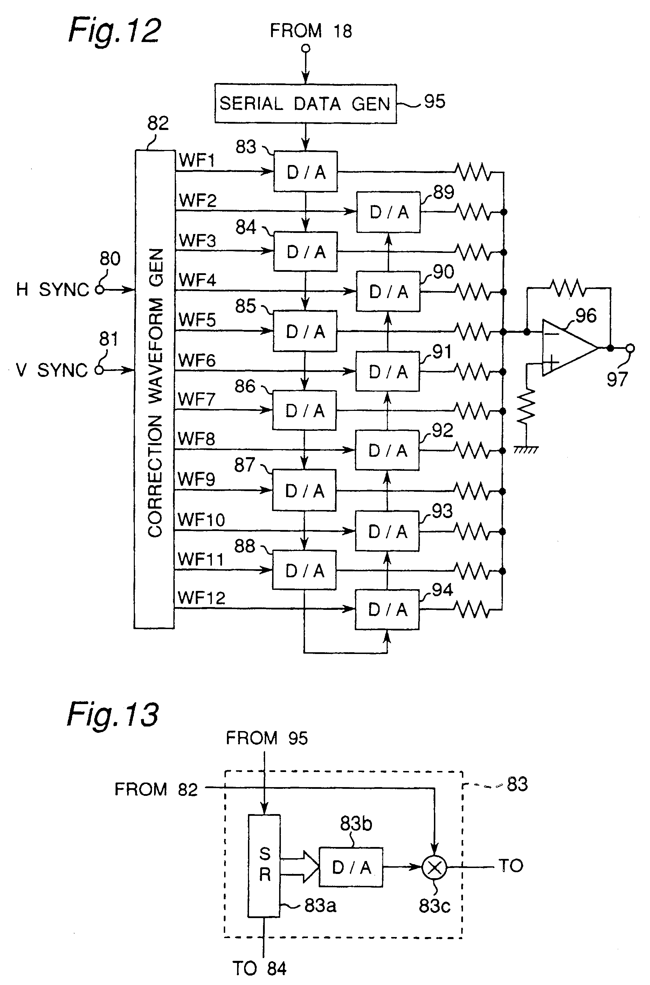

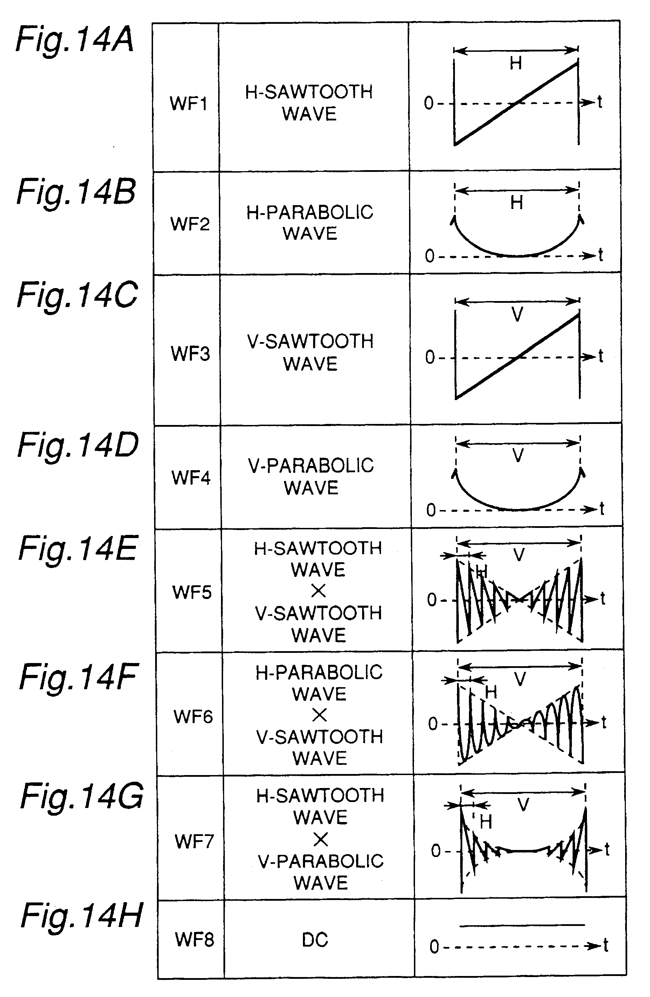

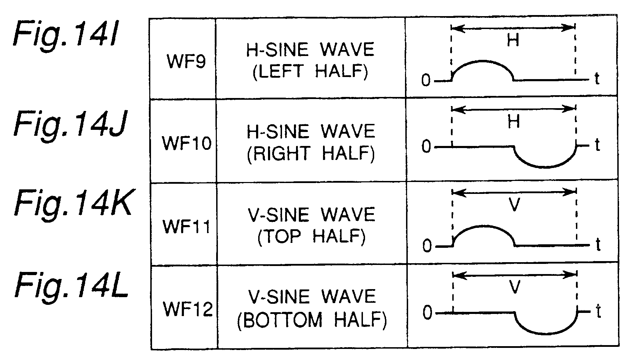

The correction signal generating operation is described below with reference to Figs. 12 - 17B. Fig. 12 is a block diagram of the correction signal generator 19. As shown in Fig. 12, the horizontal and vertical synchronization signals are supplied to the input terminals 80 and 81 of the correction waveform generating circuit 82. The correction waveform generating circuit 82 comprises, for example, plural Miller integrators, and generates at least the twelve basic waveforms (WF1 - WF12; shown in Figs. 14A - 14L) required to correct geometric distortion and misconvergence. The correction waveform generating circuit 82 supplies the correction waveforms synchronized to the input synchronization signal to the reference potential terminals of the multiplying D/A converters 83 - 94.

As shown in Fig. 13, multiplying D/A converter 83 includes a shift register 83a, D/A converter 83b and multiplier 83c. Other multiplying D/A converters 84 - 94 have the same structure as the multiplying D/A converter 83. The serial data generator 95 produces a train of serial data to be processed in the multiplying D/A converters 83 - 94 in time sharing manner. In a predetermined particular time slot, shift register 83a receives data from serial data generator 95 and sends it out to D/A converter 83b and further to multiplier 83c. Multiplier 83c then multiplies the data received from D/A converter 83b with a correction waveform WF1.

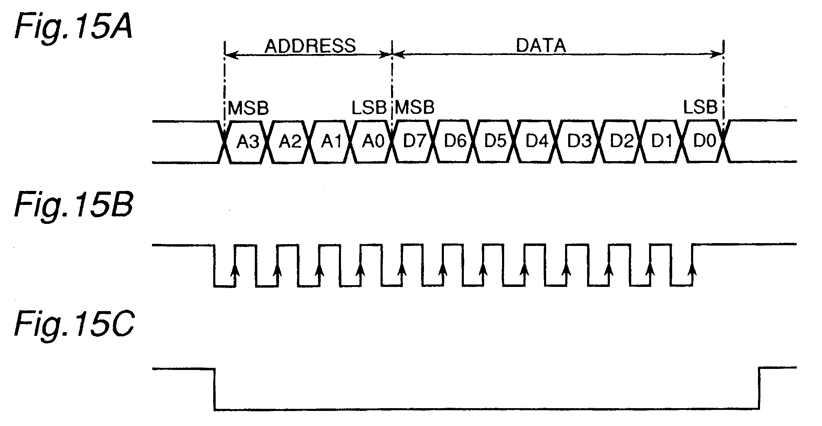

The correction data of the error calculator 18 is supplied to the serial data generating circuit 95, which generates a serial signal as shown in Fig. 15A based on the error data from the error calculator 18.

As shown in Fig. 15A, an address signal (A3 - A0) and data signal (D7 - D0) are multiplexed to this serial signal. The address signal A controls the selection of the multiplying D/A converters 83 - 94, and the data signal D then controls the amplitude of the correction waveform. The clock signals and load signals of the multiplying D/A converters 83 - 94 are shown in Fig. 15B and 15C. Data is input to the multiplying D/A converters 83 - 94 when the load signal (Fig. 15C) is LOW and the clock signal (Fig. 15B) is at the positive edge. The three serial signals shown in Figs. 15A, 15B and 15C are supplied to the shift registers of the multiplying D/A converters 83 - 94, so that the polarity and amplitude of the twelve basic correction waveforms (WF1 - WF12) output from the correction waveform generating circuit 82 are thus controlled, and these waveforms are supplied to the known convergence circuit 20 and deflection circuit 21 for correction of geometric distortion or misconvergence.

It is therefore possible to calculate the test pattern display position with high precision, resistant to test pattern gain fluctuation and other causes of distortion, because the test pattern display position is approximated from the output ratio of the photodetector elements. Because the test pattern display position can thus be calculated with high precision, it is therefore also possible to automatically correct image distortion with good precision in a short period of time.

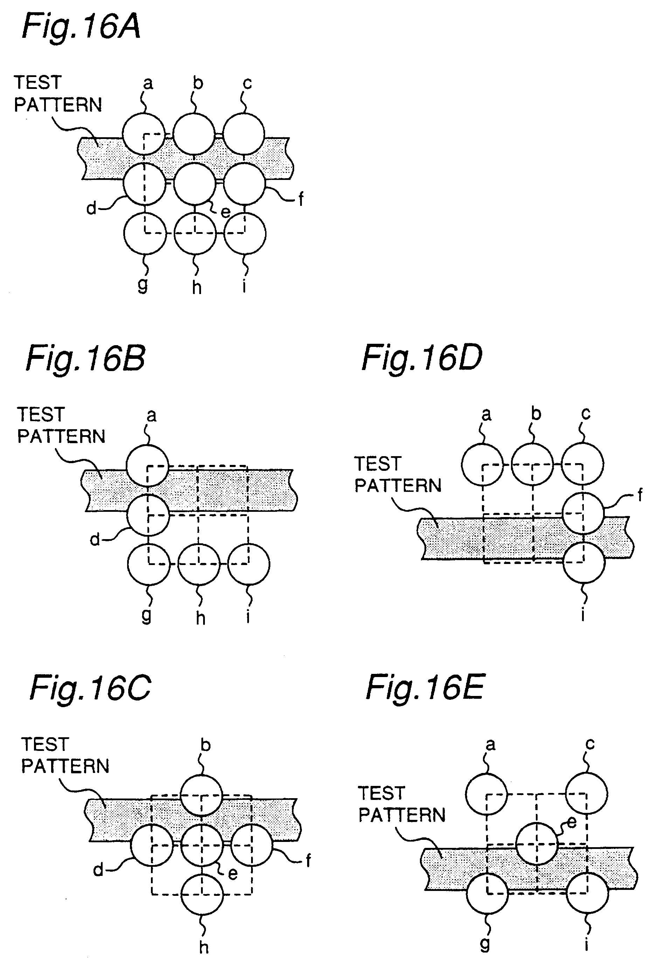

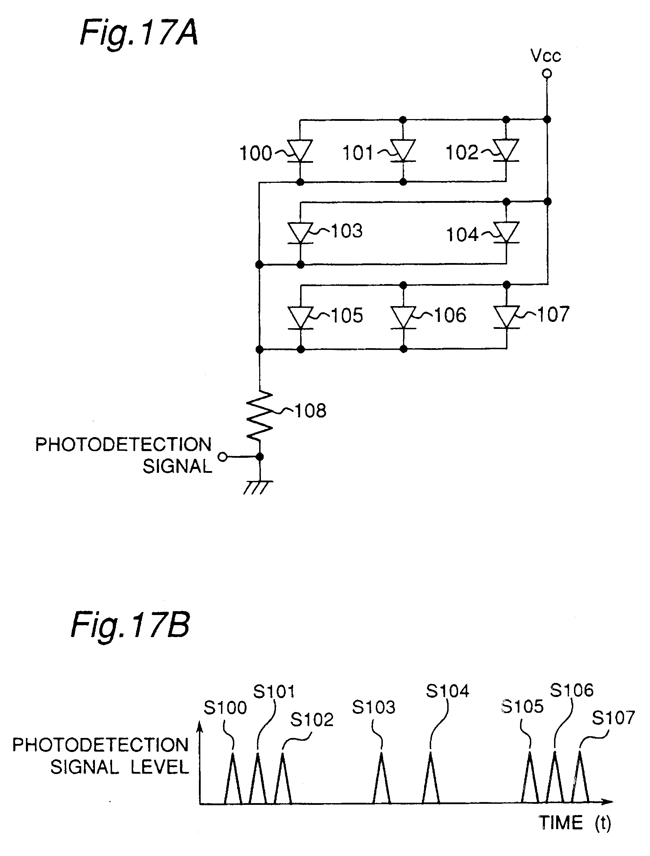

It is to be noted that the test pattern display position calculation was described in the above embodiment as being accomplished in hardware, but the same process can be executed in software. Furthermore, while three photodetector elements are arrayed diagonally to the horizontal and vertical scanning directions in the photodetector modules of this embodiment, various other photodetector element arrangements can also be used as shown in Figs. 16A - 16E. As shown in Figs. 17A and 17B, the present embodiment can also be achieved using a single channel peak hold circuit and A/D converter by multiplexing the detection signals from the eight positions around the screen periphery with time-shared processing during the vertical scanning period. In the above embodiment, each photodetector module has first, second and third photodetector elements. In this modification, all the first photodetector elements in eight photodetector modules are connected as shown in Fig. 17A. The second and third photodetector elements are also connected in a similar manner. Note that shown in Fig. 17A are photodiodes 100 - 107, a common load resistance 108 connected to the photodiodes 100 - 107, and the photodetection signals S100 - S107, shown in Fig. 17B, corresponding to the photodiodes 100 - 107. Thus, the positional signals from the photodetector modules 8 - 15 are obtained in time sharing manner, i.e., one after another at different times, as shown in Fig. 17B.

Embodiment 2

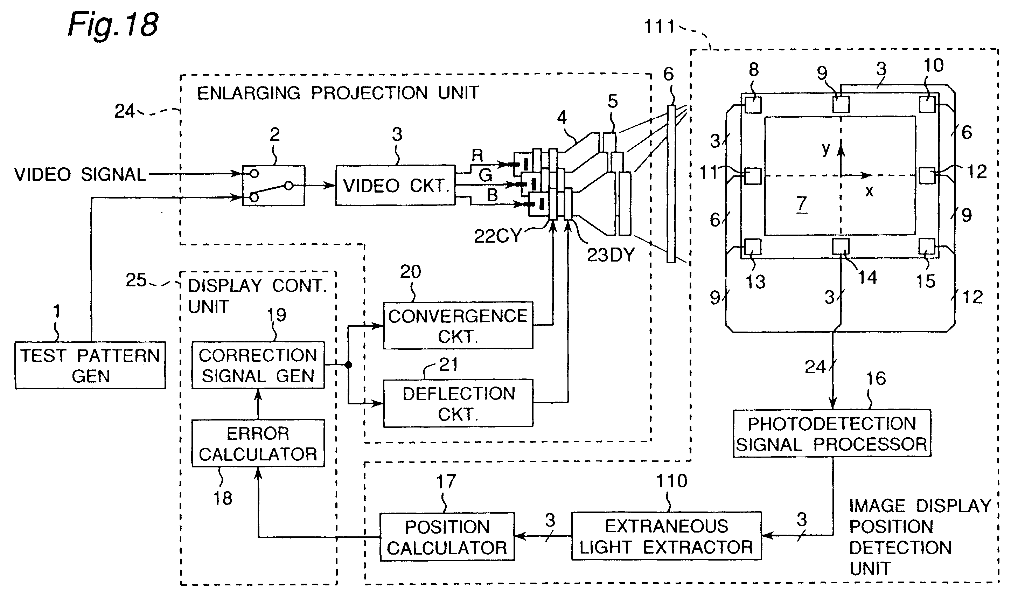

The second embodiment of an image display position detection apparatus according to the present invention is described below with reference to Fig. 18, a block diagram of a video projector containing the image display position detection apparatus of the second embodiment. Note that like parts in Figs. 1 and 18 are identified by like reference numbers, and further description thereof is omitted below.

What differs in this second embodiment is the addition of an extraneous light extractor 110 for removing extraneous light, including light from external sources and reflected light inside the projection set, from the photodetection signal detected by the photodetector modules 8 - 15 from the test pattern displayed on the screen 7 by the test pattern generator 1. The position calculator 17, error calculator 18, and correction signal generator 19 then calculate the position of the test pattern, detect image distortion error, and apply correction based on the signal from which the extraneous light has been removed.

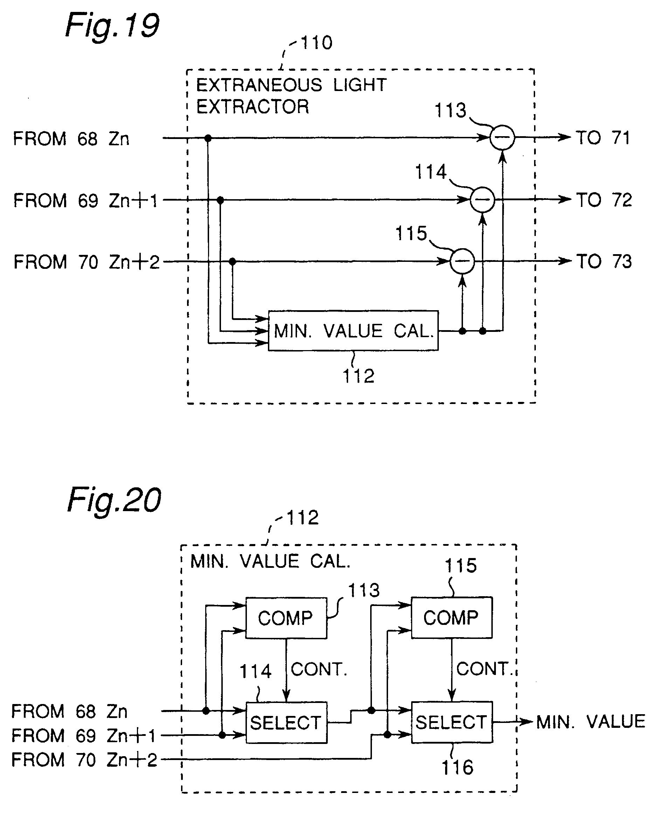

Fig. 19 is a block diagram of the extraneous light extractor 110 of the second embodiment of the present invention. The detection signals of the three photodetector elements 52 - 54 in the photodetector modules (Fig. 6, embodiment 1) are peak-hold and A/D conversion processed by the photodetection signal processor 16, obtaining the Zn, Zn+1, and Zn+2 signals input to the three input terminals of the extraneous light extractor 110 as shown in Fig. 19. The minimum value calculator 112 then obtains the minimum values of the three Zn, Zn+1, and Zn+2 input signals, and the subtractors 113 - 115 then obtain the differences values of the three Zn, Zn+1, and Zn+2 input signals and the minimum values supplied from the minimum value calculator 112.

Fig. 20 is a block diagram of the minimum value calculator 112. As shown in Fig. 20, the minimum value calculator 112 comprises a first comparator 113 for comparing inputs Zn and Zn+1, and outputting, for example, 0 when $Zn \geq Zn+1$, and 1 when $Zn < Zn+1$; a first selector 114 for selecting and outputting input Zn or Zn+1 based on the output of the first comparator 113 (e.g., selecting and outputting Zn when the first comparator 113 outputs 1, and Zn+1 when 0); a second comparator 115 for comparing input Zn+2 with the output Zs of the first selector 114, and outputting, for example, 0 when $Zs \geq Zn+2$, and 1 when $Zs < Zn+2$; and a second selector 116 for selecting and outputting Zs or Zn+2 based on the output of the second comparator 115 (e.g., outputting Zs when the second comparator 115 outputs 1, and Zn+2 when 0).

The test pattern display position calculation operation of this embodiment is described in detail below. Note that the test patterns used in this embodiment are the same as those used in the first embodiment and shown in Fig. 5A. Furthermore, the test patterns of this embodiment are narrower than the detection range of the photodetector modules 8 - 15.

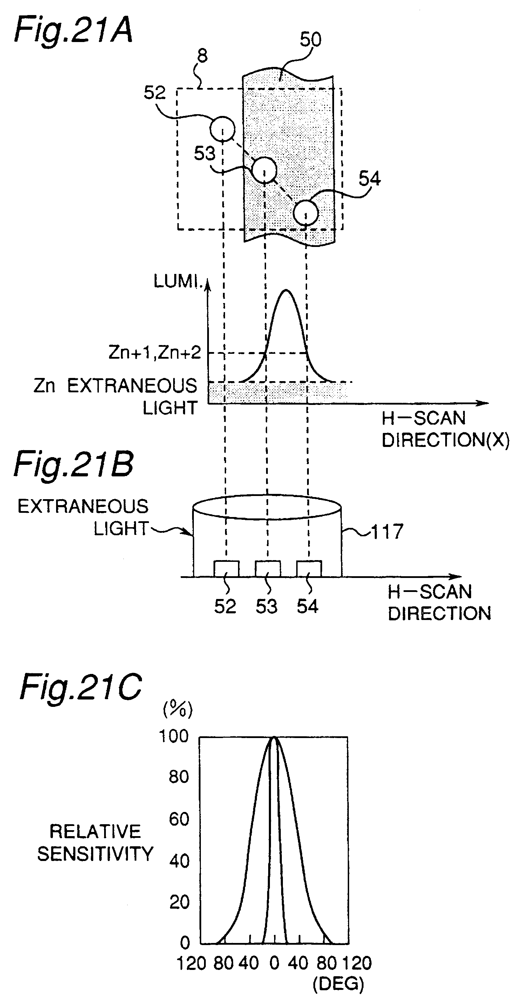

The extraneous light removal operation is described first. When extraneous light, such as external light or reflected light inside the projection set, other than the test pattern is incident to the photodetector modules, the adjustment operation may be adversely affected. It is therefore necessary to remove this extraneous light to achieve high precision adjustment. Because the illumination band of the test pattern in this embodiment is narrower than the detection range of the photodetector module 8 (and the other photodetector modules 9 - 15, but the description below is limited to the one photodetector module 8 for brevity) as shown in Fig. 21A, the test pattern will not be projected to one of the photodetector elements (photodetector element 52 in this example). The output of the photodetector element 52 to which the test pattern is not projected, and which therefore detects only the extraneous light, is therefore lower than the output of the photodetector elements 53 and 54 to which the test pattern is projected. It is therefore possible to detect the extraneous light component by obtaining from the minimum value calculator 112 the minimum output value of the photodetector elements 52 - 54 in the photodetector module 8. If as shown in Fig. 21A the relationship between the Zn, Zn+1, and Zn+2 outputs from the photodetection signal processor 16 corresponding to the photodetector elements 52 - 54 is $Zn < Zn+1 = Zn+2$, the output of the first comparator in the minimum value calculator 112 will be 1 because $Zn < Zn+1$, and the output of the first selector 114 will therefore be Zn. The output of the second comparator will also be 1 because $Zn < Zn+2$, and the second selector 116 therefore obtains Zn as the extraneous light component. The extraneous light component can then be removed by the subtractors 113 - 115 subtracting the detected extraneous light component from the outputs of the photodetector elements 52 - 54. As stated above, this removal of the extraneous light component is likewise executed for each of the other photodetector modules 9 - 15. Note, further, that the extraneous light received by the photodetector elements can be further reduced by providing, for example, a cylindrical light shield 117 around the photodetector modules as shown in Fig. 21B, or by using photodetector elements with a constricted directional characteristic as shown in Fig. 21C.

The process for calculating the test pattern display position from the outputs of the photodetector elements from which extraneous light has been removed is the same as that described in the first embodiment above, and further description is herein omitted. Likewise, the process for correcting geometric distortion or misconvergence based on the calculated test pattern display position is as described in the first embodiment above, and further description thereof is also omitted.

It is thereby possible to achieve high precision adjustment of image distortion by removing extraneous light such as external light and reflected light inside the projection set by means of the second embodiment thus described.

Embodiment 3

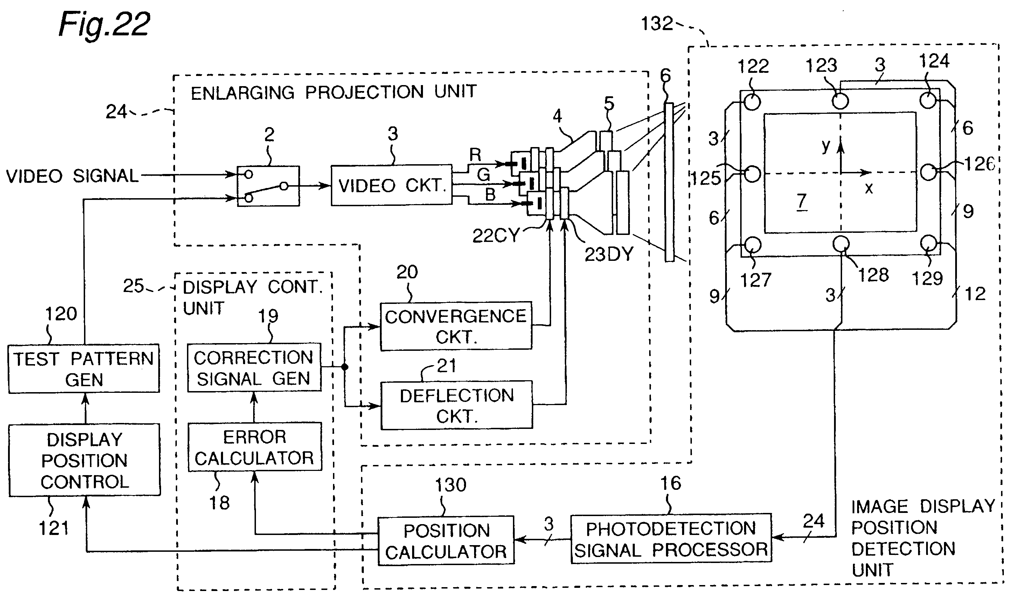

The third embodiment of an image display position detection apparatus according to the present invention is described below with reference to Fig. 22, a block diagram of a video projector containing the image display position detection apparatus of the third embodiment. Note that like parts in Figs. 1 and 22 are identified by like reference numbers, and further description thereof is omitted below.

What differs in this third embodiment is the test pattern generator 120 for generating the test pattern used for adjusting image distortion; the addition of a display position controller 121 for controlling the test pattern display position on the screen 7; the photodetector modules 122 - 129 arrayed at predetermined positions in the overscan area at the periphery of the screen 7, and used to detect the luminance of the displayed test pattern; and the display position calculator 130 for calculating the test pattern display position from the peak-held, A/D converted detection signals output by the photodetection signal processor 16. The error calculator 18 and correction signal generator 19 detect image distortion error and apply correction based on the test pattern position calculated by the display position calculator 17.

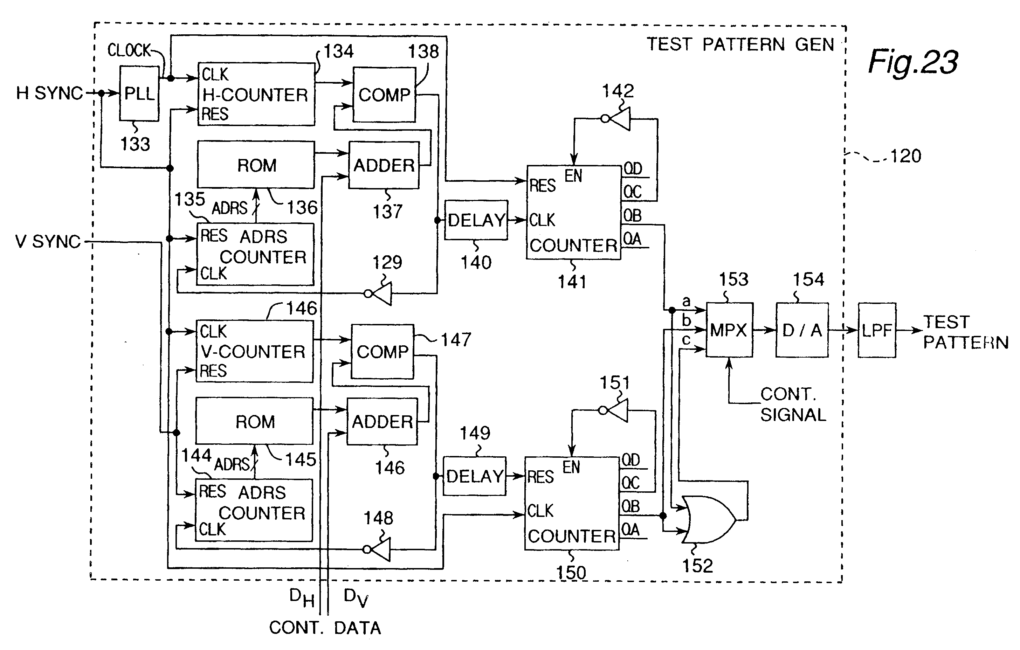

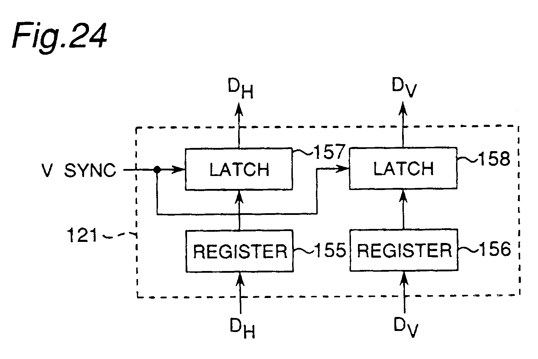

The test pattern display position calculating operation of the present embodiment is described in detail below, starting with the test patterns, which are line patterns of three vertical and three horizontal lines. A detailed block diagram of the test pattern generator 120 is shown in Fig. 23, and the display position controller 121 is shown in Fig. 24.

As shown in Fig. 23, the test pattern generator 120 comprises a phase locked loop (PLL) 133 for creating a clock locked to the horizontal synchronization signal (HD) of the video signal; a horizontal counter 134 using the clock signal from PLL 133 as the counting clock (CLK) and the horizontal synchronization signal as the reset signal (RES); a first address counter 135 for generating the read address of the first ROM 136; a first adder 137 for adding the output of the first ROM 136 and the control data DH from the display position controller 121, which is described below; a first comparator 138 for comparing the horizontal counter 134 and first adder 137 output signals, and outputting a HIGH signal when the compared signals match; a first NOT circuit 139; a first delay circuit 140 for delaying the output of comparator 138; and a first clock synchronized 4-bit counter 141 using the clock signal from PLL 133 as the counting clock (CLK) and the delayed comparator output from the first delay 140 as the reset signal (RES). A divided by eight output (QC) from counter 141 is inverted by a NOT circuit 142 and applied to an enable input (EN) of counter 141.

The test pattern generator 120 further comprises a vertical counter 143 using the horizontal synchronization signal (HD) as the counting clock (CLK) and the vertical synchronization signal (VD) as the reset signal (RES); a second address counter 144 for generating the read address of the second ROM 145; a second adder 146 for adding the output of the second ROM 145 and the control data Dv from the display position controller 121, which is described below; a second comparator 147 for comparing the output signals of the vertical counter 143 and second adder 146, and outputting a HIGH signal when the compared signals match; a second NOT circuit 148; a second delay circuit 149 for delaying the output of comparator 147; and a second clock synchronized 4-bit counter 150 using the horizontal synchronization signal (HD) as the counting clock (CLK) and the delayed comparator output from the second delay 149 as the reset signal (RES). A divided by eight output (QC) from counter 150 is inverted by a NOT circuit 151 and applied to an enable input (EN) of counter 150.

The test pattern generator 120 still further comprises an OR circuit 152 for obtaining the logical OR of the divided by four output (QB) of the first 4-bit counter 141 and the divided by four output (QB) of the second 4-bit counter 150; a multiplexer 153 for selecting the output (QB) of the first counter 141, the output (QB) of the second counter 150, or the OR circuit 152; and a digital/analog (D/A) converter 154 for converting the digital signal to an analog signal.

As shown in Fig. 24, the display position controller 121 comprises registers 155 and 156 for storing the control data DH and Dv from the display position calculator 130; and latches 157 and 158 for outputting the control data at the vertical synchronization signal timing.

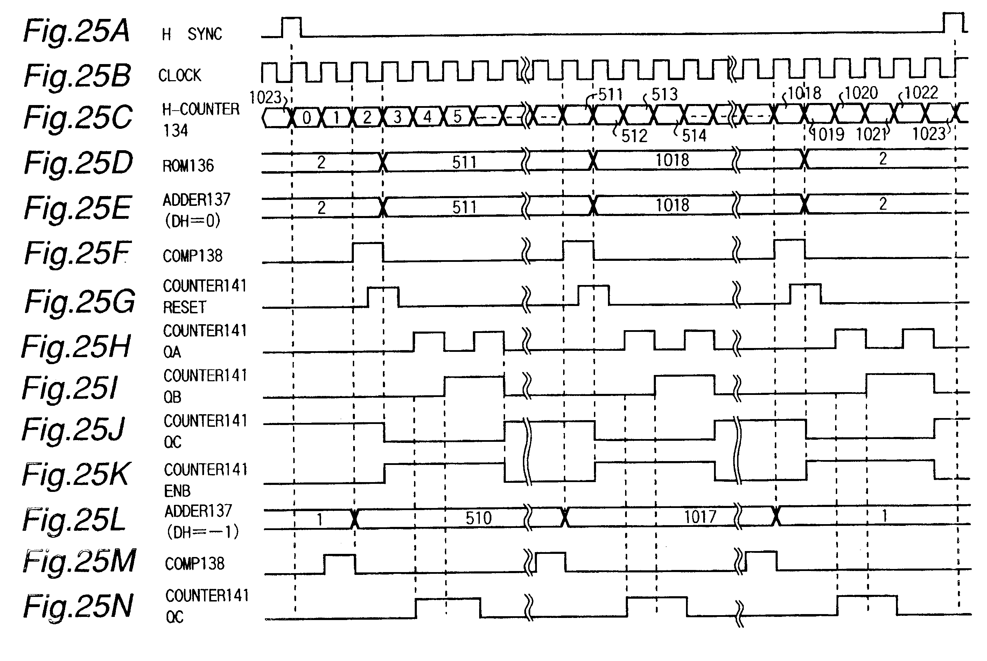

The operation of the test pattern generator 120 and the test pattern display position controller 121 is described below with reference to Figs. 25A - 25N.

Figs. 25A - 25N show the timing signal waveforms at each point of the horizontal output system 133 - 142 of the pattern generator 120.

As shown in Figs. 25A - 25C, the horizontal counter 134 counts up from 0 - 1023 based on the clock signal, and is reset by the horizontal synchronization signal (HD). Note that the count of the horizontal counter 134 in this embodiment is set at 1024, but is not thus limited and other appropriate values may be used. The first ROM 136 stores the data for determining the test pattern phase. For example, when it is necessary to generate a line pattern of three lines in the horizontal direction, the data (2, 551, 1021) indicating the output timing for the three horizontal stripes will be stored in ROM 136 at addresses (0, 1, 2). For example, the first ROM 136 outputs "2" when the ROM address is 0.

The output of the first ROM 136 is then added with the display position control data DH from the display position controller 121, and the output sum is compared with the output of the horizontal counter 134 by the comparator 138. The address counter 135 then counts up at the inverted output of the comparator 138, and the output of the first ROM 136 changes sequentially (2, 511, 1021, 2, ...) according to the address counter output.

When DH = 0 and display position control is not applied, the outputs from the first ROM 136 and the first adder 137 are equal as shown in Figs. 25D and 25E, the output of the comparator 138 becomes HIGH at the same time the output of the horizontal counter 134 is 2, 511, or 1021 and produces a pulse. Thus, one pulse is produced when the horizontal counter 134 counts 2, 511 or 1021, thus producing three pulses at in one horizontal period.

Furthermore, the width of the pulse output from comparator 138 is controlled by counter 141. Input and output signals of the 4-bit counter are shown in Figs. 25G - 25K. The clock synchronized counter 141 reset by the output of delay circuit 140 output (Fig. 25G) at a timing indicated by A in Fig. 25H, and thereafter is counted up by the clock (Fig. 25B) of the PLL 138. Moreover, since the output (QC) (Fig. 25J) of counter 141 is inverted and applied to the count enable (EN) (Fig. 25K), count stops at a timing B shown in Fig. 25H, and maintains the counted value until the occurrence of the next reset signal (at a timing C in Fig. 25H). Thus, from the divided by four output (QB) of counter 141 produces three pulses (Fig. 25I) in one horizontal period, each pulse having a pulse width equal to twice the clock period. The three pulses are used for generating the test pattern. The pulse width can be changed by changing the connection to the enable (EN) and the counter output.

On the other hand, in the next cycle operation, when display position control is applied, the control data DH of the display position controller 121 is applied to the first adder 137. For example, when the control data DH = -1, the data stored in ROM 136 will be added with -1 in the first adder 139. Thus, eventually the data in ROM 136 will be shifted from (2, 551, 1021) to (1, 550, 1021) at the output of the first adder 137. Thus, the output of the first adder 139 will be shifted as shown in Fig. 25L, and the output of the comparator 138 will become HIGH when the output of the horizontal counter 136 outputs a value equal to 1, 510, or 1017. Because the clock is thus time-shifted one unit relative to the no-control operation, the display position of the test pattern on the screen 7 is also physically shifted by an amount corresponding to this time shift. By the above operation, it is possible to control the position and width of the test pattern comprising lines.

Note that the vertical output system is constructed the same as the horizontal output system, and further description thereof is thus omitted below.

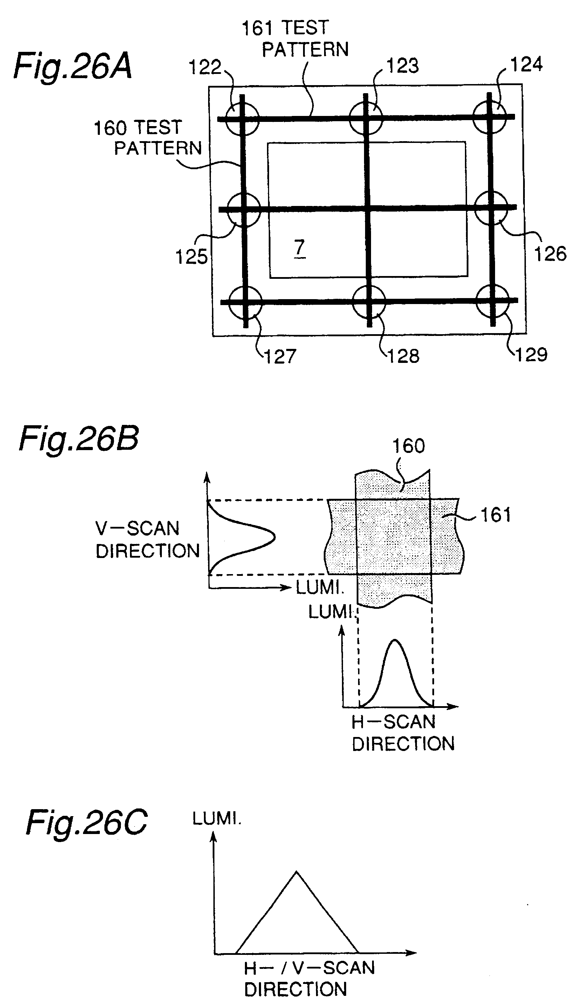

The multiplexer 153 then selects the output of the first counter 141, second counter 150, or OR circuit 152, and the D/A converter 154 converts the selected digital signal to an analog signal to output one of three test pattern signals: vertical, horizontal, or vertical and horizontal. The resulting test patterns 160 and 161, as shown in Fig. 26A, thus comprise three horizontal and three vertical lines, respectively. Note that these line patterns 160 and 161 can be independently displayed one at a time. The luminance characteristics of these test patterns have a Gaussian characteristic as shown in Fig. 26B as a result of optical or electrical filtering through a low pass filter, but the same effects can be obtained by means of a linear characteristic waveform as shown in Fig. 26C.

The method of the present embodiment for calculating the test pattern display position is described next. Note that the process applied by the display position calculator 130 can be achieved in software alone.

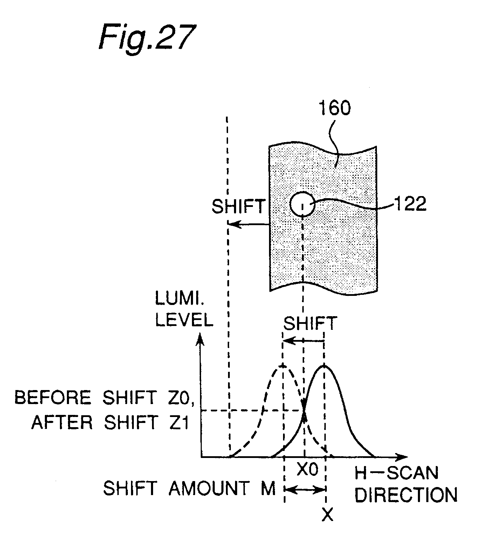

The photodetector modules 122 - 129 comprise photodetector elements such as photodiodes or phototransistors, and are assigned discrete (x, y) coordinates on the screen 7. The test pattern display position is calculated at each of the photodetector modules 122 - 129 by sequentially projecting the test patterns 160 and 161 in the horizontal (x) and vertical (y) directions as shown in Fig. 26A. The same process is executed for each of the photodetector modules, however, and the calculation of the display position of the horizontal scanning direction test pattern 160 in the one photodetector module 122 is therefore described below with reference to Fig. 27 by way of example.

The luminance level Z0 of the test pattern is first detected by the peak-hold and A/D conversion process applied by the photodetection signal processor 16 to the photodetector element detection signal. Note that the photodetection signal processor 16 is a single channel version of the circuit shown in Fig. 7 of the first embodiment above, and further description thereof is omitted below.

Next, the test pattern control data is supplied by the display position calculator 130 to the display position controller 121, thus shifting the display position of the test pattern 160 M coordinates on the display screen. The luminance level of the test pattern 160 is detected by the photodetector element 122 at this time. The output of the photodetector element 122 obtained in the second cycle is weighted by the amount of shift M. If screen coordinate X0 is assigned to the photodetector element of the photodetector module 122, the test pattern display position X can be obtained by the following equation.

$$X = X0 + M/2 * (Z1/(Z0+Z1) + Z0/(Z0+Z1) + 1)$$

$$= X0 + M * Z1 /(Z0 + Z1) \qquad (2)$$

where $Z1/(Z0+Z1)$ and $Z0/(Z0+Z1)$ are the output ratios of the luminance level detected before and after shifting the test pattern display position. For example, if the luminance level ratio before and after shifting the test pattern display position is 1:1, the test pattern display position $X = X0 + M/2$, and is known to be shifted only M/2 to the right of the photodetector module 122. The test pattern display position can thus be calculated by weighting the output of the photodetector element 122 by the shift amount M of the test pattern after shifting. Note that while this operation has been described as being executed in software, it can also be achieved in hardware alone. Furthermore, while the display position is controlled by thus controlling the test pattern generator, the same process can be achieved by controlling the deflector or auxiliary deflector unit, and this control method is particularly suited to multiscan monitor type units operating at various scanning frequencies. For example, the control data DH and DV, which have been described as applied to adders 137 and 146, can be converted to analog format and applied to either one of the convergence circuit 20 or deflection circuit 21.

It is to be noted that the cont

As described above, it is possible to directly calculate the test pattern display position from the output ratio of the luminance levels when the test pattern display position is shifted. It is therefore also possible to detect the displacement of the test pattern due to geometric distortion or misconvergence from the test pattern display position.

It is therefore possible to calculate the test pattern display position with high precision, resistant to test pattern gain fluctuation and other causes of distortion, because the test pattern display position is calculated from the output ratio of the photodetector elements.

Detection and correction of geometric distortion or misconvergence from the detected test pattern display positions of the RGB images are accomplished by means of the same process used in the first embodiment above, and further description thereof is therefore omitted below.

It is therefore possible to automatically correct image distortion with high precision in a short period of time because the test pattern display position can be directly calculated with high precision.

Embodiment 4

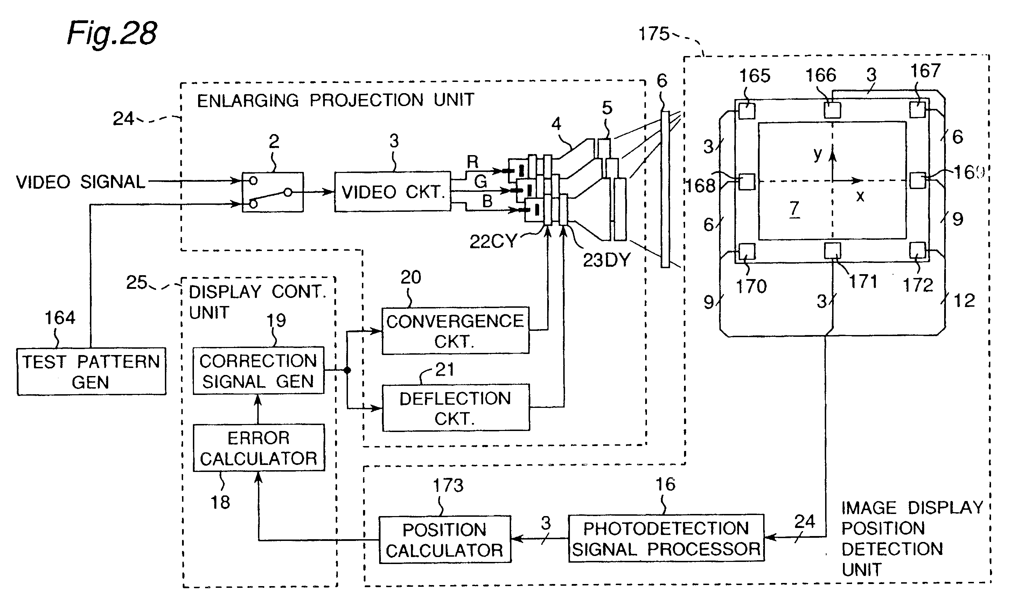

The fourth embodiment of an image display position detection apparatus according to the present invention is described below with reference to Fig. 28, a block diagram of a video projector containing the image display position detection apparatus of the fourth embodiment. Note that like parts in Figs. 1 and 28 are identified by like reference numbers, and further description thereof is omitted below.

What differs in this fourth embodiment is the test pattern generator 164 for generating the test pattern used for adjusting image distortion; the photodetector modules 165 - 172 arrayed at predetermined positions in the overscan area at the periphery of the screen 7, and used to detect the luminance of the displayed test pattern; and the display position calculator 173 for calculating the test pattern display position from the peak-held, A/D converted detection signals output by the photodetection signal processor 16. The error calculator 18 and correction signal generator 19 detect image distortion error and apply correction based on the test pattern position calculated by the display position calculator 17.

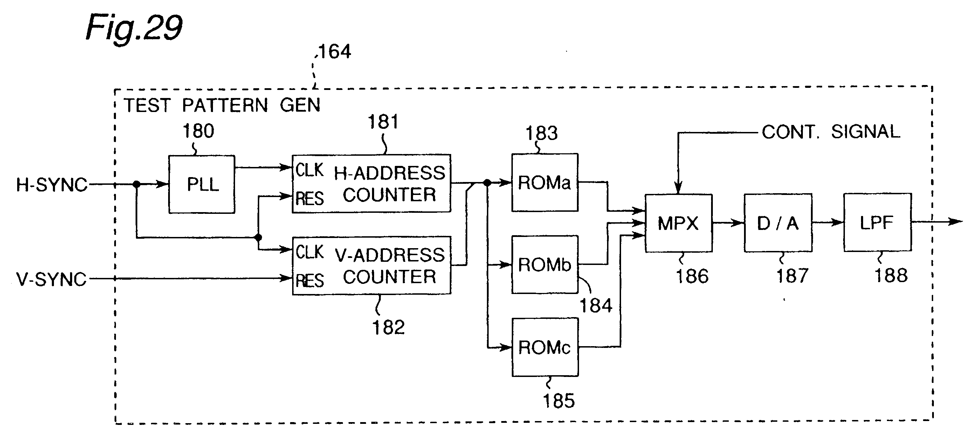

The test pattern display position calculating operation of the present embodiment is described in detail below, starting with the test patterns. A detailed block diagram of the test pattern generator 164 is shown in Fig. 29

As shown in Fig. 29, the test pattern generator 164 comprises a phase locked loop (PLL) 180 for creating a clock locked to the horizontal synchronization signal (HD) of the video signal; a horizontal address counter 181 using the clock signal as the counting clock (CLK) and the horizontal synchronization signal as the reset signal (Res), and generating the horizontal read address of the ROMs 183 - 185 described below; a vertical address counter 182 using the horizontal synchronization signal (HD) as the counting clock (CLK) and the vertical synchronisation signal (VD) as the reset signal (Res), and generating the vertical read address of the ROMs 183 - 185 described below; ROMs 183 - 185 storing the test pattern data; a multiplexer 186 for selecting and outputting the output of ROM 183, 184 or 185; a digital/analog (D/A) converter 187 for converting the test pattern data to an analog signal; and a low pass filter (LPF) 188. As will be explained below, the test pattern in this embodiment is not in the form of lines, but in the form of eight square blocks.

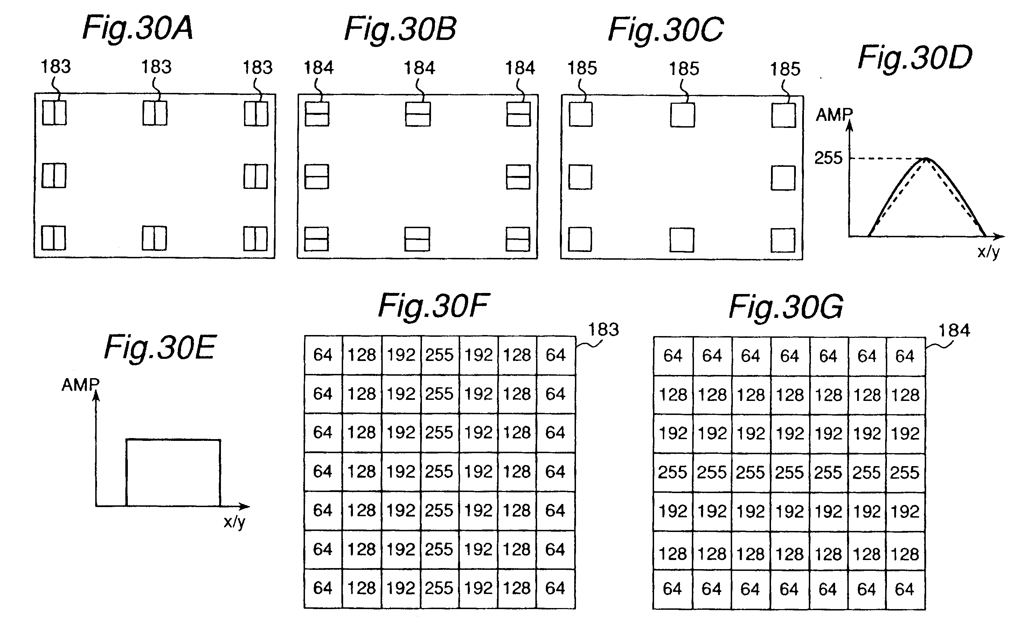

The ROMs 183 - 185 store the test pattern data projected to the area of the photodetector modules 165 - 172 in the overscan area around the screen 7. As shown in Figs. 30A and 30D, ROM 183 stores a square test pattern data which takes a peak value at the center along a cross section line in the horizontal scanning direction (x), and gradually reduced towards opposite side in symmetrical format. For example, as shown in Fig. 30F, ROM 183 has seven columns and seven rows of data alignment in which the center column carries the highest data, e.g., 255, and the data is gradually reduced towards opposite side end columns. Thus, the luminance level of the test pattern will be the brightest along the center column and weakened towards the opposite sides. As shown in Fig. 30A, the square test pattern from ROM 183 is repeatedly produced eight times in one frame at places corresponding to the photodetector modules 165 - 172.

This test pattern data compensates for the gamma characteristics of the CRT to achieve a linear characteristic to the horizontal scanning direction (x) when projected to the screen 7. This gamma correction can be achieved by converting the linear data V using the equation

$$V^{(1/r)}.$$

Similar test pattern data compensating for the gamma characteristics of the CRT in the vertical scanning direction (y) as shown in Figs. 30B, 30D and 30G is stored to ROM 184.

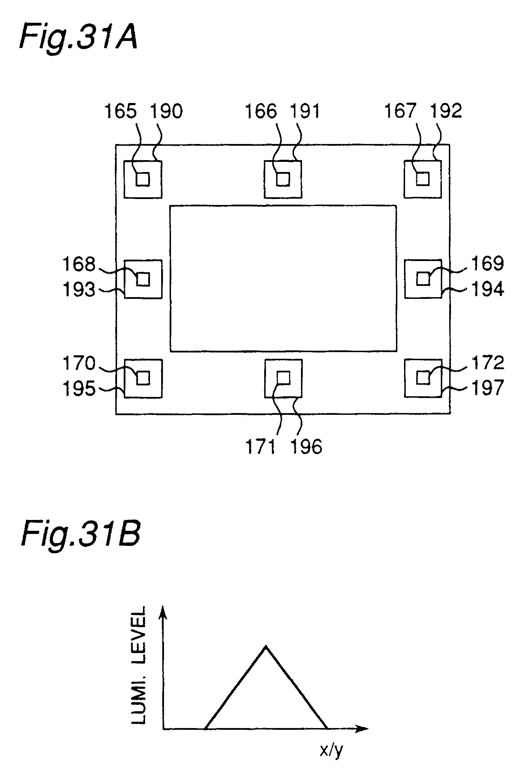

As shown in Figs. 31A and 31B, the luminance levels of the test patterns 190 - 197 displayed in the area of the photodetector modules at the periphery of the screen 7 therefore have a linear peak characteristic relative to the horizontal (x) or vertical (y) scanning direction.

Window patterns as shown in Figs. 30C and 30E are stored to the third ROM 185. The multiplexer 186 then selects and outputs the data of ROM 183, 184 or 185. Note that the maximum amplitude of each test pattern output from ROMs 183 - 185 is the same.

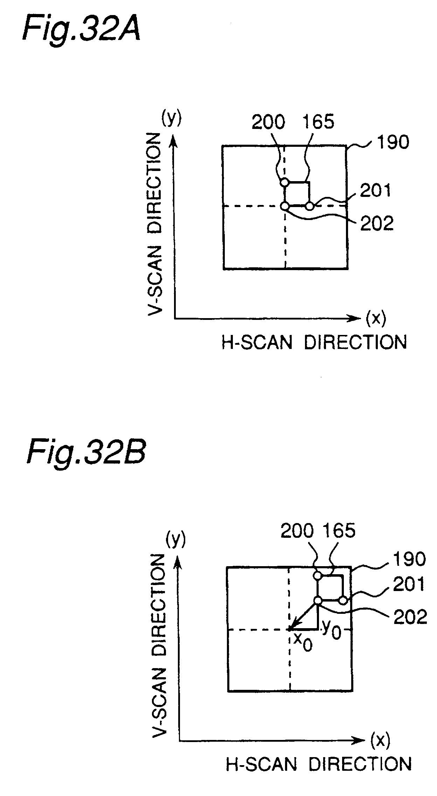

The operation of the photodetector modules 165 - 172 and the position calculator 173 is described in detail below. As shown in Fig. 32A, the photodetector modules 165 - 172 each comprise three photodetector elements 200 - 202 (e.g., photodiodes or photosensors) arrayed closely together along the horizontal (x) and vertical (y) scanning directions of the screen 7. Note that while only one photodetector module 165 is shown in Figs. 32A and 32B, the other photodetector modules are similarly constructed. The detection signals of each photodetector element in the photodetector module is peak-hold and A/D conversion processed by the photodetection signal processor 16, and supplied to the position calculator 173. The position calculator 173 previously adjusts the all photodetector elements to have the same low output levels when a predetermined dark flat pattern is projected, and the same high output levels when a predetermined bright flat pattern is projected. The position calculator 173 calculates the display position of the test pattern 190 by means of a software process. Note that the same operation is applied for each of the other photodetector modules.

Fig. 32A shows the ideal relationship between the display state of the test pattern and the photodetector elements when there is no geometric distortion, misconvergence, or other image distortion. In this situation the test pattern peak will match the position of the photodetector element 202 common to the horizontal (x) and vertical (y) scanning directions. Fig. 32B shows the relationship between the photodetector element and the test pattern displaced due to image distortion. It is therefore possible to detect the image distortion error by detecting the displacement (x0, y0) to the photodetector element 202.

The precision of this level detection is an important factor in the high precision calculation of geometric distortion or misconvergence based on the output levels of the photodetector elements. Furthermore, because the detection sensitivity of the photodiodes, phototransistors or other photodetector elements generally varies, this sensitivity difference must be compensated for to achieve high precision level detection. A minimum value test signal, i.e., the minimum value level when the test signal is not projected, and the maximum value level when a test signal of the maximum window pattern level is projected, are therefore first measured, and a linear peak signal is then projected and the level measured to enable high precision level detection.

Calculation of test pattern displacement x0 and y0 is accomplished sequentially in the x- and y-directions. The operation in the x-direction is described first.

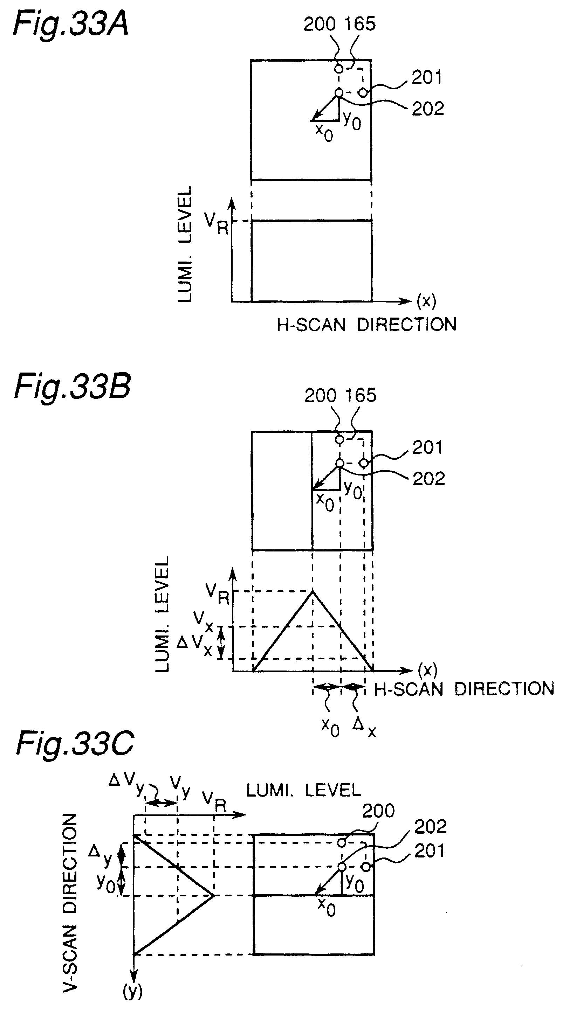

A linear peak pattern as shown in Fig. 31B is used for the test pattern in the x-direction. To obtain the peak level VR of this test pattern, a window pattern of a level equal to the peak level of the linear peak test pattern is generated as shown in Fig. 33A, and the luminance level VR of this window pattern is detected by the photodetector element 202 common to the horizontal (x) and vertical (y) scanning directions. A linear peak test pattern as shown in Fig. 33B is then generated, and the luminance level Vx is detected by the photodetector element 202. The difference $\Delta Vx$ of the luminance level detected by photodetector element 202 and the photodetector element 201 on the horizontal scanning direction (x) is then calculated. If the gap between photodetector elements 201 and 202 is $\Delta x$, the inclination Ax of the test pattern to the x-direction can be obtained as $Ax = \Delta Vx/\Delta x$ . The displacement x0 to the horizontal scanning direction (x) is then calculated from equation (3) where the test pattern peak position is x = 0.

$$x0 = Ax^{(-1)} \cdot (Vx - VR) \tag{3}$$

The y-direction displacement y0 is obtained in the same manner as the x-direction displacement x0 using a similar linear peak test pattern in the y-direction as shown in Fig. 33C. Thus, if the inclination Ay of the test pattern to the y-direction is $Ay = \Delta Vy/\Delta y$ where $\Delta Vy$ is the differential output of photodetector elements 200 and 202, and $\Delta y$ is the gap between photodetector elements 200 and 202, the displacement y0 to the vertical scanning direction (y) can be calculated from equation (4) where the test pattern peak position is y = 0.

$$y0 = Ay^{(-1)} \cdot (Vy - VR) \tag{4}$$

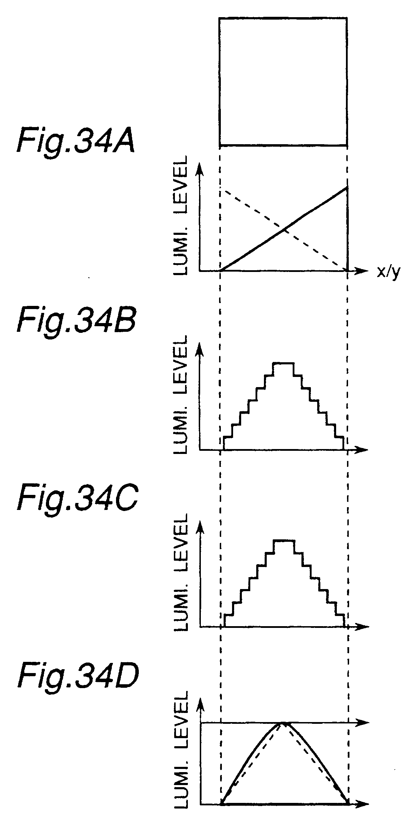

It is thereby possible to calculate the test pattern display position to the photodetector module. While display coordinate detection has been described for only one linear peak pattern wherein the signal level varies continuously, the operation is the same for the other test patterns shown in Figs. 34A - 34D.

Detection and correction of geometric distortion or misconvergence is then accomplished based on the detected test pattern display positions of the RGB images. These operations are the same as those of the first embodiment above, however, and further description thereof is omitted below.

The test pattern display position is thus obtained in the present embodiment by detecting a test pattern that varies in one direction of the display screen, and then calculating the position from the level and inclination of the detection signal. It is therefore possible to directly detect the test pattern display position relative to the screen coordinates, and image distortion can be corrected in a short time and with high precision.

Embodiment 5

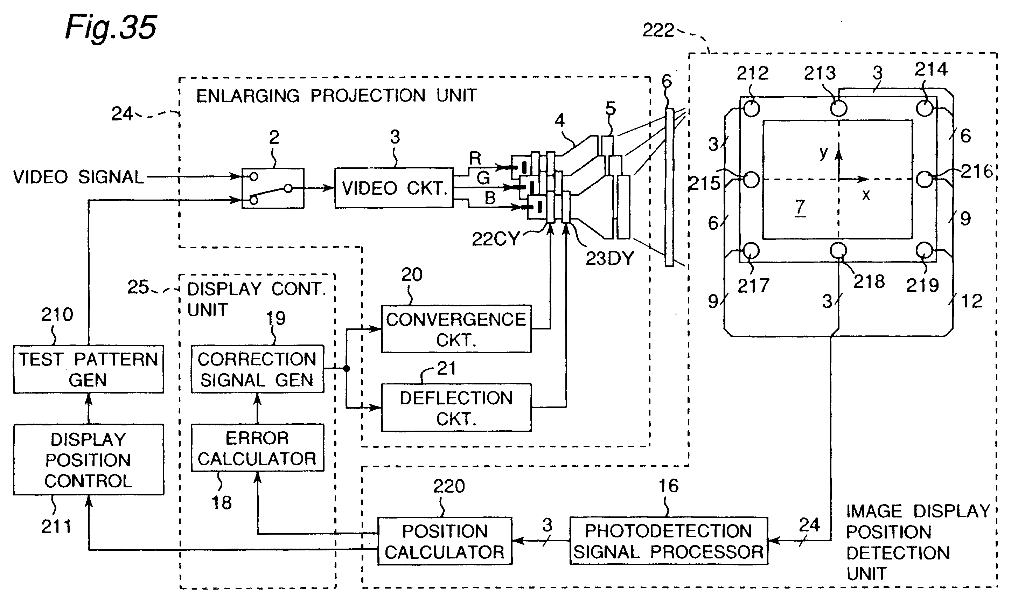

The fifth embodiment of an image display position detection apparatus according to the present invention is described below with reference to Fig. 35, a block diagram of a video projector containing the image display position detection apparatus of the fifth embodiment. Note that like parts in Figs. 1 and 35 are identified by like reference numbers, and further description thereof is omitted below.

What differs in this fifth embodiment is the test pattern generator 210 for generating the test pattern used for adjusting image distortion; the addition of a display position controller 211 for controlling the display position of the test pattern generated by the test pattern generator 210; the photodetector modules 212 - 219 arrayed at predetermined positions in the overscan area at the periphery of the screen 7, and used to detect the luminance of the displayed test pattern; and the display position calculator 220 for calculating the test pattern display position from the peak-held, A/D converted detection signals output by the photodetection signal processor 16. The error calculator 18 and correction signal generator 19 detect image distortion error and apply correction based on the test pattern position calculated by the display position calculator 220.

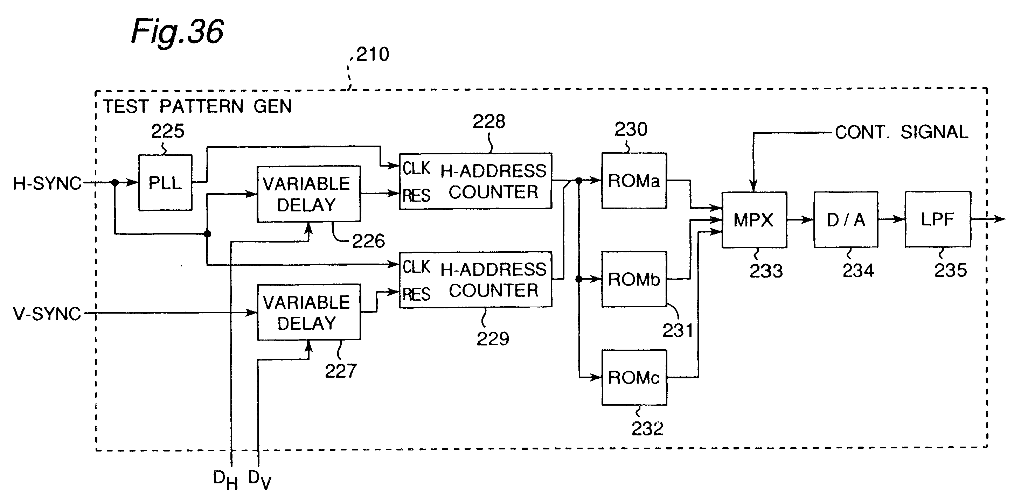

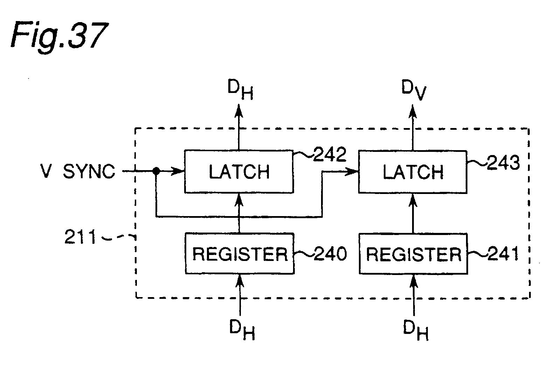

The test pattern display position calculating operation of the present embodiment is described in detail below, starting with the test patterns. A detailed block diagram of the test pattern generator 210 is shown in Fig. 36, and the test pattern display position controller 211 is shown in Fig. 37.

As shown in Fig. 36, the test pattern generator 210 comprises a phase locked loop (PLL) 225 for creating a clock locked to the horizontal synchronization signal (HD) of the video signal; variable delay circuits 226 and 227 of the prior art for varying the signal delay period based on the control data DH and CV supplied from the display position controller 211; a horizontal counter 228 using the clock signal as the counting clock (CLK) and the horizontal synchronization signal as the reset signal (Res), and generating the horizontal read address of the ROMs 230 - 232 described below; a vertical address counter 229 using the horizontal synchronization signal (HD) as the counting clock (CLK) and the vertical synchronization signal (VD) as the reset signal (Res), and generating the vertical read address of the ROMs 230 - 232 described below; ROMs 230 - 232 storing the test pattern data; a multiplexer 233 for selecting and outputting the output of ROMs 230 - 232; a digital/analog (D/A) converter 234 for converting the test pattern data to an analog signal; and a low pass filter (LPF) 235.

As in the fourth embodiment shown in Figs. 30A, 30B and 30C, the ROMs 230 - 232 store the test pattern data projected to the area of the photodetector modules 165 - 172 in the overscan area around the screen 7.

As shown in Fig. 37, the display position controller 211 comprises registers 240 and 241 for storing the control data DH and Dv from the display position calculator 220; and latches 242 and 243 for outputting the control data at the vertical synchronization signal timing.

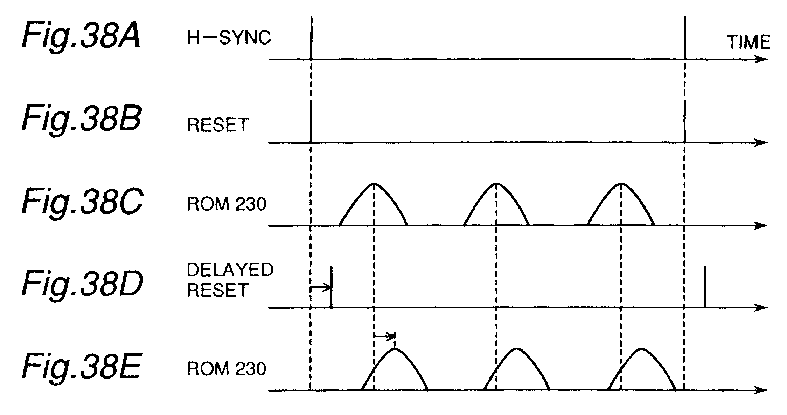

The operation of the test pattern display position controller 211 thus comprised is described below with reference to Figs. 38A - 38E, showing waveform diagrams of the horizontal channel output circuits 26, 228, and 230. Fig. 38A shows the horizontal synchronization signal, Fig. 38B and 38D show the horizontal address counter reset signal; and Fig. 38C shows the output of the ROM 230 when display position control is not applied and the delay of the variable delay circuit is 0 (zero).

When the display position controller 211 controls the test pattern display position, the control data is supplied to the variable delay circuit 226, and the reset signal of the horizontal address counter 228 is delayed relative to the horizontal synchronization signal as shown in Fig. 38D. The output of the ROM 230 is thus also time-shifted as shown in Fig. 38E. The same operation is applied in the vertical direction to control the test pattern display position. Furthermore, while the display position is controlled by thus controlling the test pattern generator, the same process can be achieved by controlling the deflector or auxiliary deflector unit, and this control method is particularly suited to multiscan monitor type units operating at various scanning frequencies. For example, the control data DH and DV, which have been described as applied to adders 137 and 146, can be converted to analog format and applied to either one of the convergence circuit 20 or deflection circuit 21.

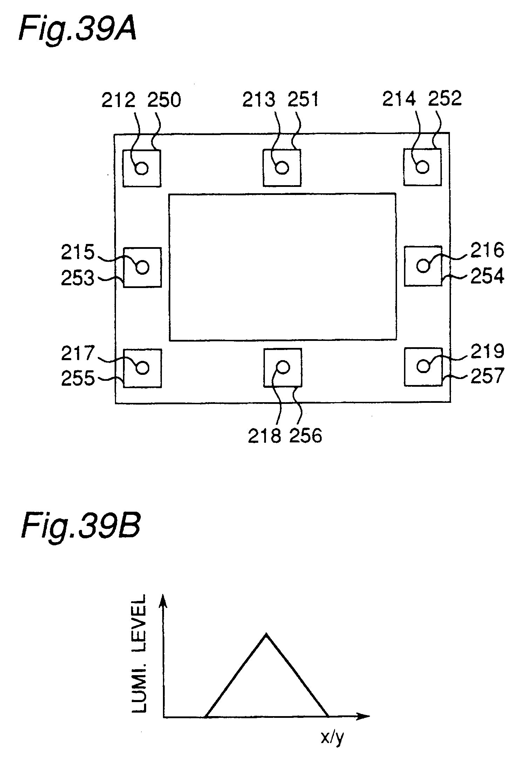

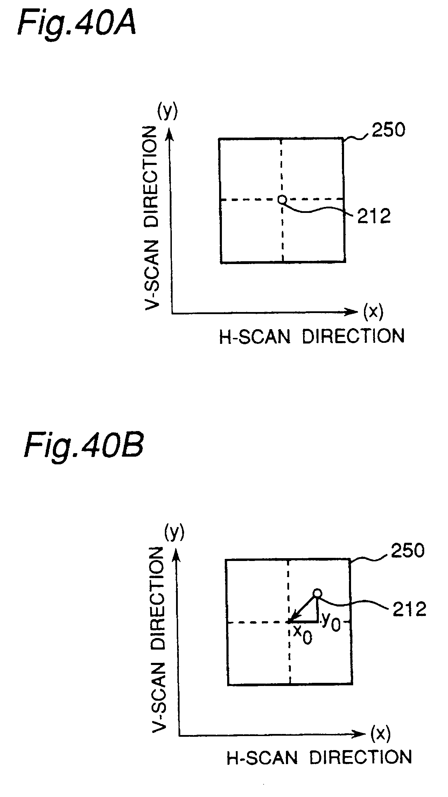

The operation of the photodetector modules 212 - 219 and the display position calculator 220 are described in detail next. As shown in Fig. 39A, the photodetector modules 212 - 219 each comprise a single photodetector element (photodiode or phototransistor) arrayed at predetermined positions in the overscan area around the screen 7. The test pattern 250 - 257 is projected to the area of the photodetector modules 212 - 219. As in the fourth embodiment above, the luminance level of the test patterns of this embodiment have a linear peak characteristic relative to the horizontal (x) and vertical (y) scanning directions as shown in Fig. 39B. Note that the process applied by the display position calculator 220 can be achieved in software alone; this process is described below with reference to Figs. 40A and 40B. Note that as the same procedure is executed for all of the photodetector modules 212 - 219 and test patterns, the description below is limited to the display position calculation procedure applied to the one test pattern 250 detected by one photodetector module 212.

Fig. 40A shows the ideal relationship between the display state of the test pattern and the photodetector element when there is no geometric distortion, misconvergence, or other image distortion. In this situation the test pattern peak will match the position of the photodetector element 212. Fig. 40B shows the relationship between the photodetector element and the test pattern displaced due to image distortion. It is therefore possible to detect the image distortion error by detecting the displacement (x0, y0) to the photodetector element 212.

Calculation of test pattern displacement x0 and y0 is accomplished sequentially in the x- and y-directions. The operation in the x-direction is described first.

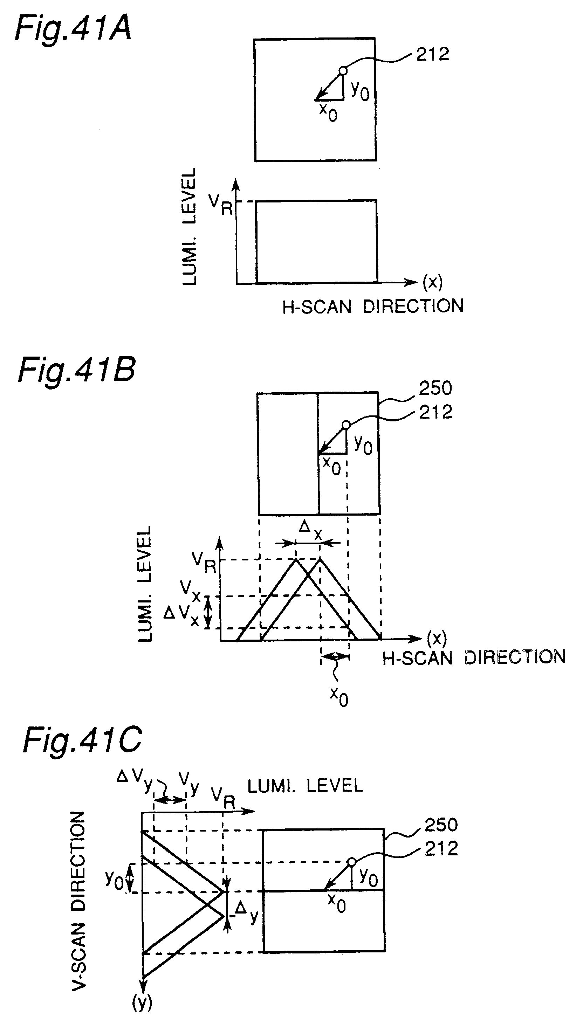

As described above, linear peak pattern as shown in Fig. 41A is used for the test pattern in the x-direction. To obtain the peak level VR of this test pattern, a window pattern of a flat luminance level equal to the peak level of the linear peak test pattern is generated as shown in Fig. 41A, and the luminance level VR of this window pattern is detected by the photodetector element 212. Then, as shown in Fig. 41B, a linearly inclined test pattern, similar to that shown in Fig. 30F, is generated, and the luminance level Vx is detected by the photodetector element. The display position of the test pattern is then shifted a minimal distance $\Delta x$ in the x-direction by the test pattern display position controller 211. The change $\Delta V$ in the output of the photodetector element is then detected, and the inclination Ax of the test pattern to the x-direction is obtained as $Ax = \Delta V/\Delta x$. The displacement x0 of the test pattern to the horizontal scanning direction (x) due to geometric distortion or misconvergence is then calculated from equation (5) where the test pattern peak position is x = 0.

$$x0 = Ax^{(-1)} \cdot (Vx - VR) \tag{5}$$

The y-direction displacement y0 is obtained in the same manner as the x-direction displacement x0 using a similar linear peak test pattern in the y-direction as shown in Fig. 40C. Specifically, the y-direction displacement y0 is obtained from equation (6)

$$y0 = Ay^{(-1)} \cdot (Vy - VR) \tag{6}$$

where Vy is the photodetector output, Ay is the inclination of the test pattern to the y-direction ($Ay = \Delta Vy/\Delta y$ where $\Delta Vy$ is the change in the light output when the test pattern is moved distance $\Delta y$ by the display position controller 211), and the test pattern peak position is y = 0.

It is thereby possible to calculate the displacement of the position coordinates of the test pattern due to geometric distortion or misconvergence.

Detection and correction of geometric distortion or misconvergence is then accomplished based on the detected test pattern display positions of the RGB images. These operations are the same as those of the first embodiment above, however, and further description thereof is omitted below.

The test pattern display position is thus obtained in the present embodiment by detecting the change in the position of the test pattern in one direction on screen, and then calculating the position from the level and inclination of the detection signal. It is therefore possible to directly detect the test pattern display position relative to the screen coordinates, and image distortion can be corrected in a short time and with high precision.

Furthermore, by calculating the display position using a test pattern formed with a known shape (level change), image detection can be achieved in a short time by means of a simple configuration Even greater precision in display position detection can be obtained by using pattern data for which the on-screen display dimensions are known.

Embodiment 6

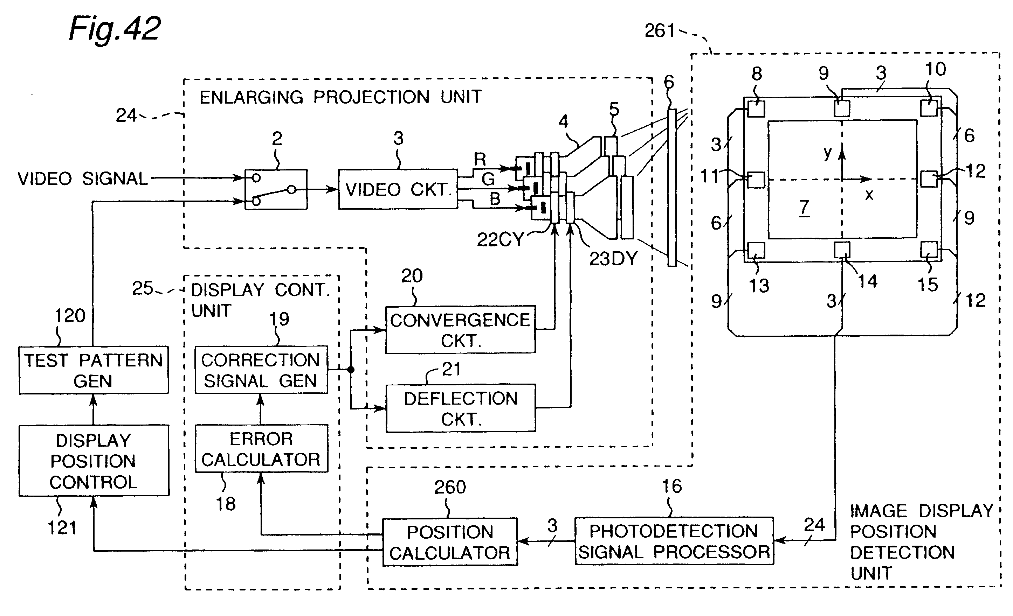

The sixth embodiment of an image display position detection apparatus according to the present invention is described below with reference to Fig. 42, a block diagram of a video projector containing the image display position detection apparatus of the sixth embodiment. Note that like parts in Fig. 42 and Figs. 1 and 22 for the first and third embodiments are identified by like reference numbers, and further description thereof is omitted below.

Note that the test pattern generator 120 for generating the test pattern used for adjusting image distortion is the same as the pattern generator of the third embodiment; the display position controller 121 for controlling the test pattern display position on the screen 7 is the same as that of the third embodiment; and the photodetector modules 8 - 15 arrayed at predetermined positions in the overscan area at the periphery of the screen 7, and used to detect the luminance of the displayed test pattern, are the same as those of the first embodiment. What differs is the display position calculator 260 for calculating the test pattern display position from the peak-held, A/D converted detection signals output by the photodetection signal processor 16. The error calculator 18 and correction signal generator 19 detect image distortion error and apply correction based on the test pattern position calculated by the display position calculator 260.

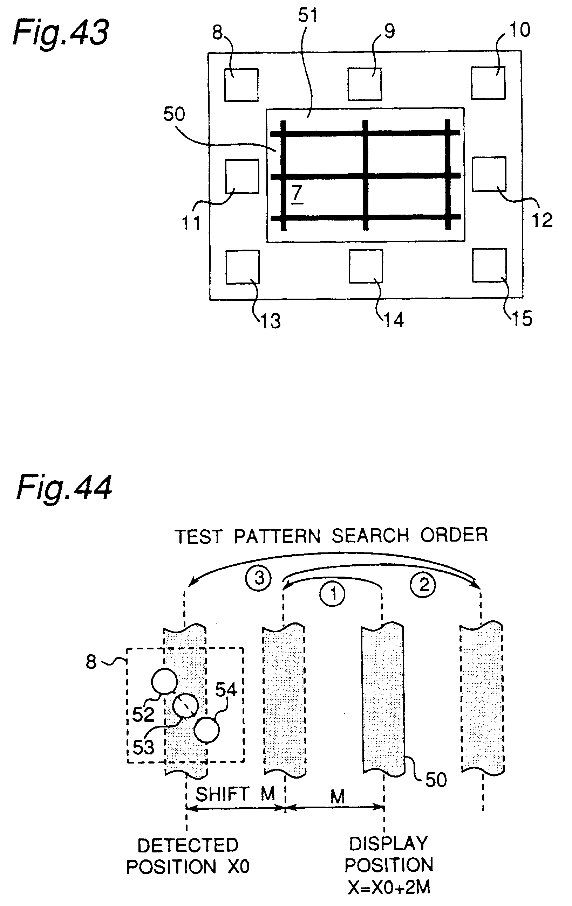

The test pattern display position calculating operation of the present embodiment is described in detail below. Note that test pattern generation and test pattern display position control are the same as in the third embodiment above, and further description thereof is therefore omitted below. The operation of the display position calculator 260, which is achieved in software, is described next with reference to Fig. 43.

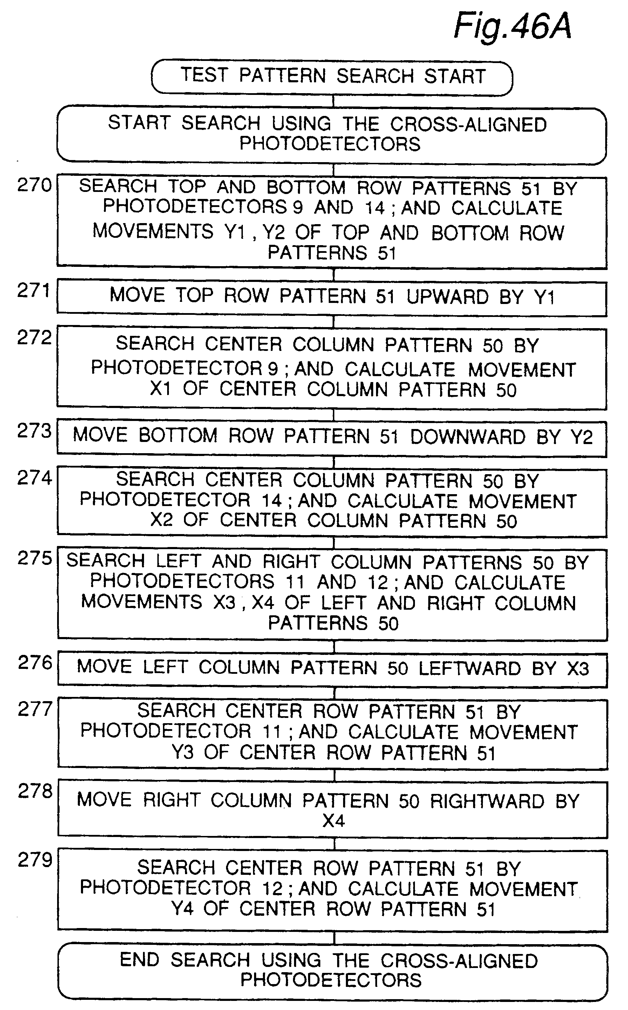

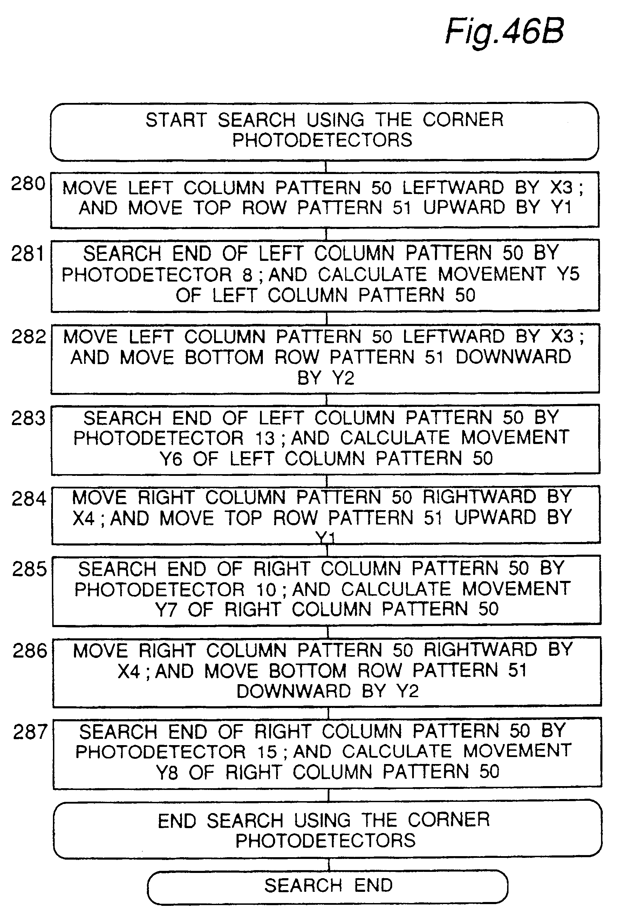

This software process is shown in Fig. 46. When the test patterns 50 and 51 do not appear at the location of the photodetector modules 8 - 15 around the screen due to image distortion, it is first necessary to move the test pattern to within the area detectable by the photodetector modules 8 - 15. Whether the test pattern is emitted to the photodetector modules is determined by comparing the output of each photodetector element in the photodetector module with a known threshold value (e.g., 0). The operation for moving the test pattern to a position from which it can be detected is called the "test pattern search" below. The test pattern display position can be obtained from the movement resulting from the test pattern search. This test pattern search for moving the test pattern to a position detectable by the photodetector modules 8 - 15 is described below. Note that this operation is described with respect to only one photodetector module 8 below as the operation is the same for all of the photodetector modules 8 - 15.

When the test pattern 50 is not emitted to the area covered by the photodetector module 8 as shown in Fig. 44, the display position calculator 260 controls the display position controller 121 to move the test pattern by a movement interval slightly narrower than the detection area of the photodetector module 8 in a sequence such as that shown in Fig. 44 until a position detectable by the photodetector module 8 is found. The control data DH output from the display position calculator 260 may be expressed as

$$DH = (-1)^{(n+1)} \cdot [(n+1)/2] \tag{7}$$

where $n$ (>= 0) is the number of movements for which the search operation is executed, and $[(n+1)/2]$ is the integer part of $(n+1)/2$ and varies in the manner 1, -1, 2, -2, 3, ... relative to the number of movements. This results in the test pattern 50 moving in an alternating right-left manner as shown in Fig. 44. The display position X of the test pattern can then be calculated as

$$X = X0 + M * [(N+1)/2] \tag{8}$$

where N is the number of movements of the test pattern until it is detectable (N = 3 in Fig. 44); M is the distance of test pattern movement; and X0 is the test pattern detection position in the photodetector module when the test pattern is detectable, and $[(N+1)/2]$ is the integer part of $(N+1)/2$. Note, further, that X0 can be calculated from equation (1) as described in the first embodiment from the screen coordinates assigned to the photodetector elements 52 - 54 of the photodetector module 8, and the output ratio of the photodetector elements 52 - 54. Furthermore, while the horizontal test pattern search is shown in Fig. 44 and described above, the same principle is applied for the vertical test pattern search.

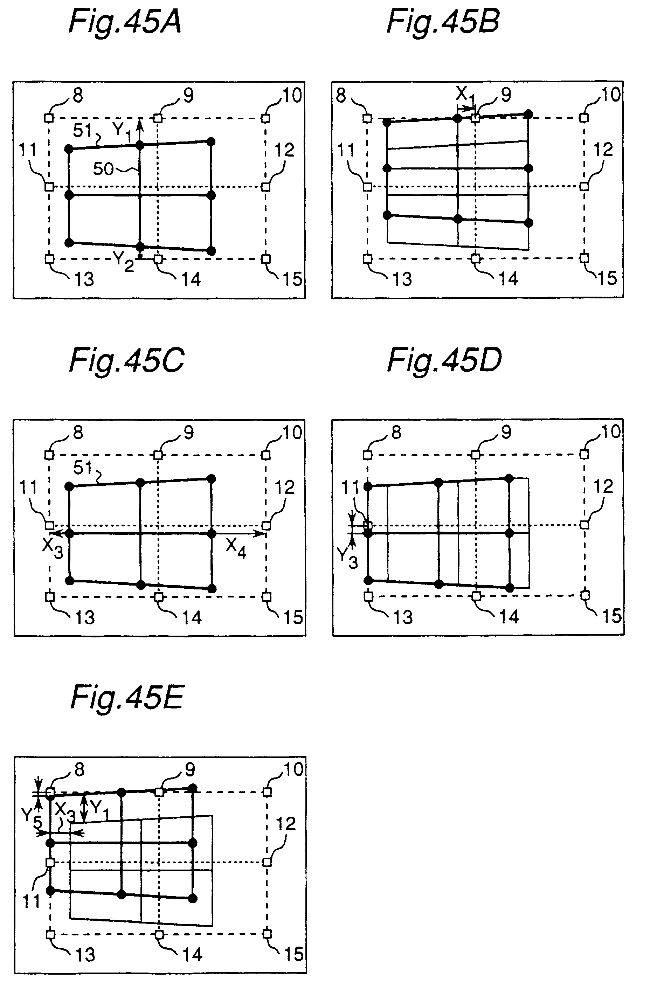

The test pattern search procedure for the photodetector modules (9, 11, 12, 14) forming a cross (+) and the photodetector modules (8, 10, 13, 15) at the four corners of the display screen is described next. The first group of photodetector modules (9, 14, 11, 12) are disposed near two perpendicular axes of the display screen and symmetrically located approximately on the two perpendicular axes, and the second group of photodetector modules (8, 10, 13, 15) are disposed at predetermined positions around the display screen. The test pattern search is executed for the corner photodetector modules after performing the search for the photodetector modules forming a cross. This test pattern search is performed simultaneously for photodetector modules (e.g., photodetector modules 11 and 12) symmetrical to the horizontal (x) or vertical (y) scanning direction. The search procedure for the photodetector modules aligned in a cross format is described first with reference to the test pattern diagrams in Figs. 45A - 45E, and the flow chart in Figs. 46A and 46B.

In the search for the cross-aligned photodetector modules, the vertical test pattern 51 is first searched for the vertically symmetrical photodetector modules 9 and 14, and the test pattern movement Y1, Y2 required for the test pattern to be displayed at the photodetector module position is obtained (Fig. 46A, step 270). By thus executing the search for a pair of symmetrical photodetector modules, the total number of searches required to obtain the display position detectable by both photodetector modules is less than if the search were executed separately for each photodetector module. For example, if the number of test pattern movements required to find the detectable position of the one photodetector module 9 is N, the number of movements required to find the detectable position of the other photodetector module 14 is M, and M < N, N searches are required to find the detectable display position for both photodetector modules 9 and 14. If the searches are conducted separately, however, a total M + N searches is required to find both display positions.

After moving the test pattern the detected distance Y1 at the top photodetector module 9 as shown in Fig. 44A (Fig. 46A, step 271), the search is executed for the horizontal test pattern 50, obtaining the required horizontal movement X1 (Fig. 46A, step 272). The same process is then repeated to obtain the movement Y2 of the vertical test pattern 51 for the bottom photodetector module 14 (Fig. 46A, step 272); the horizontal test pattern 50 is then searched to obtain pattern movement X2 (Fig. 46A, step 274, note that X2 is not shown in Figs. 45A - 45E). The required movement of the test pattern for the top and bottom photodetector modules 9 and 14 of the cross is thus obtained as (X1, Y1) for the top photodetector module 9, and (X2, Y2) for the bottom photodetector module 14.

Next, as shown in Fig. 45C, the test pattern search is executed for the horizontal test pattern 50 for left and right photodetector modules 11 and 12 of the cross, obtaining movement X3 and X4 (Fig. 46A, step 275). The horizontal test pattern is then moved X3 for the left photodetector module 11 as shown in Fig. 45D, and the search is repeated for the vertical test pattern 51, obtaining movement Y3 (Fig. 46A, step 276, 277). The same procedure is repeated for the right photodetector module 12, moving the horizontal test pattern 50 X4, searching for the vertical test pattern 51, and obtaining vertical movement Y4 (Fig. 46A, step 277, 278). The required movement of the test pattern for the left and right photodetector modules 11 and 12 is thus obtained as (X3, Y3) for the left photodetector module 11, and (X4, Y4) for the right photodetector module 12. This completes the test pattern search for the symmetrical photodetector modules in the cross-aligned pattern.

The test pattern search procedure for the photodetector modules at the corners of the screen area is described next. As shown in Fig. 45C, the test pattern is moved the movement distance X3, Y1 detected in the search for the top photodetector module 9 and the left photodetector module 11, and the test pattern search is then executed for the horizontal and vertical directions to detect the test pattern display position corresponding to the top left corner photodetector module 8 (Fig. 46B, step 280, 281). The same search principle is applied to search the test pattern display position for the other corner photodetector modules, i.e., bottom left photodetector module 13, top right module 10, and bottom right module 15. By thus searching first for the cross-aligned modules and then using the detected test pattern movement distance, the test pattern search can be completed with fewer search cycles than would be required to complete the search starting from the initial test pattern display position shown in Fig. 45A (Fig. 46A, step 270). Searching is thus more efficient, and the adjustment time can be reduced.

It is therefore possible to calculate the test pattern display position quickly and with high precision even when the test pattern is not initially displayed within the detection area of the photodetector module by executing the search procedure thus described. The processes for detecting image distortion error and correcting for image distortion based on the calculated test pattern display position are the same as described in the first embodiment, and further description is therefore omitted below.

As described above, searching is more efficient and the required adjustment time can be reduced by conducting the search continuously for each pair of photodetector modules symmetrical to the horizontal (x) and vertical (y) scanning directions of the screen 7, and by first conducting the search for the photodetector modules forming a cross on the screen and then conducting the search for the photodetector modules at the corners of the screen based on the control data (movement distance) of the test pattern.

Embodiment 7

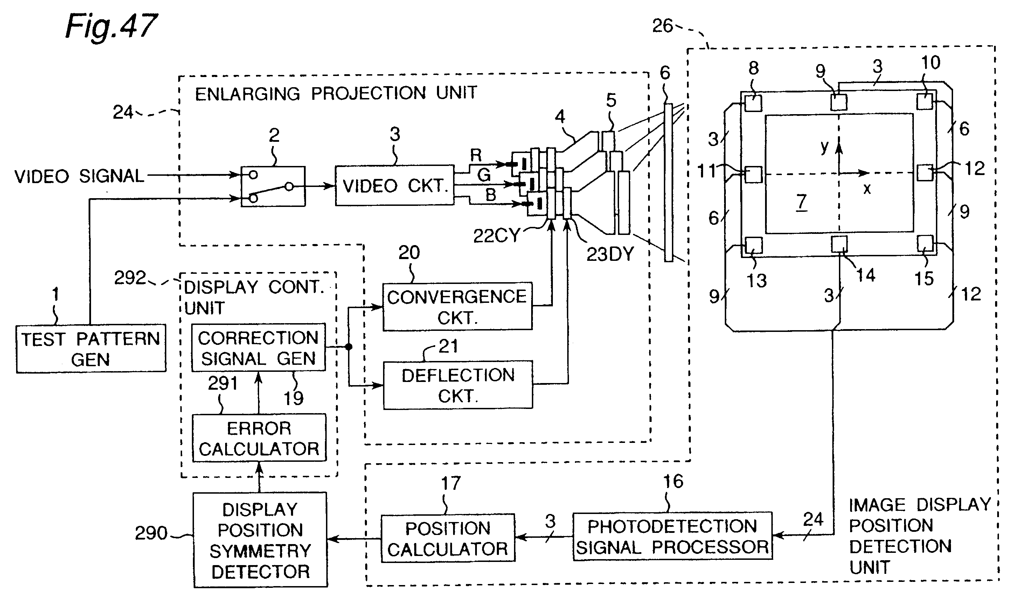

The seventh embodiment of an image display position detection apparatus according to the present invention is described below with reference to Fig. 47, a block diagram of a video projector containing the image display position detection apparatus of the seventh embodiment. Note that like parts in Fig. 47 and Fig. 1 are identified by like reference numbers, and further description thereof is omitted below.

Note that the test pattern generator 1 used for adjusting image distortion is the same as the pattern generator of the first embodiment; the photodetector modules 8 - 15 arrayed at predetermined positions in the overscan area at the periphery of the screen 7, and used to detect the luminance of the displayed test pattern, are the same as those of the first embodiment; and the position calculator 17 for calculating the test pattern display position from the peak-held, A/D converted detection signals output by the photodetection signal processor 16 is the same as the position calculator 17 in the first embodiment. What differs is the addition of a display position symmetry detector 290 for detecting the symmetry of the image distortion to the horizontal (x) and vertical (y) axes from the position coordinates of the test pattern, and predicting therefrom the distortion at the center of the screen 7. The error calculator 291 and correction signal generator 19 then detect image distortion error and apply correction based on the test pattern position calculated by the display position calculator 17.

The operation of the present embodiment is described in detail below. Note that the test pattern generator 1, photodetector modules 8 - 15, photodetection signal processor 16, and position calculator 17 operate as described in the first embodiment above, and further description is therefore omitted below.

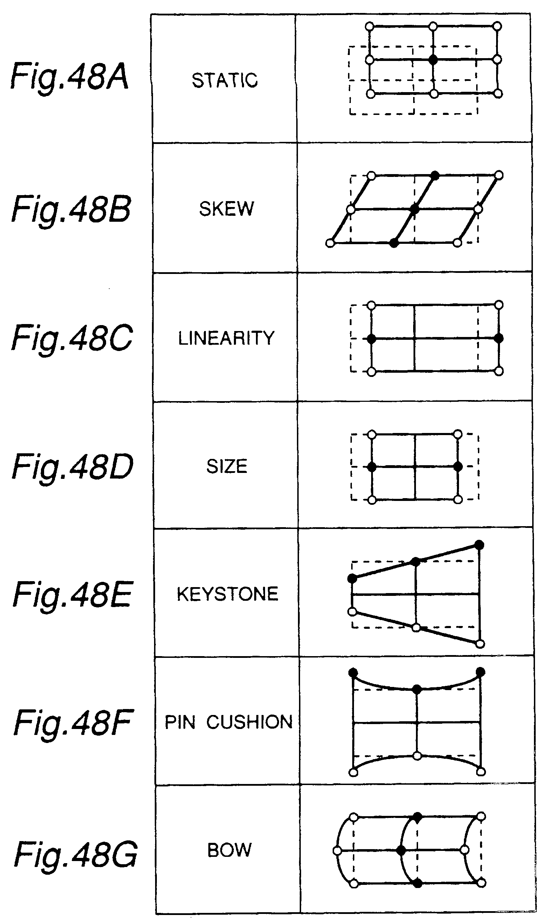

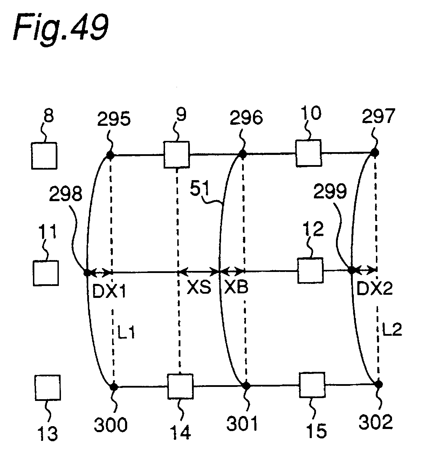

The operation of the display position symmetry detector 290 is described below. Note that the display position symmetry detector 290 and the error calculator 291 are achieved in software. The method of detecting the symmetry of the image distortion to the horizontal (x) and vertical (y) axes from the position coordinates of the test pattern, and predicting therefrom the distortion at the center of the screen 7, is described with reference to Figs. 48A - 48G and 49.

Figs. 48A - 48G show various types of image distortion that can arise due to projection distortion and geomagnetism. In practice, such distortion typically occurs not singly; but in combination. As will be known from Figs. 48A - 48G, distortion in the screen center resulting from image distortion only occurs with static distortion (DC distortion affecting the entire screen) and when bow-shaped distortion occurs. Note, further, that bow distortion is asymmetrical with respect to the vertical axis. It is therefore possible to predict the distortion in the screen center by calculating the bow distortion component and the static distortion component. Because the bow distortion component is asymmetrical to the horizontal (x) and vertical (y) screen axes, the bow distortion can be calculated from the symmetry of the high order image distortion to the horizontal (x) and vertical (y) screen axes. The calculation method is described below.

Fig. 49 shows the test patterns 50 and 51 when bow distortion and static distortion occur. The offset XS at the screen center, which cannot be detected by the photodetector modules 8 - 15 at the screen periphery, is calculated.

Note that while calculation of bow distortion and static distortion in the horizontal direction is described below, distortion in the vertical direction can be calculated by applying the same principle. The test pattern display positions 295 - 302 relative to the photodetector modules 8 - 15 are calculated using the screen coordinates as described previously. Then, based on the calculated position coordinates, the distance DX1 between dotted line L1 and point 298 in Fig. 49, and the distance DX2 between dotted line L2 and point 299, are calculated as the high order distortion component. DX1 and DX2 can be calculated from equations (9) and (10) below where (X1,Y1), (X4,Y4), and (X6,Y6) are the detected display positions 295, 298, and 300; (X3,Y3), (X5,Y5), and (X8,Y8) are the detected display positions 297, 299, and 302.

$$DX1 = \sqrt{(X1\text{-}X4)^2+(Y1\text{-}Y4)^2\text{-}(k(X1\text{-}X4)+m(Y1\text{-}Y4))^2)}$$

$$\text{where } k = \frac{(X6\text{-}X1)}{\sqrt{(X6\text{-}X1)^2+(Y6\text{-}Y1)^2}}$$

$$\text{where } m = \frac{(Y6\text{-}Y1)}{\sqrt{(X6\text{-}X1)^2+(Y6\text{-}Y1)^2}} \tag{9}$$

$$DX2 = \sqrt{(X3\text{-}X5)^2+(Y3\text{-}Y5)^2\text{-}(k(X3\text{-}X5)+m(Y3\text{-}Y5))^2)}$$

$$\text{where } k = \frac{(X8\text{-}X3)}{\sqrt{(X8\text{-}X3)^2+(Y8\text{-}Y3)^2}}$$

$$\text{where } m = \frac{(Y8\text{-}Y3)}{\sqrt{(X8\text{-}X3)^2+(Y8\text{-}Y3)^2}} \tag{10}$$

The average of the calculated high order distortion components DX1 and DX2 is then obtained from equation (11) to calculate the asymmetry of the distortion component, i.e., the bow distortion component XB.

$$XB = (DX1 + DX2)/2 \tag{11}$$

The bow distortion component YB in the vertical direction is calculated from the following equation.

$$YB = (DY1 + DY2)/2 \tag{12}$$

where

$$DY1 = \sqrt{(Y1\text{-}Y2)^2+(X1\text{-}X2)^2\text{-}(k(Y1\text{-}Y2)+m(X1\text{-}X2))^2)}$$

$$\text{where } k = \frac{(Y3\text{-}Y1)}{\sqrt{(Y3\text{-}Y1)^2+(X3\text{-}X1)^2}}$$

$$\text{where } m = \frac{(X3\text{-}X1)}{\sqrt{(Y3\text{-}Y1)^2+(X3\text{-}X1)^2}} \tag{13}$$

While the symmetry of image distortion is calculated by the above equations from the three horizontal test pattern display positions on screen, the high order distortion component can

$$DY2 = \sqrt{(X6\text{-}X7)^2+(Y6\text{-}Y7)^2\text{-}(k(X6\text{-}X7)+m(Y6\text{-}Y7))^2)}$$

$$\text{where } k = \frac{(X8\text{-}X6)}{\sqrt{(X8\text{-}X6)^2+(Y8\text{-}Y6)^2}}$$

$$\text{where } m = \frac{(Y8\text{-}Y6)}{\sqrt{(X8\text{-}X6)^2+(Y8\text{-}Y6)^2}} \tag{14}$$

also be calculated using a least squares method.

The horizontal static component XS is calculated using equation (15) from the display positions (X2,Y2) and (X7,Y7) of points 296 and 301, and the bow distortion component XB calculated from equation (11).

$$XS = (X2 + X7) / 2 + XB \qquad (15)$$

The distortion component XS of the screen enter can be calculated using equation (15).

The vertical static component YS is calculated using equation (16) from the display positions (X4,Y4) and (X5,Y5) of points 298 and 299, and the bow distortion component YB calculated from equation (12).

$$YS = (Y4 + Y5) / 2 + YB \qquad (16)$$

The calculation of image distortion error by the error calculator 291 is described next. The error component of the image distortion can be calculated using the following equations using the symmetry of the image distortion and the display positions of the test pattern detection points.

(Static components)

$$\text{horizontal direction: } XS = (X2 + X7) / 2 + XB \qquad (17)$$

$$\text{vertical direction: } YS = (Y4 + Y5) / 2 + YB \qquad (18)$$

(Skew components)

$$\text{horizontal direction: } (X2 - X7) / 2 + XB \qquad (19)$$

$$\text{vertical direction: } (Y4 - Y5) / 2 + YB \qquad (20)$$

(Linearity components)

$$\text{horizontal direction: } 2 * XS - (X4 + X5) \qquad (21)$$

$$\text{vertical direction: } 2 * YS - (Y2 + Y7) \qquad (22)$$

(Size components)

$$\text{horizontal direction: } (X4 - X5) \qquad (23)$$

$$\text{vertical direction: } (Y2 - Y7) \qquad (24)$$

(Keystone components)

$$\text{horizontal direction: } (X1 - X4) - (X3 - X5) \qquad (25)$$

$$\text{vertical direction: } (Y1 - Y2) - (Y6 - Y7) \qquad (26)$$

(Pincushion components)

$$\text{horizontal direction: } (DX1 - DX2) / 2 \qquad (27)$$

$$\text{vertical direction: } (DY1 - Y2) / 2 \qquad (28)$$

(Bow distortion components)

$$\text{horizontal direction: } XB \qquad (29)$$

$$\text{vertical direction: } YB \qquad (30)$$

Note that DX1, DX2, DY1, DY2, XB, YB, XS, and YS are the values obtained from equations (9) - (14) above. The misconvergence error is calculated next by calculating the convergence error by comparing the R and B test pattern display positions referenced to the previously detected G test pattern display position, for example, and comparing these positions at the on-screen detection points. The correction data is then generated from the calculated error, and supplied to the correction signal generator 19.

The correction signal generator 19 then generates the correction signal, and supplies the correction signal to the convergence circuit 20 and deflection circuit 21 of the enlarging projection unit 24 to automatically correct the image distortion. The correction signal generator 19 is constructed as described in the first embodiment, and further description thereof is omitted below.

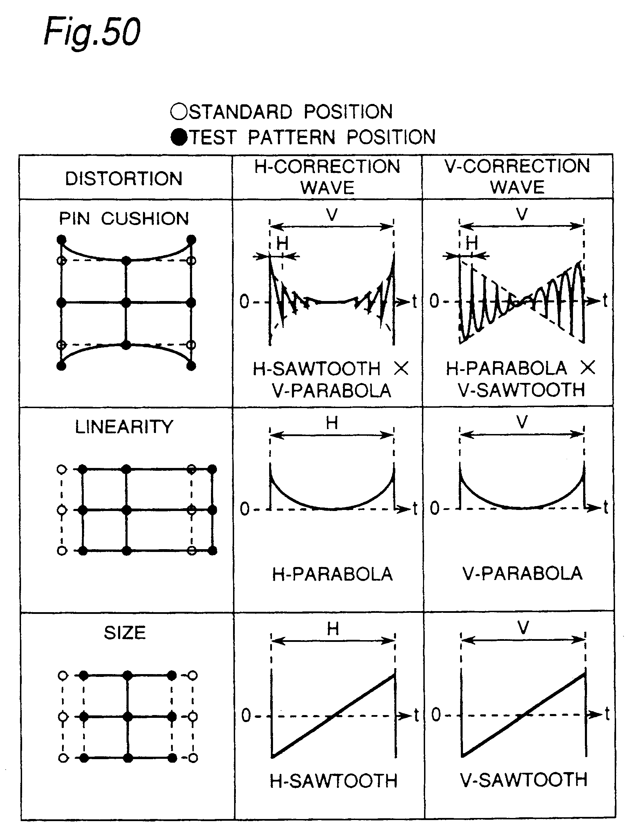

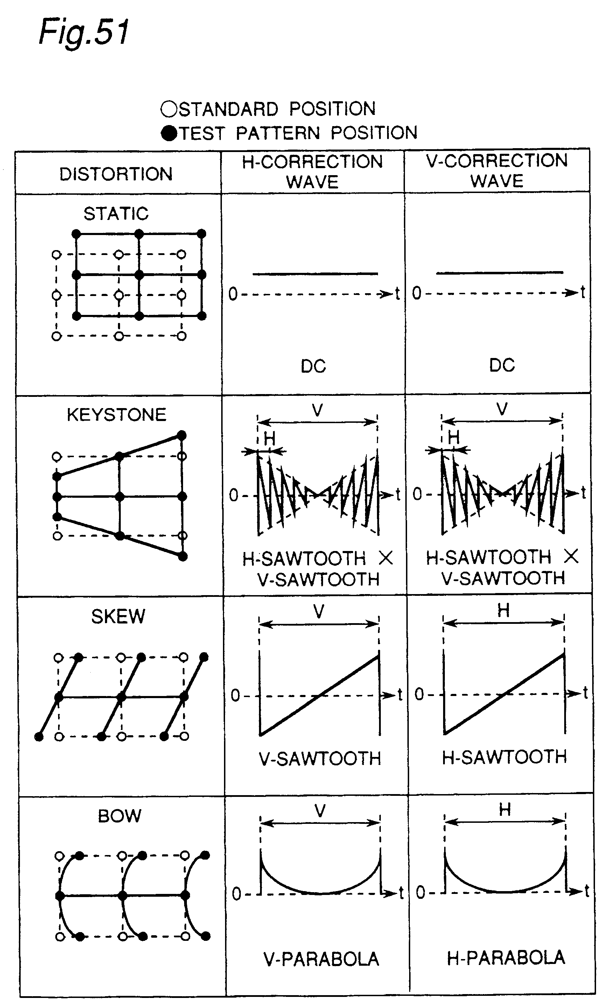

The relationship between the analog correction waveforms and the resulting correction is shown in Figs. 50 and 51. As these figures show, image distortion can be automatically corrected using the correction waveforms shown in Figs. 50 and 51 generated by the correction signal generator 19 by obtaining the test pattern display positions at the screen center and eight points around the screen periphery.

It is therefore possible to correct image distortion with high precision while maintaining normal image display by means of the present embodiment by detecting the symmetry of image distortion and predicting the distortion at the screen center from the display positions of the adjustment test patterns by means of plural photodetector modules arrayed at predetermined positions around the periphery of the display screen.

Embodiment 8

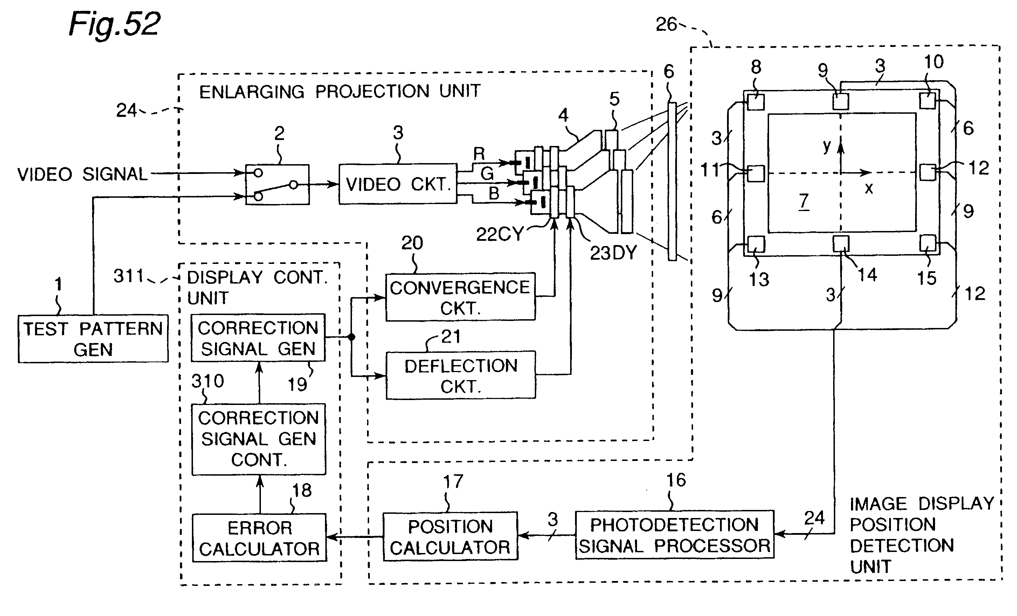

The eighth embodiment of an image display position detection apparatus according to the present invention is described below with reference to Fig. 52, a block diagram of a video projector containing the image display position detection apparatus of the eighth embodiment. Note that like parts in Fig. 52 and Fig. 1 are identified by like reference numbers, and further description thereof is omitted below.

Note that the test pattern generator 1 used for adjusting image distortion is the same as the pattern generator of the first embodiment; the photodetector modules 8 - 15 arrayed at predetermined positions in the overscan area at the periphery of the screen 7, and used to detect the luminance of the displayed test pattern, are the same as those of the first embodiment; and the position calculator 17 for calculating the test pattern display position from the peak-held, A/D converted detection signals output by the photodetection signal processor 16 is the same as the position calculator 17 in the first embodiment.

The correction signal generation controller 310 monitors the output of the error calculator 18, and both holds and supplies the correction data to the correction signal generator 19 when the correction data, i.e., the error value, exceeds a threshold range. The correction signal generator 19 generates the correction signal for correcting image distortion error based on the output of the correction signal generation controller 310, and outputs the correction signal to the convergence circuit 20 and deflection circuit 21 for image distortion correction.

The operation of the present embodiment is described in detail below. Note that the test pattern generator 1, photodetector modules 8 - 15, photodetection signal processor 16, position calculator 17, and error calculator 18 operate as described in the first embodiment above, and further description is therefore omitted below.

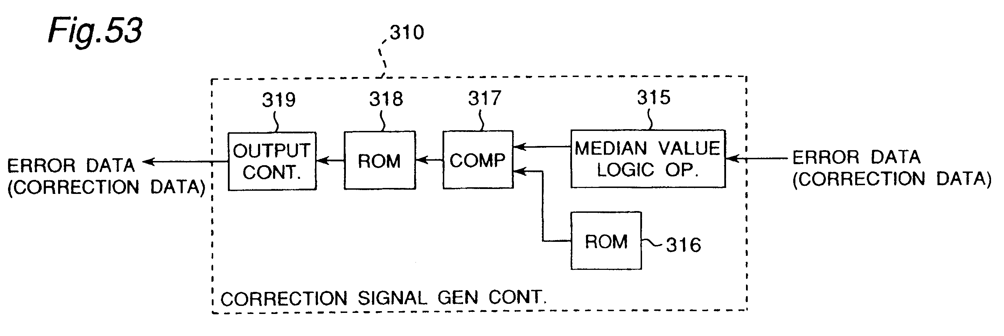

The operation of the correction signal generation controller 310 is described with reference to Fig. 53. As shown in Fig. 53, the correction signal generation controller 310 comprises a median value logic operator 315 for sampling the correction data output by the error calculator 18, i.e., sampling the image distortion error plural times, and obtain the median value; a ROM 316 storing the image distortion error tolerance values; a comparator 317 for comparing the output of the median value logic operator 315 with the content of the ROM 316, and writing the error data to the RAM 318 when the median value exceeds the error tolerance stored in the ROM 316; and an output controller 319 for reading the correction data stored to the RAM 318 and supplying the correction data to the correction signal generator 19. Note that the output controller is a CPU.

During automatic image distortion adjustment, the correction data calculated by the error calculator 18, i.e., the image distortion error, is supplied to the median value logic operator 315. The median value logic operator 315 samples the supplied error data plural times, and calculates the median value. This median value calculation is applied to the image distortion error obtained by the error calculator 18 for each of the photodetector modules 8 - 15 around the screen 7. If the number of error value samplings is N, the median value can be obtained by sorting the input sampling data array, and obtaining the $(N+1)/2$ value from the smallest value towards the larger values.

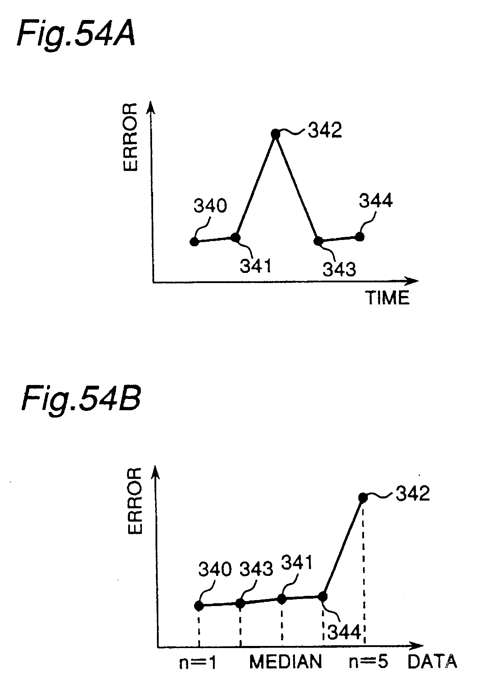

For example, let us assume that the image distortion error data sampled by the median value logic operator 315 is the data shown by the black dots 340 - 344 in Fig. 54A, and the value at dot 342 is a single point resulting from heavy noise or other error caused, for example, by vibration of the integrated projector set. If this impulse point 342 is used, the error will be falsely determined to be extremely high, and adjustment errors will occur. Therefore, to eliminate this single point 342, the input data series 340 - 344 is sorted from low to high as shown in Fig. 54B, and the median value 341 at $(N+1)/2$ from the low end is selected and used as the image distortion error value. This error median and the error tolerance values stored to the ROM 316 are then compared for each component of image distortion error, and the correction data (error data) for the error median is written to the downstream RAM 318 only when the error median exceeds the tolerance value.

The content of the RAM 318 is then read by the output controller 319 and supplied to the correction signal generator 19, and the feedback loop for automatic image distortion adjustment becomes ON.

When the error does not exceed the threshold value, the feedback loop is OFF, and the last refreshed correction data is supplied to the correction signal generator 19.

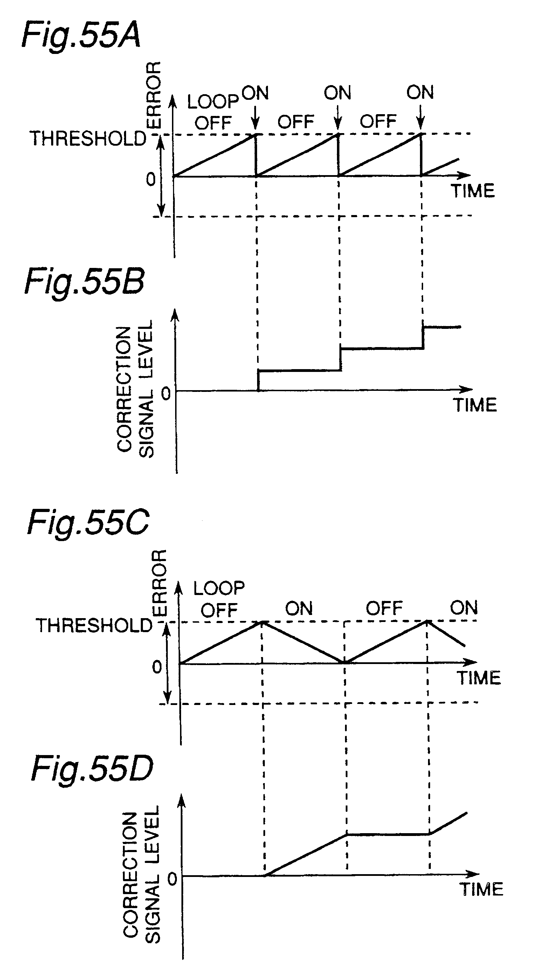

The operation turning this feedback loop ON/OFF is described with reference to Figs. 55A - 55D. Figs. 55A - 55D illustrate the correction when image distortion error gradually increases with time due to temperature-related deflection circuit drift or CRT gun center drift. Figs. 55A and 55B show the image distortion error and correction signal when correction of image distortion error is accomplished suddenly by feedback control, and Figs. 55C and 55D show the same when correction of image distortion error is gradual.

As shown in Fig. 55A, when feedback control is applied suddenly at the timing indicated by the arrow when the image distortion error exceeds the tolerance range, the feedback loop is ON and the output controller 319 reads and supplies the correction data from the RAM 318 directly to the correction signal generator 19. As shown in Fig. 55B, the feedback control value is held when the loop is OFF, and the correction signal changes in steps. When feedback control is thus suddenly applied, the on-screen display position of the image changes suddenly, and the correction operation is conspicuous to the viewer when accomplished while displaying a normal video signal (e.g., a TV signal). Gradual feedback control is therefore used in such cases as shown in Figs. 55C and 44D.

During gradual feedback control the correction signal rises gradually as shown in Fig. 55D because the output controller 319 gradually increases the correction data supplied to the correction signal generator 19 from 0 (zero) to the value stored in the RAM 318. The image distortion error thus changes gradually as shown in Fig. 55C, and the correction operation is less conspicuous on screen.

The operation of the correction signal generator 19 is as described in the first embodiment above, and further description thereof is omitted below.

It is to be noted that feedback loop ON/OFF control is accomplished in this embodiment while monitoring the output of the error calculator 18, but this control can also be achieved by monitoring the output of the position calculator 17 and supplying the output to the error calculator 18. Furthermore, if the gradual control shown in Fig. 55D is accomplished by detecting scene changes in the video signal and applied when the scene changes, the correction operation will be even less conspicuous. Note, further, that video signal scene changes can be detected by detecting the difference between video frames.

By thus turning the automatic adjustment feedback loop ON only when the median value of plural calculated image distortion error values exceeds an error threshold value, misoperation caused by noise or vibration to the projector set can be reduced during, for example, constant or ad hoc automatic adjustment while displaying a normal video image. Because the feedback loop becomes ON only when error occurs, automatic adjustment that is more efficient and precise than occasional adjustment applied at a known time interval can also be achieved. By also achieving gradual feedback control, the correction operation is not as conspicuous on screen.

## Embodiment 9

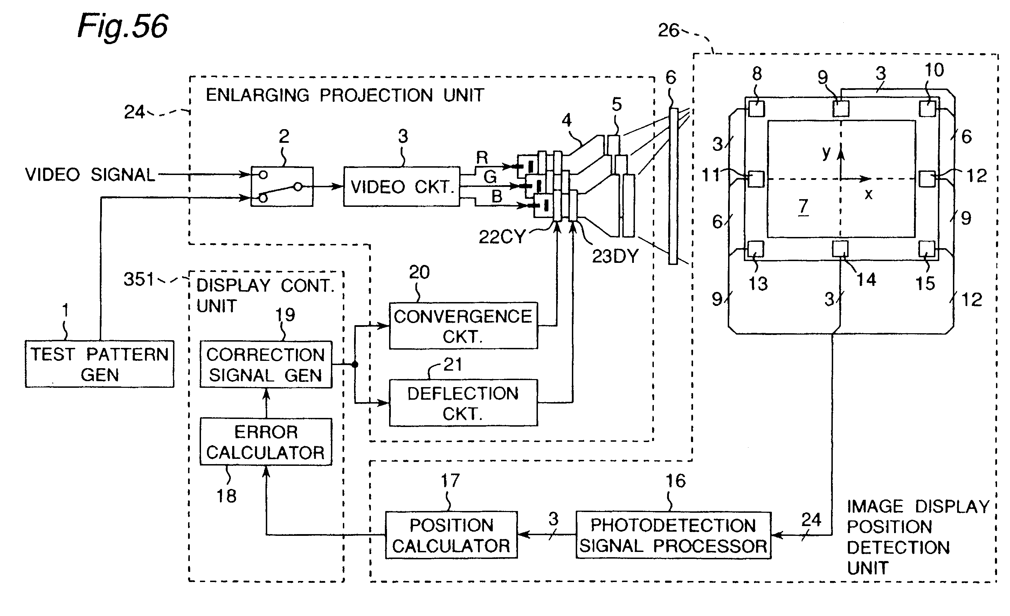

The ninth embodiment of an image display position detection apparatus according to the present invention is described below with reference to Fig. 56, a block diagram of a video projector containing the image display position detection apparatus of the ninth embodiment. Note that like parts in Fig. 56 and Fig. 1 are identified by like reference numbers, and further description thereof is omitted below.

Note that the test pattern generator 1 used for adjusting image distortion is the same as the pattern generator of the first embodiment; the photodetector modules 8 - 15 arrayed at predetermined positions in the overscan area at the periphery of the screen 7, and used to detect the luminance of the displayed test pattern, are the same as those of the first embodiment; and the position calculator 17 for calculating the test pattern display position from the peak-held, A/D converted detection signals output by the photodetection signal processor 16 is the same as the position calculator 17 in the first embodiment.

The correction signal generator 350 generates correction signals for the screen periphery and the overall screen based on the image distortion error calculated by the error calculator 18. The correction signal generator 350 then outputs to the convergence circuit 20 and deflection circuit 21 for image distortion correction.

The operation of the present embodiment is described in detail below. Note that the test pattern generator 1, photodetector modules 8 - 15, photodetection signal processor 16, position calculator 17, and error calculator 18 operate as described in the first embodiment above, and further description is therefore omitted below.

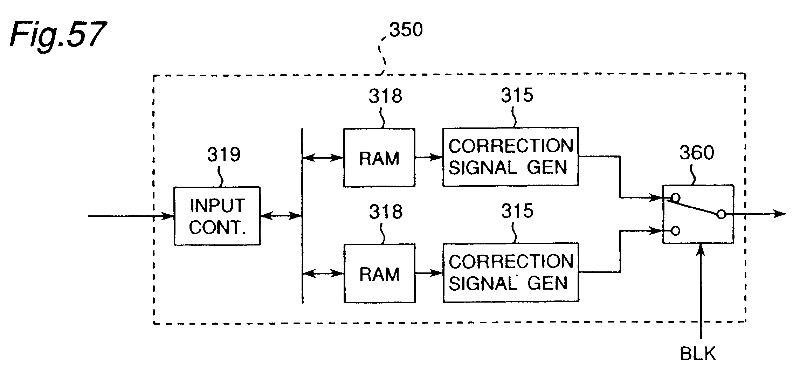

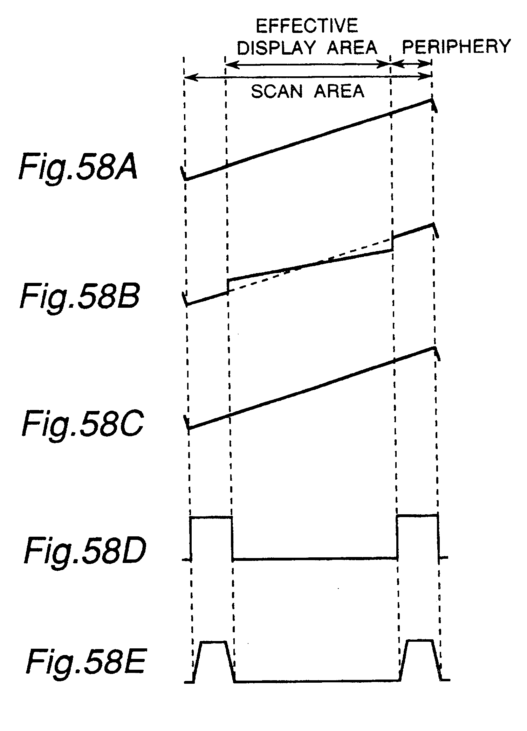

The operation of the correction signal generator 350 is described below with reference to the block diagram thereof in Fig. 57. As shown in Fig. 57, the correction signal generator 350 comprises an input controller 355, constituting a CPU, for reading and writing the correction data output by the error calculator 18 to the RAMs 356 and 357 described below; a RAM 356 for storing the correction data of the screen periphery; a RAM 357 for storing the correction data for the overall screen; a first correction signal generator 358 for generating the screen periphery correction signal based on the output from the RAM 356; a second correction signal generator 359 for generating the overall screen correction signal based on the output from the RAM 357; and a selector circuit 360 for selecting and outputting the correction signal generated by the first or second correction signal generator 358 or 359. The operation of the correction signal generator 350 is described below with reference to Figs. 57 and 58A - 58E.

The one RAM 357 shown in Fig. 57 stores, for example, the correction data for the initial adjustment performed at the factory. Automatic adjustment of image distortion is then applied to correct image distortion resulting from geomagnetism or other factors after factory shipping.

After first adjusting image distortion around the screen periphery, adjustment of the overall screen can be made less conspicuous by basing the adjustment on the correction data from the screen periphery adjustment. When image distortion occurs, the correction data from the error calculator 18 is written only to RAM 356 by the input controller 355. The correction signal for the screen periphery output by the first correction signal generator 358 is switched by the selector circuit 360 based on the output from the second correction signal generator 359 and the blanking (BLK) signal.

For example, if the amplitude in the horizontal direction is corrected, the signal output from the first correction signal generator 358 will be a sawtooth wave as shown in Fig. 58A. This signal is supplied to the selector circuit 360, the output of the first correction signal generator 358 is reduced by the blanking signal to only the signal component corresponding to the screen periphery as shown in Fig. 58B, and the correction signal in the effective screen area does not change during the correction operation; the image display position therefore does not change. When error essentially disappears and the correction operation is completed, the input controller 355 reads the screen periphery correction data stored to the RAM 356, and copies the data to the other RAM 357. The outputs from the first correction signal generator 358 and the second correction signal generator 359 are thus equal, the output from the selector circuit 360 is as shown in Fig. 58C, and the overall screen is corrected.

While the operation using a horizontal sawtooth wave controlling the amplitude in the horizontal direction is described by way of example above using Figs. 58A - 58C, it is also possible to generate a DC potential correction signal as shown in Fig. 58D and correct convergence at the periphery only. In general the signal bandwidth of the convergence circuit 20 and deflection circuit 21 is narrow, and it is difficult to obtain a sudden rise and fall characteristic as shown in Figs. 58D and 58E. By controlling the generation timing of the correction signal as shown in Fig. 58E, however, correction of the periphery can be achieved without disturbing the images in the effective screen area. By switching from screen periphery to overall screen correction at scene changes in the video signal, the correction operation can be made even less conspicuous.

By thus adjusting the overall screen convergence and correcting geometric distortion or misconvergence after Completing convergence control in the detection areas of the photodetector elements arrayed at the screen periphery, stable, high precision automatic adjustment can be achieved without disturbing the images in the effective screen area.

It is to be noted that while the preceding embodiments have been described with reference to an image display apparatus using a CRT as a means of simplifying the description, it will be obvious that the present invention is also effective with other types of display apparatuses. Furthermore, while an integrated video projector system has been used as the enlarging projection apparatus, it will also be obvious that discrete component enlarging projection apparatuses and direct view type display apparatus can also be used.

The photodetector elements and photodetector modules have also been described as being disposed near the imaging area but outside the effective screen area, but these may also be disposed within the effective screen area or nonimaging area. The photodetector elements and photodetector modules have also been described as being disposed outside the effective screen area at eight locations (the corners and middle positions forming a cross), but these components can likewise be disposed in other positions and in another number. The photodetector modules have also been described as comprising 1, 2, or 3 photodetector elements, but shall not be limited to these numbers.

Furthermore, the invention has been described with application to image distortion such as geometric distortion and misconvergence, but will be obviously applicable to luminance correction and other correction operations. Discrete test patterns for the various colors have also been described as being sequentially displayed and detected, but can also be simultaneously displayed and detected by providing color filters over the photodetector modules.

Test signals with a linear pattern symmetrical to the peak or a Gaussian characteristic have also be used above, but other test signals may be used insofar as the luminance level varies.

Furthermore, the test pattern display position is controlled by means of the test pattern generator in the third, fifth, and sixth embodiments above, but the display position can also be controlled by means of the video signal phase or raster shifting by the deflection circuit.

The display position calculation is also accomplished in hardware in the first, second, and sixth through ninth embodiments above, but software processing can be alternatively used.

Furthermore, the first and fourth embodiments can be combined with the method of the fourth embodiment used for rough adjustment and the method of the first embodiment used for fine adjustment.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. An image display position detection apparatus for detecting a display position of a test pattern displayed in a display screen comprising:

   plural photodetector modules (8-15), each comprising an array of plural photodetector elements (52, 53, 54), disposed at known positions of the display screen (7);

   a test pattern generator (1) for generating a test pattern for image distortion adjustment;

   a projection means (4, 5, 6) for projecting said test pattern on said screen; and

   a position calculating means (26, 17) for obtaining the test pattern display position as absolute coordinates on the screen from the output ratio of the photodetector elements in the photodetector modules.

2. An image display position detection apparatus according to Claim 1, wherein said position calculating means obtains the test pattern display position as absolute coordinates on the screen by assigning absolute display screen coordinates to each of the photodetector elements in the photodetector module, and weighting the outputs of said photodetector elements using the assigned coordinates.

3. An image display position detection apparatus according to Claim 1, wherein said test pattern generator generates a linear belt pattern having a peak luminance at a mid of width thereof, and said width greater than twice the interval between the photodetector elements measured in a distance perpendicular to the linear belt pattern.

4. An image display position detection apparatus for detecting the display position of a test pattern displayed in a display screen comprising:

   plural photodetector modules (8-15), each comprising an array of plural photodetector elements (52, 53, 54), disposed at known positions of the display screen;

   a test pattern generator (1) for generating a test pattern for image distortion adjustment, said test pattern having a size so as to cover only a portion of said photodetector module (Fig. 21);

   a projection means (4, 5, 6) for projecting said test pattern on said screen;

   a minimum value calculator (112) for calculating a minimum value of the outputs of the plural photodetector elements;

   a subtraction means (113, 114, 115) for subtracting said minimum value from the outputs from said plural photodetector elements; and

   a position calculating means (111, 17) for obtaining the test pattern display position as absolute coordinates on the screen from the outputs of the subtraction means corresponding to the photodetector elements.

5. An image display position detection apparatus according to Claim 4, wherein said position calculating means obtains the test pattern display position as absolute coordinates on the screen by assigning absolute display screen coordinates to each of the photodetector elements in the photodetector module, and weighting the output ratio of the photodetector elements using the assigned coordinates.

6. An image display position detection apparatus according to Claim 4, wherein said test pattern generator generates a linear belt pattern having a peak luminance at a mid of width thereof, and said width greater than twice the interval between the photodetector elements measured in a distance perpendicular to the linear belt pattern.

7. An image display position detection apparatus for detecting a display position of a test pattern displayed in a display screen comprising:

   plural photodetector modules (122-129), each comprising a photodetector element, disposed at known positions of the display screen;

   a test pattern generator (120) for generating a test pattern in at least first and second cycles;

   a projection means (4, 5, 6) for projecting said test pattern on said screen such that the test patterns generated during said first and second cycles are shifted by a predetermined amount; and

   a position calculating means (130) for obtaining the test pattern display position as absolute coordinates on the screen from the ratio of outputs from the photodetector element in said first and second cycles.

8. An image display position detection apparatus according to Claim 7, wherein said position calculating means calculates the test pattern display position as absolute coordinates on the screen by weighting the output of said photodetector element using said amount of shift.

9. An image display position detection apparatus according to Claim 7, wherein said test pattern generator generates a linear belt pattern having a peak luminance at a mid of width thereof, and said amount of shift being less than a half of said width.

10. An image display position detection apparatus for detecting a display position of a test pattern displayed in a display screen comprising:

plural photodetector modules (165-172), each comprising an array of plural photodetector elements (200-202), disposed at known positions of the display screen;

a test pattern generator (164) for generating a test pattern for image distortion adjustment, said test pattern having a size so as to cover completely said photodetector module, and said test pattern having a predetermined inclination of luminance;

a projection means (4, 5, 6) for projecting said test pattern on said screen; and

a position calculating means (173) for obtaining the test pattern display position as absolute coordinates on the screen from the output ratio of the photodetector elements in the photodetector modules.

11. An image display position detection apparatus according to Claim 10, wherein said position calculating means calculates the test pattern display position as absolute coordinates on the screen based on the luminance inclination and the luminance value of the test pattern detected by said plural photodetector elements.

12. An image display position detection apparatus according to Claim 10, wherein said position calculating means calculates the test pattern display position as absolute coordinates on the screen based on the luminance inclination and the luminance value of the test pattern detected by said plural photodetector elements, with reference to a maximum luminance value of the test pattern.

13. An image display position detection apparatus according to Claim 10, wherein the test pattern generator generates a pattern having a peak luminance at a mid of width thereof.

14. An image display position detection apparatus according to Claim 10, wherein said position calculating means previously adjusts the all photodetector elements to have the same low output levels when a predetermined dark flat pattern is projected, and the same high output levels when a predetermined bright flat pattern is projected.

15. An image display position detection apparatus for detecting a display position of a test pattern displayed in a display screen comprising:

plural photodetector modules (212-219), each comprising a photodetector element, disposed at known positions of the display screen;

a test pattern generator (210) for generating a test pattern for image distortion adjustment, said test pattern having a size so as to cover completely said photodetector module, and said test pattern having a predetermined inclination of luminance, said test pattern being generated in at least first and second cycles;

a projection means (4, 5, 6) for projecting said test pattern on said screen such that the test patterns generated during said first and second cycles are shifted by a predetermined amount; and

a position calculating means (220) for obtaining the test pattern display position as absolute coordinates on the screen from the output ratio of the photodetector elements in said first and second cycles.

16. An image display position detection apparatus according to Claim 15, wherein said position calculating means calculates the test pattern display position as absolute coordinates on the screen based on the luminance inclination and the luminance value of the test pattern detected by said photodetector element during said first and second cycles.

17. An image display position detection apparatus according to Claim 15, wherein said position calculating means calculates the test pattern display position as absolute coordinates on the screen based on the luminance inclination and the luminance value of the test pattern detected by said photodetector element, with reference to a maximum luminance value of the test pattern.

18. An image display position detection apparatus according to Claim 15, wherein the test pattern generator generates a pattern having a peak luminance at a mid of width thereof.

19. An image display position detection apparatus according to Claim 10, wherein said position calculating means previously adjusts the all photodetector elements to have the same low output levels when a predetermined dark flat pattern is projected, and the same high output levels when a predetermined bright flat pattern is projected.

**20.** An image correction apparatus correcting a display position of a test pattern displayed in a display screen comprising:

a first group of plural photodetector modules (9, 14, 11, 12) disposed near two perpendicular axes of said display screen and symmetrically located approximately on the two perpendicular axes;

a second group of plural photodetector modules (8, 10, 13, 15) disposed at predetermined positions around said display screen;

a test pattern generator (120) for generating a test pattern for image distortion adjustment;

a projection means (4, 5, 6) for projecting said test pattern on said screen;

a position calculating means (260) for calculating the test pattern display position according to the signals received by the photodetector modules; and

a display position control means (18, 19) for controlling the test pattern display position on the screen, said display position control means sequentially controlling the test pattern display position such that the test pattern is first detected by said first group of photodetector modules, and then sequentially the test pattern is detected by said second group of photodetector modules, resulting in complete correction of the test pattern to be in alignment with said first and second group of photodetector modules.

**21.** An image correction apparatus according to Claim 20, wherein said display control means calculates the image distortion error from the output of the position calculating means, and controls the correction signal for image distortion error.

**22.** An image correction apparatus according to Claim 20, wherein said each photodetector module comprises an array of plural photodetector elements, and wherein said position calculating means comprises means for assigning absolute screen coordinates to each of the photodetector elements, and means for weighting outputs of said photodetector elements by the assigned screen coordinates to calculate the test pattern display position.

**23.** An image correction apparatus according to Claim 20, wherein said test pattern generator generates a linear belt pattern having a peak luminance at a mid of width thereof, and said width greater than twice the interval between the photodetector elements measured in a distance perpendicular to the linear belt pattern.

**24.** An image correction apparatus for correcting a display position of a test pattern displayed in a display screen comprising:

a first group of plural photodetector modules (9, 11, 12, 14) disposed near two perpendicular axes of said display screen and symmetrically located approximately on the two perpendicular axes;

a second group of plural photodetector modules (8, 10, 13, 15) disposed at predetermined positions around said display screen;

a test pattern generator (1) for generating a test pattern for image distortion adjustment;

a projection means (4, 5, 6) for projecting said test pattern on said screen;

a position calculating means (17) for calculating the test pattern display position according to the signals received by the photodetector modules; and

a position symmetry detection means (290) for detecting the symmetry of image distortion to the two perpendicular axes based on the output of the position calculating means; and

a display control means (291, 19) for controlling said projection means based on the output of the position symmetry detection means.

**25.** An image correction apparatus according to Claim 24, wherein the display control means calculates the image distortion error from the output of the position calculating means, and controls the correction signal for image distortion error.

**26.** An image correction apparatus according to Claim 24, wherein the position symmetry detection means detects the symmetry of high order geometric distortion to the two perpendicular axes, and predicts the distortion in the display screen center.

**27.** An image correction apparatus for correcting a display position of a test pattern displayed in a display screen comprising:

photodetection means (8-15) for detecting a test pattern for adjusting image distortion in a display apparatus;

position calculating means (17) for calculating the test pattern display position according to the signals received by the photodetection means; and

a display control means (18, 310, 19) for controlling the display apparatus based on the output of the position calculation means when the image distortion error exceeds a threshold value.

**28.** An image correction apparatus according to Claim 27, wherein said display control means calculates the image distortion error from the output of the position calculating means, and corrects the image distortion of the display apparatus when the image distortion error exceeds a threshold value.

**29.** An image correction apparatus according to Claim 27, wherein the display control means calculates the image distortion error from the output of the position calculating means, and corrects the image distortion of the display apparatus when the image distortion error exceeds a threshold value, said correction signal being divided in time domain for transfer to the display apparatus.

**30.** An image correction apparatus according to Claim 27, wherein the display control means calculates the image distortion error from the output of the position calculating means, and corrects the image distortion of the display apparatus when the image distortion error exceeds a threshold value, said image distortion being corrected when the image scene changes.

**31.** An image correction apparatus according to Claim 27, wherein the display control means calculates the image distortion error from the output of the position calculating means, and corrects the image distortion of the display apparatus when the image distortion error exceeds a threshold value, said correction signal being divided in time domain for transfer to the display apparatus when the image scene changes.

**32.** An image correction apparatus according to Claim 27, wherein the display control means calculates the image distortion error from the output of the position calculating means, and corrects the image distortion of the display apparatus when the median value of plural calculated image distortion error values exceeds a threshold value.

**33.** An image correction apparatus according to Claim 27, wherein the display control means calculates the image distortion error from the output of the position calculating means, and corrects the image distortion of the display apparatus when the average value of plural calculated image distortion error values exceeds a threshold value.

**34.** An image correction apparatus for detecting a display position of a test pattern for image distortion adjustment and correcting any image distortion when an image is displayed to a display screen, comprising:

plural photodetection means (8-15) disposed at known positions around the image display screen;

a test pattern generator (1) for generating a test pattern for image distortion adjustment;

a projection means (4, 5, 6) for projecting said test pattern on said screen;

a display position calculating means (17) for calculating the test pattern display position from the output of the photodetection means;

a peripheral area correction signal generating means (358) for generating the correction signal only in the peripheral area of the display screen according to the output of the display position calculating means; and

an overall screen correction signal generating means (359) for generating the correction signal for the overall display screen based on the results of image distortion correction in the peripheral area by the peripheral area correction signal generating means.

**35.** An image correction apparatus according to Claim 34, wherein said photodetection means comprises an array of plural photodetector elements, and wherein said position calculating means comprises means for assigning absolute screen coordinates to each of the photodetector elements, and means for weighting the output ratios of the photodetector elements by the assigned screen coordinates to calculate the test pattern display position.

**36.** An image correction apparatus according to Claim 34, wherein said test pattern generator generates a linear belt pattern having a peak luminance at a mid of width thereof, and said width greater than twice the interval between the photodetector elements measured in a distance perpendicular to the linear belt pattern.

## Fig.1

EP 0 703 714 A2

# Fig.2

8~10

7~

13~15

6

27

| ENLARGING PROJECTION UNIT | ~24 |

| DISPLAY CONT. UNIT | ~25 |

| IMAGE DISPLAY POSITION DETECTION UNIT | ~26 |

Fig.3

TEST PATTERN GEN

EP 0 703 714 A2

Fig.4A  H SYNC

Fig.4B  CLOCK

Fig.4C  H-COUNTER

Fig.4D  ROM33 ADDRESS

Fig.4E  ROM33

Fig.4F  COMP 34

EP 0 703 714 A2

*Fig.4G*

V SYNC

*Fig.4H*

H SYNC

*Fig.4I*

V-COUNTER    0   1   2   3   ---   ---   ---   260   261   262   ---   ---   ---   520   521   523   524   0

*Fig.4J*

ROM37
ADDRESS    0     1     2     0

*Fig.4K*

ROM37    2     261     521     2

*Fig.4L*

COMP 38

Fig.5A

51 TEST PATTERN

50 TEST PATTERN

Fig.5B

V—SCAN DIRECTION

LUMI.

LUMI.

H—SCAN DIRECTION

Fig.5C

LUMI.

H— / V—SCAN DIRECTION

## Fig.6

V-SCAN (y)
DIRECTION

8

52

53

54

(x)

H-SCAN
DIRECTION

## Fig.7

Vcc  Vcc  Vcc

52  53  54

PEAK HOLD CKT.

59

60a  61  60b  68

A / D

3

MPX

55

56  57

62  63  64  65

3×8

66

PEAK HOLD CKT.

69

A / D

67

PEAK HOLD CKT.

70

A / D

PHOTODETECTION SIGNAL PROCESSOR

16

*Fig.8A*

VOLTAGE

V-SCAN PERIOD

$V_P$

TIME

*Fig.8B*

VOLTAGE

$V_P$

TIME

## Fig.9

POSITION CALCULATOR

FROM 68 Zn →

FROM 69 Zn+1 →

FROM 69 Zn+2 →

71
COEFF ROM MULTIPLIER

72
COEFF ROM MULTIPLIER

73
COEFF ROM MULTIPLIER

74
ADDER

75
ADDER

76
DIVIDER

→ POSITION SIGNAL

~ 17

*Fig.10A*

*Fig.10B*

*Fig.11*

$(x_a,y_a)$      $(x_b,y_b)$      $(x_c,y_c)$

$(x_1,y_1)$      $(x_2,y_2)$      $(x_3,y_3)$

$(x_d,y_d)$      $(x_e,y_e)$

$(x_4,y_4)$      $(x_5,y_5)$

$(x_f,y_f)$      $(x_g,y_g)$      $(x_h,y_h)$

$(x_6,y_6)$      $(x_7,y_7)$      $(x_8,y_8)$

*Fig.12*

FROM 18

SERIAL DATA GEN — 95

CORRECTION WAVEFORM GEN — 82

H SYNC — 80

V SYNC — 81

WF1  83 — D/A
WF2 — D/A — 89
WF3  84 — D/A
WF4 — D/A — 90
WF5  85 — D/A
WF6 — D/A — 91
WF7  86 — D/A
WF8 — D/A — 92
WF9  87 — D/A
WF10 — D/A — 93
WF11  88 — D/A
WF12 — D/A — 94

96

97

*Fig.13*

FROM 95

FROM 82

83

S R — 83a

D/A — 83b

83c

TO

TO 84

| | | | |
|---|---|---|---|
| Fig.14A | WF1 | H-SAWTOOTH WAVE | |
| Fig.14B | WF2 | H-PARABOLIC WAVE | |
| Fig.14C | WF3 | V-SAWTOOTH WAVE | |
| Fig.14D | WF4 | V-PARABOLIC WAVE | |
| Fig.14E | WF5 | H-SAWTOOTH WAVE × V-SAWTOOTH WAVE | |
| Fig.14F | WF6 | H-PARABOLIC WAVE × V-SAWTOOTH WAVE | |
| Fig.14G | WF7 | H-SAWTOOTH WAVE × V-PARABOLIC WAVE | |
| Fig.14H | WF8 | DC | |

| | | | |
|---|---|---|---|
| *Fig.14I* | WF9 | H-SINE WAVE (LEFT HALF) | H, 0, t |
| *Fig.14J* | WF10 | H-SINE WAVE (RIGHT HALF) | H, 0, t |
| *Fig.14K* | WF11 | V-SINE WAVE (TOP HALF) | V, 0, t |
| *Fig.14L* | WF12 | V-SINE WAVE (BOTTOM HALF) | V, 0, t |

Fig. 15A

Fig. 15B

Fig. 15C

*Fig.16A*

TEST PATTERN

a   b   c

d   e   f

g   h   i

*Fig.16B*

TEST PATTERN

a

d

g   h   i

*Fig.16D*

a   b   c

TEST PATTERN

f

i

*Fig.16C*

TEST PATTERN

b

d   e   f

h

*Fig.16E*

a   c

TEST PATTERN

e

g   i

## Fig.17A

## Fig.17B

Fig.18

## Fig.19

## Fig.20

*Fig.21A*

LUMI.

Zn+1,Zn+2

Zn EXTRANEOUS
LIGHT

H-SCAN
DIRECTION(X)

*Fig.21B*

EXTRANEOUS
LIGHT

~117

52  53  54

H-SCAN
DIRECTION

*Fig.21C*

(%)

100

80

60

RELATIVE
SENSITIVITY

40

20

0

120 80 40  0  40 80 120
(DEG)

## Fig.22

ENLARGING PROJECTION UNIT

VIDEO SIGNAL

2

3
VIDEO CKT.

R
G
B

4

5

6

22CY

23DY

132

122  123  3  124

3

125

6

126

7

y

x

9

127

3

128  129

12

25
DISPLAY CONT. UNIT

19
CORRECTION SIGNAL GEN

20
CONVERGENCE CKT.

21
DEFLECTION CKT.

120
TEST PATTERN GEN

18
ERROR CALCULATOR

121
DISPLAY POSITION CONTROL

130
POSITION CALCULATOR

3

16
PHOTODETECTION SIGNAL PROCESSOR

24

IMAGE DISPLAY POSITION DETECTION UNIT

EP 0 703 714 A2

Fig.23

TEST PATTERN GEN

EP 0 703 714 A2

## Fig.24

Fig.25A — H SYNC
Fig.25B — CLOCK
Fig.25C — H-COUNTER 134
Fig.25D — ROM136
Fig.25E — ADDER137 (DH=0)
Fig.25F — COMP138
Fig.25G — COUNTER141 RESET
Fig.25H — COUNTER141 QA
Fig.25I — COUNTER141 QB
Fig.25J — COUNTER141 QC
Fig.25K — COUNTER141 ENB
Fig.25L — ADDER137 (DH=−1)
Fig.25M — COMP138
Fig.25N — COUNTER141 QC

EP 0 703 714 A2

## Fig.26A

161 TEST PATTERN
160 TEST PATTERN
122 123 124
125 126
127 128 129
7

## Fig.26B

160
161
V−SCAN DIRECTION
LUMI.
LUMI.
H−SCAN DIRECTION

## Fig.26C

LUMI.
H− / V−SCAN DIRECTION

## Fig.27

LUMI. LEVEL

SHIFT

BEFORE SHIFT Z0,
AFTER SHIFT Z1

SHIFT AMOUNT M

X0

X

H−SCAN
DIRECTION

160

122

SHIFT

Fig.28

ENLARGING PROJECTION UNIT

IMAGE DISPLAY POSITION DETECTION UNIT

PHOTODETECTION SIGNAL PROCESSOR

POSITION CALCULATOR

VIDEO CKT.

CONVERGENCE CKT.

DEFLECTION CKT.

DISPLAY CONT. UNIT

CORRECTION SIGNAL GEN

ERROR CALCULATOR

TEST PATTERN GEN

VIDEO SIGNAL

## Fig.29

TEST PATTERN GEN 164

H-SYNC → PLL 180 → [CLK / RES] H-ADDRESS COUNTER 181 → ROMa 183

V-SYNC → [CLK / RES] V-ADDRESS COUNTER 182 → ROMb 184

→ ROMc 185

CONT. SIGNAL → MPX 186 → D/A 187 → LPF 188 →

EP 0 703 714 A2

Fig.30A

Fig.30B

Fig.30C

Fig.30D

Fig.30E

Fig.30F

Fig.30G

*Fig.31A*

165 190  166 191  167 192

168
193

169
194

170
195

172
197

171 196

*Fig.31B*

LUMI. LEVEL

x/y

## Fig.32A

## Fig.32B

EP 0 703 714 A2

Fig.33A

Fig.33B

Fig.33C

Fig.34A

Fig.34B

Fig.34C

Fig.34D

**Fig.35**

ENLARGING PROJECTION UNIT

VIDEO SIGNAL → 2 → VIDEO CKT. 3

R, G, B → 22CY, 23DY → 4, 5, 6

DISPLAY CONT. UNIT 25

TEST PATTERN GEN 210

DISPLAY POSITION CONTROL — 211

CORRECTION SIGNAL GEN 19

ERROR CALCULATOR 18

CONVERGENCE CKT. 20

DEFLECTION CKT. 21

POSITION CALCULATOR 220

PHOTODETECTION SIGNAL PROCESSOR 16

IMAGE DISPLAY POSITION DETECTION UNIT

222, 212, 213, 3, 214, 215, 216, 217, 218, 219, 6, 9, 12, 7

EP 0 703 714 A2

## Fig.36

EP 0 703 714 A2

## Fig.37

*Fig.38A*    H—SYNC                                        TIME

*Fig.38B*    RESET

*Fig.38C*    ROM 230

*Fig.38D*    DELAYED
             RESET

*Fig.38E*    ROM 230

## Fig.39A

212 250     213 251     214 252

215
253

216
254

217
255

219
257

218 256

## Fig.39B

LUMI. LEVEL

x/y

*Fig.40A*

*Fig.40B*

*Fig.41A*

212

$y_0$

$x_0$

LUMI. LEVEL

$V_R$

(x)

H-SCAN DIRECTION

*Fig.41B*

250

212

$y_0$

$x_0$

$\Delta_x$

$V_R$

$V_x$

$\Delta V_x$

LUMI. LEVEL

(x)

H-SCAN DIRECTION

$x_0$

*Fig.41C*

$\Delta V_y$   $V_y$   $V_R$   LUMI. LEVEL

250

212

$y_0$

$x_0$   $y_0$

$\Delta_y$

V-SCAN DIRECTION

(y)

Fig.42

*Fig.43*

*Fig.44*

TEST PATTERN SEARCH ORDER

SHIFT M

M

DETECTED
POSITION X0

DISPLAY
POSITION
X=X0+2M

## Fig.45A

## Fig.45B

## Fig.45C

## Fig.45D

## Fig.45E

# Fig.46A

TEST PATTERN SEARCH START

START SEARCH USING THE CROSS-ALIGNED PHOTODETECTORS

270 | SEARCH TOP AND BOTTOM ROW PATTERNS 51 BY PHOTODETECTORS 9 AND 14 ; AND CALCULATE MOVEMENTS Y1 , Y2 OF TOP AND BOTTOM ROW PATTERNS 51

271 | MOVE TOP ROW PATTERN 51 UPWARD BY Y1

272 | SEARCH CENTER COLUMN PATTERN 50 BY PHOTODETECTOR 9 ; AND CALCULATE MOVEMENT X1 OF CENTER COLUMN PATTERN 50

273 | MOVE BOTTOM ROW PATTERN 51 DOWNWARD BY Y2

274 | SEARCH CENTER COLUMN PATTERN 50 BY PHOTODETECTOR 14 ; AND CALCULATE MOVEMENT X2 OF CENTER COLUMN PATTERN 50

275 | SEARCH LEFT AND RIGHT COLUMN PATTERNS 50 BY PHOTODETECTORS 11 AND 12 ; AND CALCULATE MOVEMENTS X3 , X4 OF LEFT AND RIGHT COLUMN PATTERNS 50

276 | MOVE LEFT COLUMN PATTERN 50 LEFTWARD BY X3

277 | SEARCH CENTER ROW PATTERN 51 BY PHOTODETECTOR 11 ; AND CALCULATE MOVEMENT Y3 OF CENTER ROW PATTERN 51

278 | MOVE RIGHT COLUMN PATTERN 50 RIGHTWARD BY X4

279 | SEARCH CENTER ROW PATTERN 51 BY PHOTODETECTOR 12 ; AND CALCULATE MOVEMENT Y4 OF CENTER ROW PATTERN 51

END SEARCH USING THE CROSS-ALIGNED PHOTODETECTORS

*Fig.46B*

START SEARCH USING THE CORNER
PHOTODETECTORS

280 MOVE LEFT COLUMN PATTERN 50 LEFTWARD BY X3 ;
AND MOVE TOP ROW PATTERN 51 UPWARD BY Y1

281 SEARCH END OF LEFT COLUMN PATTERN 50 BY
PHOTODETECTOR 8 ; AND CALCULATE MOVEMENT Y5
OF LEFT COLUMN PATTERN 50

282 MOVE LEFT COLUMN PATTERN 50 LEFTWARD BY X3 ;
AND MOVE BOTTOM ROW PATTERN 51 DOWNWARD
BY Y2

283 SEARCH END OF LEFT COLUMN PATTERN 50 BY
PHOTODETECTOR 13 ; AND CALCULATE MOVEMENT
Y6 OF LEFT COLUMN PATTERN 50

284 MOVE RIGHT COLUMN PATTERN 50 RIGHTWARD BY
X4 ; AND MOVE TOP ROW PATTERN 51 UPWARD BY
Y1

285 SEARCH END OF RIGHT COLUMN PATTERN 50 BY
PHOTODETECTOR 10 ; AND CALCULATE MOVEMENT
Y7 OF RIGHT COLUMN PATTERN 50

286 MOVE RIGHT COLUMN PATTERN 50 RIGHTWARD BY
X4 ; AND MOVE BOTTOM ROW PATTERN 51
DOWNWARD BY Y2

287 SEARCH END OF RIGHT COLUMN PATTERN 50 BY
PHOTODETECTOR 15 ; AND CALCULATE MOVEMENT
Y8 OF RIGHT COLUMN PATTERN 50

END SEARCH USING THE CORNER
PHOTODETECTORS

SEARCH END

Fig.47

| | | |
|---|---|---|
| *Fig.48A* | STATIC | |
| *Fig.48B* | SKEW | |
| *Fig.48C* | LINEARITY | |
| *Fig.48D* | SIZE | |
| *Fig.48E* | KEYSTONE | |
| *Fig.48F* | PIN CUSHION | |
| *Fig.48G* | BOW | |

## Fig.49

## Fig.50

◯STANDARD POSITION
●TEST PATTERN POSITION

| DISTORTION | H-CORRECTION WAVE | V-CORRECTION WAVE |
|---|---|---|
| PIN CUSHION | H-SAWTOOTH × V-PARABOLA | H-PARABOLA × V-SAWTOOTH |
| LINEARITY | H-PARABOLA | V-PARABOLA |
| SIZE | H-SAWTOOTH | V-SAWTOOTH |

# Fig.51

○STANDARD POSITION
●TEST PATTERN POSITION

| DISTORTION | H-CORRECTION WAVE | V-CORRECTION WAVE |
|---|---|---|
| STATIC<br> | <br><br>DC | <br><br>DC |
| KEYSTONE<br> | <br><br>H-SAWTOOTH × V-SAWTOOTH | <br><br>H-SAWTOOTH × V-SAWTOOTH |
| SKEW<br> | <br><br>V-SAWTOOTH | <br><br>H-SAWTOOTH |
| BOW<br> | <br><br>V-PARABOLA | <br><br>H-PARABOLA |

## Fig.52

ENLARGING PROJECTION UNIT

VIDEO SIGNAL → 2 → VIDEO CKT. 3 → R, G, B → 22CY, 23DY

24

4  5  6  26

DISPLAY CONT. UNIT  311

CORRECTION SIGNAL GEN  19

CORRECTION SIGNAL GEN CONT.  310

TEST PATTERN GEN  1

CONVERGENCE CKT.  20

DEFLECTION CKT.  21

ERROR CALCULATOR  18

POSITION CALCULATOR  17

PHOTODETECTION SIGNAL PROCESSOR  16

IMAGE DISPLAY POSITION DETECTION UNIT

8  9  3  10

3  6

11  y  x  12

6  7  9

13  14  15

9  3  12

24  3  3

EP 0 703 714 A2

## Fig.53

## Fig.54A

## Fig.54B

*Fig.55A*

*Fig.55B*

*Fig.55C*

*Fig.55D*

## Fig.56

EP 0 703 714 A2

## Fig.57

350

319 INPUT CONT.

318 RAM

315 CORRECTION SIGNAL GEN

318 RAM

315 CORRECTION SIGNAL GEN

360

BLK

EP 0 703 714 A2

EFFECTIVE
DISPLAY AREA    PERIPHERY

SCAN AREA

Fig.58A

Fig.58B

Fig.58C

Fig.58D

Fig.58E

## Fig.59A  PRIOR  ART

## Fig.59B  PRIOR  ART

*Fig.60*

EP 0 703 714 A2